# EUROPÄISCHE PATENTSCHRIFT

(11) **EP 3 876 127 B1**
(45) Veröffentlichungstag und Bekanntmachung des Hinweises auf die Patenterteilung: **01.04.2026**
(21) Anmeldenummer: 21160824.5
(22) Anmeldetag: 04.03.2021
(51) Int. Cl.: G06F 21/62, G06F 21/33, H04L 67/025, H04L 67/00

(54) **GERÄTEFERNWARTUNG AUF BASIS VERTEILTER DATENSPEICHERUNG**
REMOTE DEVICE MAINTENANCE BASED ON DISTRIBUTED DATA STORAGE
MAINTENANCE DISTANTE D'APPAREIL BASÉE SUR LA MÉMORISATION DISTRIBUÉE DE DONNÉES

(30) Priorität: 05.03.2020 DE 102020105934
(43) Veröffentlichungstag der Anmeldung: 08.09.2021
(73) Patentinhaber: Bundesdruckerei GmbH, 10969 Berlin (DE); neXenio GmbH, 10117 Berlin (DE)
(72) Erfinder: SCHNJAKIN, Maxim, 10245 Berlin (DE); BERGER, Philipp, 10627 Berlin (DE); HENNIG, Patrick, 10437 Berlin (DE); MEUSEL, René, 12307 Berlin (DE); MORITZ, Daniel, 14478 Potsdam (DE); FLADISCHER, Harald, 13159 Berlin (DE)
(74) Vertreter: Richardt Patentanwälte PartG mbB

(56) Entgegenhaltungen:
- EP-A1- 3 447 667
- EP-A2- 1 855 162
- DE-A1- 102014 113 430

## Beschreibung

### Technisches Gebiet

Die Erfindung betrifft ein Verfahren zur Fernwartung eines Gerätes, z.B. einer Maschine.

### Hintergrund

Maschinen- und Anlagenbauer stehen vor der Herausforderung, ihren Kunden bei Störungen eine schnelle Reaktionszeit und rasche Reparatur zu garantieren. Auch nach der Einrichtung einer komplexen Maschine beim Kunden kann es in der Anfangszeit immer wieder erforderlich sein, eine Maschine nachzukonfigurieren und deren Zustand regelmäßig zu prüfen um die Maschine an die Bedürfnisse und Prozesse beim jeweiligen Kunden anzupassen. Gerade bei komplexen Ma-schinen erfordert die Diagnose und das Beheben von Fehlern sowie die kunden-individuelle Einrichtung umfangreiches Expertenwissen. Personal mit entspre-chendem Wissen ist knapp und teuer, sodass ein Bedarf an Fernwartungslösun-gen existiert um die Wartungskosten zu senken und die Effizienz zu steigern.

Die derzeit am Markt verfügbaren Fernwartungslösungen für Maschinen und an-dere Geräte sind mit verschiedenen Nachteilen behaftet.

Die Patentanmeldung DE 10 2014 113430 A1 beschreibt ein Verfahren zur Speicherung von Daten, die auf einem Nutzer-Computersystem bereitgestellt werden, insbesondere Nutzerdaten. Das Verfahren umfasst eine automatische Generierung eines Verteilungsplans, eine Durchführung eines in dem Verteilungsplan spezifizierten Fehlerkorrekturverfahrens zur Generierung von Dateifragmenten aus der Datei durch ein Nutzer-Computersystem, ein Senden einer Berechtigungsanfrage zum Speichern der Dateifragmente in den im Verteilungsplan identifizierten Speicherdiensten von dem Nutzer-Computersystem an einen Dateimanagementserver über ein Netzwerk, eine Anforderung von Berechtigungstoken durch den Dateimanagementserver von den Speicherdiensten, eine Weiterleitung der Berechtigungstoken durch den Dateimanagementserver an das Nutzer-Computersystem, eine Speicherung der generierten Dateifragmente in den Speichermedien der identifizierten Speicherdienste mittels Berechtigungsnachweis durch die Berechtigungstoken unter Umgehung des Dateimanagementservers durch das Nutzer-Computersystem;
Die Patentanmeldung EP 3 447 667 A1 beschreibt ein Verfahren zur Speicherung von Daten, insbesondere Nutzerdaten, ähnlich dem Verfahren gemäß DE 10 2014 113430 A 1, wobei die Daten kryptographisch auf besondere Weise gesichert werden.

Die EP 1 855 162 A2 betrifft eine Fernwartung eines Geräts über ein Netzwerk, wobei ein Status des Geräts abgefragt wird, um eine Berechtigung für den Zugriff zu überprüfen, bevor ein unmittelbarer Fern-Zugriff auf das Gerät erfolgt.

### Zusammenfassung

Der Erfindung liegt demgegenüber die Aufgabe zugrunde, ein verbessertes Verfahren zur Fernwartung von Geräten zu schaffen, sowie ein entsprechendes Gerät und einen entsprechenden Dateimanagementserver.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben. Die im Folgenden aufgeführten Ausführungsformen sind frei miteinander kombinierbar, sofern sie sich nicht gegenseitig ausschließen.

In einem Aspekt betrifft die Erfindung ein Verfahren zur Fernwartung eines Gerätes. Das Verfahren kann auch für die Fernwartung mehrerer Geräte des gleichen oder unterschiedlichen Typs verwendet werden. Das Verfahren umfasst im Hinblick auf die Fernwartung eines Geräts:
- Bereitstellung eines Dateimanagementservers;
- Bereitstellung mindestens des Gerätes, wobei das Gerät beinhaltet: ein Geräteprogramm zur Steuerung zumindest einer Hardwarefunktion des Gerätes, und ein Uploadprogramm; Bei dem Geräteprogramm kann es sich z.B. um eine Software oder eine Firmware handeln;
- Erzeugung, durch das Geräteprogramm, eine Statusdatei, die Informationen bezüglich des Status des Gerätes beinhaltet; die Erzeugung kann z.B. automatisch in regelmäßigen Abständen erfolgen; Beispielsweise kann die Statusdatei ein Geräteprotokoll ("Log") sein, das von dem Geräteprogramm automatisch erzeugt und aktualisiert wird; Zusätzlich oder alternativ dazu kann die Erzeugung der Statusdatei aber auch in Reaktion auf eine Nutzerinteraktion mit dem Gerät erfolgen, z.B. in Reaktion darauf, dass ein Nutzer vor Ort das Gerät bedient; der in der Statusdatei spezifizierte Gerätestatus kann einen aktuellen, in der Vergangenheit gelegenen und/oder von dem Geräteprogramm vorhergesagten (simulierten) Gerätestatus umfassen. Beispielsweise kann der vorhergesagte Status anzeigen, wann das Gerät gewartet werden muss, wann neuer Treibstoff oder Verbrauchsgegenstände zugegeben werden müssen oder wann ein Bauteil voraussichtlich ersetzt werden muss; Der Status kann z.B. Temperaturangaben, Druckangaben, Angaben zur mechanischen Vibration des Gerätes, kritische Systemzustände, Energieversorgungsangaben, oder Bedienbefehle eines lokalen Nutzers oder sonstige gerätebezogene Parameterwerte beinhalten;
- Durchführung eines Fehlerkorrekturverfahrens zur Generierung von Dateifragmenten aus der Statusdatei durch das Uploadprogramm, wobei zumindest eines der Dateifragmente Fehlerkorrekturbits beinhaltet;
- Senden, durch das Uploadprogramm, einer Berechtigungsanfrage zum Speichern der Dateifragmente in mehreren Speicherdiensten an den Dateimanagementserver über ein Netzwerk;
- In Antwort auf den Empfang der Berechtigungsanfrage, Anforderung eines Berechtigungstokens durch den Dateimanagementserver von jedem der mehreren Speicherdienste und Weiterleitung der in Antwort auf die Anforderung von den Speicherdiensten erhaltenen Berechtigungstoken durch den Dateimanagementserver an das Uploadprogramm; und
- Speicherung der generierten Dateifragmente in den Speichermedien der mehreren Speicherdienste über das Netzwerk mittels Berechtigungsnachweis durch die Berechtigungstoken unter Umgehung des Dateimanagementservers durch das Uploadprogramm;
- Speicherung von Metadaten, die die Rekonstruktion der Statusdatei aus den gespeicherten Dateifragmenten erlauben, durch das Uploadprogramm und/oder durch das Dateimanagementserver so, dass die Metadaten gegen einen Zugriff der Speicherdienste gesichert sind;
- Verwendung der Metadaten durch den Dateimanagementserver zur Kontrolle des Zugriffs eines Fernwartungs-Nutzers auf die Daten der Statusdatei. Der Zugriff auf die Daten kann z.B. durch Zugriff auf eine anhand der Metadaten rekonstruierte Kopie der Wartungsdatei erfolgen.

Dieses Verfahren kann vorteilhaft sein, da ein in mehrfacher Hinsicht besonders sicheres Fernwartungsverfahren bereitgestellt wird.

Zum einen sind die existierenden Fernwartungslösungen oft proprietär und herstellerspezifisch. Eine Überwachung und/oder Wartung mehrerer Maschinen von verschiedenen Herstellern ist mit derzeitigen Lösungen nicht oder nur nach erheblicher Anpassung der Software oder Firmware der jeweiligen Maschinen möglich.

Ausführungsformen der Erfindung können vorteilhaft sein, da sie keine Sicherheitslücken für den Betrieb der Maschine einführen um den Datenaustausch zwischen Maschine und dem Computer des Fernwartungsnutzers einführen und auch dann sicher sind, wenn der Datenaustausch über ein an sich unsicheres Netzwerk wie das Internet erfolgt. Gerade bei Maschinen, die Gefahrgüter verarbeiten oder deren Funktionieren für die medizinische oder energetische Versorgung der Bevölkerung essentiell ist, muss ein Angriff durch Hacker über den für die Fernwartung eröffneten Kommunikationskanal sicher unterbunden werden. Dies wird dadurch ermöglicht, dass der Fernwartungsnutzer niemals direkten Zugriff auf den Datenspeicher des Geräts bekommt.

In einem weiteren vorteilhaften Aspekt sind die Wartungsdaten sehr sicher vor unberechtigtem Zugriff. Wartungsdaten bzw. Statusprotokolle von Maschinen können kritische Maschinenparameter beinhalten, die unberechtigten Dritten nicht zugänglich sein dürfen. Beispielsweise kann ein unberechtigter Dritter ein Mitbewerber sein, der eine Maschine nachbauen möchte, oder ein Angreifer, der eine Maschine manipulieren möchte. Wartungsdaten, zum Beispiel automatisch erzeugte Fehlerprotokolle oder Statusprotokolle können einen Nachbau bzw. eine Manipulation des Geräts bzw. der Maschine erleichtern. Durch die verteilte Speicherung der Statusdatei mittels Fehlerkorrekturverfahren wird verhindert, dass Admins der entfernten Speicherdienste Zugriff auf diese sensiblen Daten haben.

Da die Statusdatei in Form von mehreren Dateifragmenten, die mittels eines Fehlerkorrekturverfahrens erzeugt wurden, gespeichert und dem Fernwartungsnutzer zugänglich gemacht wird, kann keiner der Speicherdienste die Daten rekonstruieren, selbst wenn der Speicherdienst eine etwaige Verschlüsselung der Dateifragmente "knacken" sollte, denn die Dateifragmente werden so in den Speichermedien der Speicherdienste gespeichert, dass kein Speicherdienst sämtliche Dateifragmente erhält.

Die Sicherheit durch unberechtigten Zugriff durch den Betreiber des Speicherdienst wird in synergistischer Weise dadurch erhöht, dass eine strikte Trennung des Zugriffsmanagements durch den Dateimanagementserver in Form der Anforderung der Berechtigungstoken und deren Weiterleitung einerseits und dem Datenmanagement durch die einzelnen Speicherdienste andererseits erfolgt: die Dateifragmente werden unter Umgehung des Dateimanagementservers von dem Nutzersystem direkt in den Speicherdiensten gespeichert. Der Dateimanagementserver agiert also nicht als Router, sondern vermittelt lediglich die Berechtigungstoken, welche dem Nutzer-Computersystem die Speicherung der Dateifragmente über die Speicherdienste erlaubt. Der Dateimanagementserver hat also keinen Zugriff auf den Inhalt der übertragenen Dateifragmente. Die Speicherdienste wiederum verfügen nicht über die Metadaten, die zur Rekonstruktion der Datei benötigt werden. Diese Metadaten sind lediglich dem Gerät und/oder dem Dateimanagementserver zugänglich. Der Dateimanagementserver verwendet die Metadaten zur Kontrolle des Zugriffs, sodass einem Fernwartungsnutzer die Metadaten zum Zugriff auf die Daten der Status Datei nur dann zur Verfügung gestellt werden, wenn der Fernwartungsnutzer sich zuvor erfolgreich gegenüber dem Dateimanagementserver authentifiziert hat.

Das Verfahren ist auch deshalb besonders sicher, da dem Fernwartungsnutzer kein Zugriff auf das Gerät bzw. einen Geräte-Datenspeicher gewährt werden muss, um diesem Einblick in die Wartungsdaten zu ermöglichen. Es ist also nicht erforderlich, Sicherheitsmechanismen des Gerätes oder der IT-Infrastruktur, innerhalb welcher das Gerät verwendet wird, dadurch in ihrer Wirkung zu schwächen, dass ein direkter Kanal zum Datenaustausch zwischen einem Nutzer-Computersystem des Fernwartungsnutzer und dem Gerät aufgebaut wird. Oftmals handelt es sich bei dem Fernwartungsnutzer um wechselndes technisches Personal, welches unterschiedliche Nutzer-Computersysteme verwendet. Es ist daher oftmals weder technisch noch organisatorisch möglich, einen derartigen direkten Kanal spezifisch auf einen einzigen Fernwartungsnutzer bzw. dessen Nutzer-Computersystem zu beschränken. Wenn aber eine potenziell größeren Zahl an Fernwartungsnutzern, die zum Zugriff ein nicht weiter bekanntes Nutzer-Computersystem verwenden, gewährt wird, kann dies zu einer unerwünschten, unspezifischen und daher unsicheren Öffnung des direkten Zugriffs auf das Gerät für eine große, unbekannte Anzahl an Fernwartungsnutzern bzw. Nutzer-Computersysteme führen. Ausführungsformen der Erfindung dagegen sehen einen direkten Zugriff des Fernwartungsnutzer auf den Geräte-Datenspeicher bzw. das Gerät von vornherein nicht vor. Vielmehr wird die Statusdatei in einer Vielzahl von Speicherdiensten verteilt gespeichert und der Fernwartungsnutzer hat, falls ihm vom Dateimanagement zur wird die entsprechenden Metadaten zur Verfügung gestellt werden, auch nur Zugriff auf die verteilt gespeicherten Dateifragmente, nicht aber auf den Geräte-Datenspeicher und die dort gespeicherten Inhalte.

Das Verfahren kann außerdem daher vorteilhaft sein, da die Zurverfügungstellung der Wartungsdatei an den Fernwartungsnutzer besonders schnell erfolgt: es wird nicht einfach die gesamte Wartungsdatei am Stück zu einem bestimmten Server hochgeladen, sondern es werden stattdessen eine Vielzahl von Dateifragmenten in mehreren Speicherdiensten gespeichert. Das bedeutet, dass der Datei-Upload parallel über das Netzwerk erfolgen kann und gemäß bevorzugten Ausführungsformen der Erfindung auch parallel erfolgt. Bei paralleler Übertragung der Dateifragmente kann der gesamte Informationsgehalt der Datei einschließlich der Fehlerkorrekturbits innerhalb eines Bruchteils der Zeit erfolgen, die zur Übertragung einer ganzen Dateikopie an einen Zielrechner notwendig wäre. Wartungsdateien komplexe Maschinen können durchaus groß werden, insbesondere dann, wenn es sich um eine Log-Datei handelt, in welcher Zustandsänderungen des Gerätes vollständig oder nahezu vollständig erfasst werden. Ein schneller Datei-Upload ist daher gerade im Kontext von Wartungsdateien vorteilhaft.

Zudem gewährleisten Ausführungsformen der Erfindung eine besonders hohe Verfügbarkeit und Ausfallsicherheit der Statusdatei: sollte einer der Speicherdienste ausfallen oder über das Netzwerk nicht mehr erreichbar sein, ist die Statusdatei dank der Fehlerkorrekturbits nicht verloren bzw. temporär für den Fernwartungsnutzer unzugänglich, sondern kann sofort und automatisch aus den übrigen Dateifragmenten mit den Fehlerkorrekturbits und den Metadaten rekonstruiert werden. Dies kann insbesondere für Statusdateien relevant sein, die einen Gerätestatus angeben und zur Fernwartung verwendet werden, da diese Daten hochverfügbar sein müssen. Beispielsweise erfordern einige Fernwartungsprozesse, zum Beispiel die Reparatur oder ein Testbetrieb einer Maschine sowohl die Anwesenheit eines Fernwartungsexperten als auch die Anwesenheit von einem Techniker vor Ort. Für den Fall, dass zudem vereinbarten Wartungstermin einer der Speicherdienste ausfällt oder über das Netzwerk nicht erreichbar ist, kann aufgrund der Redundanzen Speicherung mit den Fehlerkorrekturbits dennoch sichergestellt werden, dass der Wartungstermin nicht abgesagt werden muss. Somit kann sichergestellt werden, dass Termine für die Wartung oder Reparatur von Geräten, bei welchen zwei oder mehr technische Experten anwesend sein müssen, nicht an fehlender Verfügbarkeit von Statusinformationen scheitern.

Außerdem kann das Verfahren vorteilhaft sein, da bestehende Geräte ohne Manipulation ihrer Firmware leicht in das hier beschriebene Fernwartungsverfahren integriert werden können einfach dadurch, dass zusätzlich das Uploadprogramm und optional zudem das gemäß mancher Ausführungsformen zusätzlich vorhandene Downloadprogramm auf dem Gerät installiert werden. Das Uploadprogramm sorgt dafür, dass neu erstellte Statusdateien auf einfache und sichere weiseberechtigten Fernwartungsnutzern zur Verfügung gestellt wird. Das Downloadprogramm sorgt dafür, dass der Fernwartungsnutzer auf einfache Weise Wartungsdateien und entsprechende Steuerbefehle an das Gerät übertragen kann unabhängig davon, wie dessen Hardware, Firmware oder Betriebssystem implementiert ist und ohne direkten Zugriff auf das Gerät zu haben.

Beispielsweise können komplexe medizinische Apparate wie zum Beispiel MRT Geräte über das genannte Verfahren gewartet oder sogar bedient werden. Beispielsweise kann die Statusdatei neben den Angaben zum Gerätestatus auch Nutzdaten beinhalten. Falls es sich bei dem Gerät um ein medizinisches Gerät handelt, kann es sich bei den Nutzdaten zum Beispiel um Bilddaten von Patienten, zum Beispiel Röntgenbilder, MRT Bilder, Computertomografiebilder und Ähnliches handeln, die als Bestandteil der Statusdatei oder als eine eigene Statusdatei dem FernwartungsNutzer zur Verfügung gestellt werden. Bei dem Fernwartungs-Nutzer kann es sich beispielsweise um einen Techniker handeln, der das MRT Gerät wartet, und/oder um einen Arzt bzw. Radiologen handeln, der die Bilddaten des Patienten auswertet und beispielsweise dazu verwendet, das medizinische Gerät so zu konfigurieren, dass das nächste vom Patienten aufgenommene Bild unter anderen Bedingungen oder mit einer anderen Gerätekonfiguration oder unter einem anderen Winkel aufgenommen wird. In manchen Ausführungsformen werden unterschiedliche Wartungsdateien unterschiedlichen Gruppen von Fernwartungsnutzern (zum Beispiel technisches Personal einerseits und medizinisches Personal andererseits) zur Verfügung gestellt.

Nach Ausführungsformen sind das Fehlerkorrekturverfahren sowie Instruktionen zur Generierung der Dateifragmente und Identifikatoren der mehreren Speicherdiensten, in deren nichtflüchtigen Speichermedien die generierten Dateifragmente gespeichert werden sollen, in einem Verteilungsplan enthalten. Der Verteilungsplan ist in dem Uploadprogramm oder dem Dateimanagementprogramm gespeichert oder so gespeichert, dass das Uploadprogramm oder das Dateimanagementprogramm darauf zugreifen kann.

Nach Ausführungsformen kann der Verteilungsplan und die in diesem spezifizierte Strategie zur Erzeugung der Dateifragmente von einem Nutzer modifiziert werden, zum Beispiel von einem Operator des Dateimanagementservers und/oder des Geräts. Dies kann vorteilhaft sein, da der Verteilungsplan und die Granularität und Redundanz der gemäß Verteilungsplan erzeugten Dateifragmente flexibel an das jeweilige Anwendungsszenario angepasst werden kann.

Nach Ausführungsformen umfasst das Verfahren ferner eine Generierung des Verteilungsplans durch das Uploadprogramm oder durch den Dateimanagementserver. Falls der Dateimanagementserver den Verteilungsplan erstellt wird dieser an das Gerät oder an eine Vielzahl von bei dem Dateimanagementserver registrierten Geräten übertragen.

Nach Ausführungsformen der Erfindung ist auf dem Gerät oder einer IT-Infrastruktur, innerhalb welcher das Gerät betrieben wird, eine Firewall installiert. Die Firewall beschränkt den Netzwerkzugriff des Geräts auf den Datenaustausch mit Kommunikationspartnern, die auf einer Whitelist der Firewall spezifiziert sind. Diese Kommunikationspartner umfassen zumindest den Dateimanagementserver und die Speicherdienste, beinhalten jedoch nicht eine Kennung des Nutzer-Computersystems des Fernwartungsnutzers.

Dies kann die Sicherheit der Datenkommunikation und insbesondere die Sicherheit des Geräts und der das Gerät beinhaltenden IT-Infrastruktur ganz erheblich erhöhen. Grob zusammengefasst kann eine Firewall auf zwei unterschiedliche Weisen betrieben werden: bei dem hier als "Whitelist" Ansatz beschriebenen Verfahren wird schlichtweg sämtlicher Datenaustausch zu Kommunikationspartnern unterbunden, welcher nicht auf einer Liste vertrauenswürdiger Kommunikationspartner (Whitelist) explizit aufgeführt ist. Dieser Betriebsmodus ist ausgesprochen sicher, hat aber den Nachteil denn die Whitelist müsste angepasst werden, um den Datenaustausch zwischen Gerät und Fernwartungsnutzer zu ermöglichen. Bei häufig wechselnden Fernwartungs-Nutzern ist dies keine Option. Ein anderer möglicher Betriebsmodus einer Firewall basiert auf der Idee, dass die Firewall alle Zugriffe des lokalen Netzes auf das Internet sperren soll, die beispielsweise nicht für den Aufruf von Webseiten benötigt werden. Das wird dadurch erreicht, dass eine Filterregel sämtliche Anfragen auf das Internet blockiert. Eine weitere Regel erlaubt nun explizit DNS-Anfragen an den DNS-Server seiner Wahl und Zugriffe auf den Port 80 (HTTP) beliebiger Internetserver, damit der dort laufende Netzwerkdienst für den Zugriff auf Webseiten erreicht werden kann. Die Annahme ist, dass eine auf dem zu schützenden PC installierte Schadsoftware, die selbstständig eine Verbindung zu einem Netzwerkdienst aus dem Internet herstellt, nun blockiert wird, da die Netzwerkanfrage auf deren Port nicht mehr durchgelassen wird. Diese "Schutzwirkung" ist jedoch stark begrenzt, denn es ist nicht mit Sicherheit auszuschließen, dass die zu blockierende Schadsoftware nicht auch den freigegebenen Port für ihre Kommunikation verwendet. Je populärer der Port ist, desto wahrscheinlicher wird ein solches Szenario. Da auf fast jeder externen Firewall der Port 80 für die Kommunikation mit dem Internet freigeschaltet ist, nutzen zahlreiche Schadprogramme nun ebenfalls den Port 80 für ihre eigene Kommunikation mit dem Internet, da sie davon ausgehen können, dass der Port nicht blockiert wird. Außerdem lassen sich fast beliebige Inhalte durch Tunnelung auch über den HTTP Port übertragen. Ausführungsformen der Erfindung ermöglichen also den Betrieb einer Firewall im sicheren Whitelist-Modus ohne die Flexibilität einzuschränken: da niemals ein direkter Datenaustausch zwischen Gerät und Fernwartungsnutzer stattfindet, muss auch keine Whitelist aktualisiert werden.

Nach Ausführungsformen der Erfindung umfasst das Gerät einen nicht-volatilen Datenspeicher, der im Folgenden als "Geräte-Datenspeicher" bezeichnet wird. Das Geräteprogramm ist konfiguriert zur Speicherung jeder durch das Geräteprogramm erzeugten Statusdatei in dem Geräte-Datenspeicher. Das Uploadprogramm ist dazu konfiguriert, in Antwort auf eine Speicherung einer neuen Statusdatei in dem Gerätespeicher, die folgenden Schritte gemäß einem der vorigen Ansprüche für diese Statusdatei durchzuführen:
- die Durchführung des Fehlerkorrekturverfahrens zur Generierung von Dateifragmenten aus der Statusdatei;
- das Senden der Berechtigungsanfrage;
- In Antwort auf den Empfang der Berechtigungstoken, die Speicherung der generierten Dateifragmente in den Speichermedien;
- optional zudem die Speicherung von Metadaten, die die Rekonstruktion der Statusdatei erlauben, so, dass die Metadaten gegen einen Zugriff der Speicherdienste gesichert sind und von dem Dateimanagementserver zur Kontrolle des Zugriffs eines Fernwartungs-Nutzers auf die Daten der Statusdatei verwendet werden können.

Dies kann vorteilhaft sein, da hierdurch sichergestellt ist, dass jegliche Statusänderung bzw. das Speichern einer neuen Statusdatei im Geräte-Datenspeicher automatisch von dem Uploadprogramm "hochgeladen" und verteilt in den Speichermedien der Speicherdienste gespeichert wird. Der Fernwartungsnutzer kann sich also beim Zugriff auf den Inhalt der Statusdatei über den Dateimanagementserver sicher sein, dass der ihm übermittelte Gerätestatus Aktuelles.

Nach Ausführungsformen der Erfindung umfasst das Verfahren ferner eine Generierung der Metadaten durch das Uploadprogramm oder durch den Dateimanagementserver. Falls die Metadaten durch das Uploadprogramm erzeugt werden, werden die Metadaten an den Dateimanagementserver übertragen, der diese verwendet, um die Metadaten gezielt nur denjenigen Fernwartungs-Nutzern zur Verfügung zu stellen, die nachweisen können, dass sie zum Zugriff auf diese Datei auch berechtigt sind. Optional können die Metadaten in dem Geräte-Datenspeicher des Gerätes gespeichert werden.

Nach Ausführungsformen der Erfindung beinhalten die Metadaten ein oder mehrere der folgenden Elemente:
- Pfade zu allen Speicherorten in den Speichermedien der Speicherdienste, in welchen die Dateifragmente der Statusdatei gespeichert werden sollen oder bereits gespeichert wurden; und/oder
- einen symmetrischen Schlüssel, der eine Entschlüsselung des mit diesem symmetrischen Schlüssel verschlüsselten Dateifragments erlaubt; und/oder
- für jedes der Dateifragmente einen Hash-Wert des Dateifragments; und/oder
- den ursprünglichen Dateinamen der verteilt gespeicherten Statusdatei; und/oder
- Konfigurationsdaten des Fehlerkorrekturverfahrens; und/oder
- ein Mapping des ursprünglichen Dateinamens zu den Hashwerten und Pfaden der generierten Dateifragmente.

All diese Metadaten können es ermöglichen oder erleichtern, einem Computer oder einer Person, die diese Metadaten besitzt, die ursprüngliche Statusdatei aus den daraus erzeugten Dateifragmenten zu rekonstruieren.

Nach einer Ausführungsform sind in dem Dateimanagementserver Metadaten einer Vielzahl von verteilt in den Speicherdiensten gespeicherten Statusdateien von einer oder von mehreren Geräten gespeichert.

Die Metadaten können zum Beispiel von mehreren Statusdateien des gleichen Geräts oder von mehreren Statusdateien verschiedener Geräte stammen und eine Rekonstruktion der jeweiligen Statusdatei bzw. eine Kopie hiervon ermöglichen. Der Dateimanagementserver ist dazu konfiguriert, ein oder mehreren FernwartungsNutzern Zugriff zu ein oder mehreren der Statusdateien der ein oder mehreren Geräte zu gewähren in Abhängigkeit dafür, ob der jeweilige Fernwartungsnutzer zum Zugriff auf die jeweilige Statusdatei des jeweiligen Gerätes berechtigt ist. Dies kann vorteilhaft sein, da hierdurch ein höchst feingranulare Rechtemanagement für eine Vielzahl von unterschiedlichen Statusdateien, Geräten und/oder FernwartungsNutzern bereitgestellt wird. Beispielsweise kann ein bestimmter Fernwartungsnutzer berechtigt sein, Statusdateien eines ersten Typs einer Vielzahl von Geräten einzusehen, aber nicht eines zweiten Typs. Statusdateien des zweiten Typs dürfen nur von einem anderen Fernwartungsnutzer eingesehen werden. Somit wird jeweils immer nur gerade so viel an Statusinformationen dem jeweiligen Fernwartungsnutzer zur Verfügung gestellt, wie diese auch zu sehen bekommen soll.

Nach Ausführungsformen der Erfindung hostet der Dateimanagementserver ein Webportal. Das Webportal ist dazu konfiguriert, die Metadaten von ein oder mehreren Statusdateien von ein oder mehreren Geräten zur Rekonstruktion der Statusdateien das einen oder der mehreren Geräte zu verwenden. Das Webportal ist außerdem dazu konfiguriert, eine netzwerkbasierte Sicht, zum Beispiel eine Webpage, auf die verteilt gespeicherten Statusdateien zu erzeugen. Diese Sicht wird ein oder mehreren berechtigten (erfolgreich gegenüber dem Dateimanagementserver authentifizieren) Fernwartungsnutzern über das Netzwerk (zum Beispiel Internet) angezeigt bzw. zur Verfügung gestellt.

Die netzwerkbasierte Sicht ist dazu konfiguriert, die ursprünglichen Dateinamen aus den Metadaten dynamisch zu rekonstruieren und durch Auswahl einer der verteilt gespeicherten Statusdateien eine dynamische und automatische Rekonstruktion des Dateiinhalts der ausgewählten Statusdatei durch das mindestens eine Gerät oder durch einen berechtigten Fernwartungs-Nutzer zu initiieren, wobei die Speicherdienste, in welchen Fragmente der ausgewählten Statusdatei gespeichert sind, durch die Sicht verborgen werden.

Die netzwerkbasierte Sicht ist dazu konfiguriert, die ursprünglichen Dateinamen der Vielzahl der verteilt gespeicherten Statusdateien aus den Metadaten dynamisch zu rekonstruieren und durch Auswahl einer der verteilt gespeicherten Statusdateien eine dynamische und automatische Rekonstruktion des Dateiinhalts der ausgewählten Statusdatei durch das Nutzer-Computersystem des Fernwartungs-Nutzers oder durch ein weiteres berechtigten Nutzer-Computersystem zu initiieren. Die Speicherdienste, in welchen Fragmente der ausgewählten Datei gespeichert sind, werden hierbei durch die Sicht verborgen.

Dies kann vorteilhaft sein, da hierdurch eine besonders einfach zu bedienende, nutzerfreundliche grafische Oberfläche an ein oder mehrere Fernwartungsnutzer bereitgestellt wird.

Nach Ausführungsformen enthalten die Anforderungen hinsichtlich der Verfügbarkeit, der geographischen Lage, der Geschwindigkeit, der Sicherheit und/oder Kosten ein oder mehrere der folgenden Daten in nutzerkonfigurierbarer Form (wobei hier insbesondere der Operator des Gerätes, und gegebenenfalls, wenn die Sicherheitsanforderungen dies zulassen, auch der Fernwartungsnutzer der zur Konfiguration berechtigte Nutzer ist):
- eine Spezifikation des Fehlerkorrekturverfahrens, nach welchem die Dateifragmente erzeugt werden sollen um in dem Speichermedium des Speicherdienstes gespeichert zu werden; die Spezifikation kann insbesondere einen Identifikator (ID) eines standardmäßig verwendeten Fehlerkorrekturverfahrens und Standard-Konfigurationsparameter wie etwa eine Wortlänge, eine Anzahl K der zu erzeugenden Dateipartitionen ohne Fehlerkorrekturbits, eine Anzahl M der verlustkompensierbaren Dateipartitionen, eine Cachegröße des für die Generierung der Dateipartitionen oder Dateifragmente zu reservierenden Caches etc.; Diese Standard-Konfigurationsparameter können ggf. in Abhängigkeit von Merkmalen der Datei und/oder Merkmalen der verfügbaren Speicherdienste dynamisch während der Generierung des Verteilungsplans modifiziert werden;
- Angaben zur mindestens erforderlichen Verfügbarkeit des Speicherdienstes; dies kann zum Beispiel eine Angabe beinhalten, bis zu welcher Anzahl von ausgefallenen Speicherdiensten die ursprüngliche Datei aus den in den übrigen Speicherdiensten gespeicherten Dateifragmente noch rekonstruierbar sein soll;
- Angaben zu einer von dem Nutzer geforderten geographischen Lage der IT-Infrastruktur des Speicherdienstes und/oder der geographischen Lage des Sitzes des Anbieters des Speicherdienstes;
- Angaben zur von dem Speicherdienst mindestens zu gewährenden Datensicherheit für die bei dem Speicherdienst gespeicherten Daten; diese Angaben können z.B. eine Angabe der mindestens erforderlichen Bitlänge des zur Verschlüsselung der Dateifragmente verwendeten Schlüssels beinhalten;
- Angaben zur von dem Speicherdienst mindestens zu gewährenden Datensicherheit während eines Speicherns und/oder Lesens von Daten über diesen Speicherdienst; diese Angaben können z.B. eine Angabe der unterstützen Verschlüsselungsprotokolle, die bei der Übertragung der Dateifragmente verwendeten werden können, beinhalten;
- Angaben zu den maximalen Kosten des Transfers der zu speichernden Daten an den Speicherdienst; die Angaben können z.B. in EURO pro GB Upload oder Download spezifiziert sein;
- Angaben zur minimalen Geschwindigkeit des Datenuploads zu dem oder des Datendownloads von dem Speicherdienst; die Angaben können z.B. in übertragene MB pro Sekunde für Upload und/oder Download spezifiziert sein.

Nach Ausführungsformen enthalten die Angaben in jeder der Spezifikationen eines der Speicherdienste hinsichtlich der Verfügbarkeit, der geographischen Lage, der Geschwindigkeit, der Sicherheit und/oder der Kosten der für die Speicherung des Dateifragments genutzten IT-Infrastruktur des Speicherdienstes ein oder mehrere der folgenden Daten:
- Angaben zur garantierten Mindestverfügbarkeit des Speicherdienstes;
- Angaben zur der von dem Speicherdienst mindestens gewährten Datensicherheit der von diesem Speicherdienst gespeicherten Daten;
- Angaben zur von dem Speicherdienst während eines Speicherns und/oder Lesens von Daten über diesen Speicherdienst mindestens gewährten Datensicherheit;
- Angaben zur geographischen Lage der IT-Infrastruktur des Speicherdienstes und/oder der geographischen Lage des Sitzes des Anbieters des Speicherdienstes;
- Angaben zu den Kosten des Transfers der zu speichernden Daten an den Speicherdienst;
- Angaben zur minimal garantierten Geschwindigkeit des Datenuploads zu dem oder des Datendownloads von dem Speicherdienst.

Ein "Wort" des Fehlerkorrekturverfahrens ist eine Bitgruppe, die die kleinste Einheit darstellt, in Bezug auf welche ein Fehler festgestellt und gegebenenfalls korrigiert wird. Häufig werden 8 Bit als Wortlänge verwendet. Aus einer Bit-Wortlänge ergibt sich eine feste Größe an Daten die korrigiert werden können.

Die Ermittlung des Fehlerkorrekturverfahrens, das in dem Verteilungsplan spezifiziert werden soll kann eine Ermittlung von Konfigurationsparametern des Fehlerkorrekturverfahrens beinhalten. Zu den Konfigurationsparametern können z.B. gehören: eine Wortlänge W; eine Anzahl K von Dateipartitionen ohne Berücksichtigung der Fehlerkorrekturbits; und/oder eine Anzahl M der Dateipartitionen K, deren Verlust durch den Informationsgehalt der Fehlerkorrekturbits notfalls kompensiert werden soll. Eine "Dateipartition" ist hier ein zunächst generiertes Dateifragment, das noch keinerlei Fehlerkorrekturbit enthält. Aus diesen zunächst generierten Dateipartitionen können die eigentlichen Dateifragmente mit den Fehlerkorrekturbits berechnet werden, die schließlich an die Speicherdienste übertragen werden.

Beispielsweise könnte die Dateigröße der zu speichernden Datei in die Ermittlung des Fehlerkorrekturverfahrens eingehen. Die zu speichernde Datei könnte eine Dateigröße von "10 Mb" besitzen.

Nach einem ersten Beispiel könnte die Anzahl der Dateipartitionen K "4" betragen. Dies bedeutet, dass das Fehlerkorrekturverfahren die zu speichernde Datei zunächst in 4 Dateipartitionen der Größe 2,5 Mb aufteilt. Die Anzahl M der Dateipartitionen, deren Verlust ggf. kompensiert werden soll, könnte "1" betragen. Die Konfigurationsparameter K=4 und M=1 bewirken, dass das Fehlerkorrekturverfahren insgesamt 5 Dateifragmente generiert, die je 10Mb/4=2,5 Mb groß sind. Insgesamt würde ein Fehlerkorrekturalgorithmus mit der exemplarischen k=4, m=1 Konfiguration 12,5MB Daten aus der ursprünglichen 10 MB großen Ausgangsdatei erzeugen. Vier der Dateifragmente könnten aus den Dateipartitionen bestehen und somit rein aus Dateidaten bestehen während das fünfte Dateifragment völlig aus Fehlerkorrekturbits bestehen könnte. Gemäß einem zweiten Beispiel könnten die Konfigurationsparameter K=4 und M=2 betragen und bewirken, das Fehlerkorrekturverfahren insgesamt 6 Dateifragmente generiert, 2 davon bestehen aus Fehlerkorrekturbits, 4 bestehen aus Dateipartitionen. Aus der Ausgansdatei werden insgesamt 6 x 2,5 Mb= 15 Mb Daten erzeugt.

Neben Fehlerkorrekturverfahren, welche Dateifragmente generieren, die entweder aus Dateipartitionen oder reinen Fehlerkorrekturdaten bestehen, können in anderen Ausführungsformen auch Fehlerkorrekturverfahren verwendet werden, bei welches jede generierte Dateifragment einen ersten Anteil bestehend rein aus Dateidaten und einen zweiten Anteil bestehend aus Fehlerkorrekturbits beinhaltet. In dem oben genannten ersten Beispiel mit K=4 und M=1 für eine 10MB Datei könnten z.B. 5 Dateifragmente a 2,5 Mb generiert werden, die pro Dateifragment 2,5MB/5=0,5Mb Fehlerkorrekturbits beinhalten. In dem oben genannten zweiten Beispiel mit K=4 und M=2 für die 10MB Datei könnten z.B. 6 Dateifragmente a 2,5 Mb generiert werden, die jeweils (2*2,5Mb)/6=0,83 Mb Fehlerkorrekturbits beinhalten.

Die Konfigurationsparameter K und M sind nach manchen Ausführungsformen vom Nutzer, zum Beispiel dem Operator des Dateimanagementservers standardmäßig vorkonfiguriert, können jedoch in Abhängigkeit von Merkmalen der Datei, in Abhängigkeit von den Anforderungen des Fernwartungs-Nutzers und/oder von den Spezifikationen der Eigenschaften der verfügbaren Speicherdienste dynamisch geändert werden um eine optimierte Verteilung (im Hinblick auf Kosten, Verfügbarkeit, etc.) der Dateifragmente zu bewirken. Die dynamischen Konfigurationsparameter werden in den generierten Verteilungsplan integriert um das darin identifizierte Fehlerkorrekturverfahren näher zu charakterisieren. Mit steigender Anzahl M der verlustkompensierbaren Dateipartitionen wird die Verfügbarkeit und Ausfallsicherheit der verteilt gespeicherten Datei erhöht, allerdings erhöht sich bei unverändertem K auch die Größe der einzelnen Dateifragmente.

Nach manchen Ausführungsformen werden die Konfigurationsparameter M und/oder K des in dem Verteilungsplan spezifizierten Fehlerkorrekturverfahren so ermittelt, dass mit steigenden Anforderungen des Nutzers an die Verfügbarkeit der Datei nicht nur M steigt, sondern auch K. Als Konsequenz dessen wird auch die Anzahl der von dem Fehlerkorrekturverfahren zu generierenden Dateifragmente erhöht um die Größe der einzelnen Dateifragmente annähernd konstant zu halten und eine gleichbleibend kurze Übertragungszeit bei parallelem Dateifragment-Upload zu gewährleisten. Ggf. müssen in diesem Fall auch die Anzahl der zur parallelen Speicherung der Dateifragmente verwendeten und in dem Verteilungsplan spezifizierten Speicherdienste erhöht werden. Vorzugsweise werden die Konfigurationsparameter K und/oder M dynamisch ermittelt, der Nutzer gibt lediglich in seinen konfigurierbaren Anforderungen an, ob die verteilte Speicherung in erster Linie kostenoptimiert, geschwindigkeitsoptimiert oder verfügbarkeitsoptimiert erfolgen soll. Dies kann vorteilhaft sein da der Nutzer sich somit nicht mit den algorithmischen Spezifika des Fehlerkorrekturverfahrens auseinandersetzen muss.

Nach Ausführungsformen beinhaltet die Ermittlung des Fehlerkorrekturverfahrens, welches den Anforderungen des Nutzers hinsichtlich der Verfügbarkeit der Statusdatei genügt, eine Ermittlung der zu erwartenden Gesamtgröße aller durch das Fehlerkorrekturverfahren zu generierenden Dateifragmente. Für jedes der zu generierenden Dateifragmente wird hierbei ein Speicherdienst identifiziert welcher gemäß dessen Angaben den Anforderungen hinsichtlich der Geschwindigkeit, geographischen Lage, Sicherheit und/oder Kosten unter Berücksichtigung der zu erwartenden Gesamtgröße genügt. Dies kann vorteilhaft sein, weil ein sehr flexibles Verfahren zur verteilten Speicherung von Statusdateien bereitgestellt wird, welches dynamisch in Abhängigkeit an die Größe jeder einzelnen zu speichernden Statusdatei und den durch den Nutzer und die verfügbaren Speicherdienste vorgegebenen Rahmenbedingungen einen geeigneten Verteilungsplan einschließlich eines dynamisch daran angepassten Fehlerkorrekturverfahrens erstellt.

Zusätzlich oder alternativ dazu beinhaltet die Ermittlung des Fehlerkorrekturverfahrens eine automatische Prüfung, ob das ermittelte Fehlerkorrekturverfahren die Generierung von Dateifragmenten bewirken würde, deren Gesamtgröße es nicht erlaubt, eine hinreichende Anzahl von Speicherdiensten zu identifizieren, die gemäß deren Angaben den Anforderungen hinsichtlich der Geschwindigkeit, Sicherheit und/oder Kosten unter Berücksichtigung der Gesamtgröße genügen. Falls dies der Fall ist, also keine hinreichende Anzahl von Speicherdiensten identifiziert werden kann, erfolgt automatisch eine Ermittlung eines anderen Fehlerkorrekturverfahrens, welches dazu konfiguriert ist, Dateifragmente zu erzeugen, deren zu erwartende Gesamtgröße hinreichend klein ist, sodass für jedes zu generierende Dateifragment ein Speicherdienst identifiziert werden kann welcher gemäß seiner Angaben den Anforderungen hinsichtlich der Geschwindigkeit, geographischen Lage, Sicherheit und/oder Kosten unter Berücksichtigung der zu erwartenden Gesamtgröße genügt. Dies kann vorteilhaft sein, weil eine automatische Anpassung des Fehlerkorrekturverfahrens an die aktuell gemäß Katalog verfügbaren Speicherdienste und die aktuell von dem Nutzer spezifizierten Anforderungen möglich ist, ohne dass der Nutzer hier manuell eingreifen müsste.

Zusätzlich oder alternativ wird das Fehlerkorrekturverfahren automatisch so ermittelt, dass gewährleistet ist, dass Anforderungen des Nutzers im Hinblick auf eine maximale Dauer des Datentransfers zur Übertragung der Datei über das Netzwerk erfüllt werden. Um dies zu erreichen, wird das ermittelte Fehlerkorrekturverfahren automatisch so konfiguriert, dass durch dieses eine hinreichend große Anzahl der generierten Dateifragmente generiert wird, sodass bei paralleler Übertragung dieser Dateifragmente zu den (Upload) oder von den (Download) in dem Verteilungsplan (Upload) oder den Metadaten (Download) spezifizierten Speicherdiensten die Übertragungszeit für alle Dateifragmente unterhalb der maximalen Dauer liegt.

Bei dem Fehlerkorrekturverfahren kann es sich beispielsweise um das Reed-Muller Verfahren, das Reed-Solomon Verfahren, das Cauchy-Reed-Solomon Verfahren oder vergleichbare Fehlerkorrekturverfahren handeln.

Nach Ausführungsformen der Erfindung enthält das Uploadprogramm und/oder der Dateimanagementserver eine Konfiguration mit einem darin spezifizierten Mindestvertrauensniveau. Das Mindestvertrauensniveau spezifiziert das Mindestmaß an Verlässlichkeit eines Authentifizierungsverfahrens, mittels welchem sich ein Fernwartungs-Nutzer gegenüber dem Dateimanagementserver authentifizieren muss, um auf die in den Speichermedien der identifizierten Speicherdienste gespeicherten Statusdatei zugreifen zu dürfen.

Nach Ausführungsformen der Erfindung umfasst das Verfahren ferner:
- Berechnung eines Hashwerts der gesamten Statusdatei durch das Uploadprogramm;
- Verschlüsselung jedes der Dateifragmente der Statusdatei durch das Uploadprogramm, wobei ein aus der gesamten Statusdatei abgeleiteter Wert, insbesondere ein Hashwert der Statusdatei, als symmetrischer Schlüssel zur Verschlüsselung der Dateifragmente durch das Uploadprogramm verwendet wird;
- Generierung der Metadaten, wobei die Metadaten den aus der gesamten Statusdatei abgeleiteten Wert und abgeleitete Werte, insbesondere Hashwerte, der Dateifragmente beinhalten, durch das Uploadprogramm; und
- Verschlüsselung der generierten Metadaten, die den symmetrischen Schlüssel beinhalten, oder zumindest des symmetrischen Schlüssels, durch einen öffentlichen Schlüssel, der dem zumindest einen Gerät zugeordnet ist, wobei ein privater Schlüssel mit dem öffentlichen Schlüssel ein asymmetrisches kryptographisches Schlüsselpaar bildet, wobei der öffentliche Schlüssel in dem Dateimanagementserver mit einer Geräte-ID des Gerätes, dem der öffentliche Schlüssel zugeordnet ist, verknüpft gespeichert ist;
- wobei die Dateifragmente in verschlüsselter Form in den Speichermedien der identifizierten Speicherdienste gespeichert werden.

Dies kann vorteilhaft sein, da hierdurch noch verlässliche gewährleistet wird, dass die Speicherdienste nicht an Statusinformationen des Gerätes gelangen können, denn den Speicherdiensten fehlt der zur Entschlüsselung der verschlüsselt gespeicherten Dateifragmente der nötige private kryptographische Schlüssel.

Nach Ausführungsformen der Erfindung verwaltet der Dateimanagementserver einen öffentlichen Schlüssel eines Fernwartungs-Nutzers. Das Verfahren umfasst ferner:
- Authentifizierung des Fernwartungs-Nutzers gegenüber dem Dateimanagementserver;
- Nach erfolgreicher Authentifizierung, Prüfung, durch den Dateimanagementserver, ob der Fernwartungs-Nutzer zum Lesezugriff auf die Statusdatei berechtigt ist;
- Falls die Analyse ergibt dass der Fernwartungs-Nutzer zum Lesezugriff auf die Statusdatei berechtigt ist und sich erfolgreich authentifiziert hat, Generierung einer weiteren Version der Metadaten, wobei die weitere Version der Metadaten eine Rekonstruktion der Statusdatei aus den Dateifragmenten erlaubt, wobei die weitere Version der Metadaten spezifisch für die Statusdatei und spezifisch für den Fernwartungs-Nutzer generiert wird, wobei die Generierung der weiteren Version der Metadaten der Statusdatei beinhaltet:
   - Senden, durch den Dateimanagementserver, des öffentlichen Schlüssels des Fernwartungs-Nutzers an das Uploadprogramm, welches die Statusdatei fragmentiert und die Fragmente mit seinem symmetrischen Schlüssel verschlüsselt hat;
   - Verschlüsselung des symmetrischen Schlüssel mit dem öffentlichen Schlüssel des Fernwartungs-Nutzers durch das Uploadprogramm;
   - Kombination des verschlüsselten symmetrischen Schlüssels mit weiteren Daten durch das Uploadprogramm, um die weitere Version der Metadaten zu erstellen;
      - Senden der weiteren Version der Metadaten an den Dateimanagementserver;
      - Weiterleitung der weiteren Version der Metadaten durch den Dateimanagementserver an ein Nutzer-Computersystem des Fernwartungs-Nutzers um dem Nutzer-Computersystem eine Entschlüsselung des symmetrischen Schlüssels mit dem privaten Schlüssel des Fernwartungsnutzers, der mit dem öffentlichen Schlüssel ein asymmetrisches kryptographisches Schlüsselpaar bildet, zu ermöglichen.

Nach Ausführungsformen werden die Berechtigungstoken, die in Antwort auf die Anforderung des Dateimanagementservers von jedem der in dem Verteilungsplan identifizierten Speicherdienste an den Dateimanagementserver übermittelt werden, selektiv nur für die Berechtigungsanfrage zur Speicherung der Statusdatei generiert und besitzen nur temporäre Gültigkeit. Dies kann die Sicherheit weiter erhöhen.

Nach Ausführungsformen der Erfindung sind die Berechtigungstoken als URLs ausgebildet, die jeweils einen direkten Schreibzugriff auf einen durch die URL identifizierten Speicherplatz auf dem Speichermedium eines der Speicherdienste ermöglicht. Jede URL kann beispielsweise aus einer Pfadangabe sowie weiteren Angaben bestehen. Die Pfadangabe kann zum Beispiel eine ID des Speicherdienstes sowie eine Pfadangabe des entsprechenden Speicherplatzes auf dem Speichermedium des Speicherdienstes beinhalten. Die weiteren Angaben können zum Beispiel Parameterwerte umfassen, aus welchen die Berechtigung des Nutzers zum Zugriff auf den besagten Speicherplatz hervorgeht und die von dem Speicherdienst geprüft werden, wenn das Nutzer-Computersystem über die besagte URL auf das Dateifragment zugreift.

Dies kann vorteilhaft sein, da der Dateimanagementserver nicht als Router fungiert, was den Schutz der Daten vor unberechtigtem Zugriff durch den Dateimanagementserver gewährleisten kann. Dass die Berechtigungstoken nur eine temporäre Gültigkeit haben kann die Sicherheit des Verfahrens ebenfalls erhöhen. Nach Ablauf einer voreingestellter Zeit, zum Beispiel einigen Sekunden, Minuten oder Tagen, wird das Berechtigungstoken, zum Beispiel eine URL, automatisch ungültig.

Nach Ausführungsformen kann das Uploadprogramm für jede Statusdatei spezifisch festlegen, welcher Fernwartungsnutzer Zugriff auf die Datei hat und optional zudem, ob die Zugriffsrechte rein lesend und/oder auch schreibend sind. Falls ein Fernwartungsnutzer schreibenden Zugriff auf eine Statusdatei hat, kann diese als Wartungsdatei verwendet und optional als solche gekennzeichnet werden, z.B. durch eine Änderung des Dateiformats, durch einen bestimmten Datenwert ("Flag") oder durch Verschieben oder Kopieren der Datei in ein bestimmtes Verzeichnis. Das Ergebnis dieses Schreibzugriffs ist die Verwendung der Statusdatei als Wartungsdatei, die von einem optional auf dem Gerät ebenfalls instanziierten Downloadprogramm heruntergeladen wird.

Nach Ausführungsformen der Erfindung verwaltet der Dateimanagementserver einen geschützt gespeicherten Signierschlüssel. Das Verfahren umfasst weiterhin:
- Bereitstellung eines Signaturprüfschlüssels an jeden der Speicherdienste, wobei der Signaturprüfschlüssel zur Prüfung der von dem Signierschlüssel generierten Signaturen ausgebildet ist;
- Signierung der von jedem der identifizierten Speicherdienste empfangenen Berechtigungstoken mit dem Signierschlüssel durch den Dateimanagementserver, wobei die Berechtigungstoken in signierter Form an das Uploadprogramm weitergeleitet werden.

Jedes der signierten Berechtigungstoken ermöglicht einem Empfänger dieses signierten Berechtigungstokens einen Zugriff auf einen durch das Berechtigungstoken identifizierten Speicherplatz auf dem Speichermedium des jeweiligen Speicherdienstes nur dann, wenn der jeweilige Speicherdienst die Signatur als valide erkennt.

Dies kann vorteilhaft sein, da hierdurch sichergestellt wird, dass auch nur berechtigte Geräte Statusinformationen hochladen und verteilt speichern dürfen. Eine Manipulation der Statusdaten dadurch, dass ein nicht berechtigtes und möglicherweise manipuliert das Gerät seine Statusdateien anstelle des eigentlich berechtigten Gerätes hochlädt wird dadurch unterbunden.

Nach Ausführungsformen der Erfindung umfasst das Verfahren außerdem:
- Authentifizierung des Uploadprogramms gegenüber dem Dateimanagementserver; und
- Auf Empfang der Berechtigungsanfrage des Uploadprogramms zur Speicherung der Dateifragmente, Prüfung durch den Dateimanagementserver ob die zumindest einem Gerät, auf welcher das Uploadprogramms läuft, Zugriffsrechte zum Speichern der Statusdatei mittels der identifizierten Speicherdienste besitzt; die Anforderung des Berechtigungstokens durch den Dateimanagementserver erfolgt nur nach erfolgreicher Authentifizierung und nur falls das Uploadprogramm die Zugriffsrechte besitzt.

Dies kann vorteilhaft sein, da hierdurch das Hochladen von Statusdateien manipulierter Geräte verhindert wird. Ein mögliches Angriffsszenario auf ein Gerät besteht darin, ein manipuliertes Gerät gleicher Kennung zu erzeugen, welches manipulierte Statusdaten erzeugt und die einen Fernwartungs-Nutzer dazu veranlassen könnten, Gegenmaßnahmen zu treffen, die das Gerät oder dessen Umgebung schädigen. Um dieses Szenario zu verhindern, keines vorteilhaft sein, dass der Dateimanagementserver von dem Gerät zunächst eine Authentifizierung fordert, bevor der Dateimanagementserver die Berechtigungstoken von den Speicherdiensten anfordert.

Nach Ausführungsformen der Erfindung umfasst das Verfahren ferner:
- Empfang einer Zugriffs-Anfrage des Fernwartungs-Nutzers zum Zugriff auf die verteilt gespeicherte Statusdatei, wobei die Zugriffs-Anfrage durch den Dateimanagementserver empfangen wird;
- Identifikation der Speicherdienste, die Dateifragmente der Datei gespeichert haben anhand der Metadaten der Statusdatei auf die Zugriff angefragt wird durch den Dateimanagementserver;
- Prüfung durch den Dateimanagementserver ob der Fernwartungs-Nutzer Zugriffsrechte für den Typ des angeforderten Zugriffs auf die Statusdatei besitzt;
- Authentifizierung des Fernwartungs-Nutzers gegenüber dem Dateimanagementserver;
- nach erfolgreicher Authentifizierung und falls der Fernwartungs-Nutzer die Zugriffsrechte für die Statusdatei besitzt, Anforderung eines weiteren Berechtigungstokens durch den Dateimanagementserver von jedem der identifizierten Speicherdienste und Weiterleitung der in Antwort auf diese Anforderung erhaltenen weiteren Berechtigungstoken durch den Dateimanagementserver an das Nutzer-Computersystem des Fernwartungs-Nutzers, wobei die weiteren Berechtigungstoken dem Fernwartungsnutzer den angeforderten Zugriff auf die durch die Speicherdienste jeweils gespeicherten Dateifragmente in direkter Form ermöglichen.

Dies kann vorteilhaft sein um zu verhindern, dass ein unberechtigter Dritter sich Zugang zu sensiblen Statusinformationen eines Gerätes verschafft. Diese Informationen können Aufschluss geben über geheime Prozessparameter (zum Beispiel Druck und Temperatur bei chemischen Synthesen) oder mögliche Schwachstellen des Geräts und sollten daher nur vertrauenswürdigem Personal zugänglich sein.

Nach Ausführungsformen der Erfindung prüft der Dateimanagementserver, ob das zur Authentifizierung des Fernwartungs-Nutzers gegenüber dem Dateimanagementserver verwendete Authentifizierungsverfahren hinreichend verlässlich ist, um das von dem Fernwartungs-Nutzer konfigurierte Mindestvertrauensniveau für den angeforderten Zugriff zu erfüllen. Der Dateimanagementserver sendet die Anforderung des weiteren Berechtigungstokens nur dann an die identifizierten Speicherdienste, falls der Fernwartungs-Nutzer sich erfolgreich gegenüber dem Dateimanagementserver authentifiziert hat, Zugriffsrechte für die angeforderte Datei besitzt und falls das verwendete Authentifizierungsverfahren ein Vertrauensniveau hat, welches mindestens so hoch ist wie das in der Konfiguration des Uploadprogramms und/oder in einer Konfiguration des Dateimanagementservers spezifizierte Mindestvertrauensniveau.

Beispielsweise kann in manchen sehr sensiblen Anwendungsszenarien eine Authentifikation per Passwort als unzureichend angesehen werden. Zum Beispiel bezieht sich das Mindestvertrauensniveau in manchen sensiblen Anwendungsszenarien darauf, dass mindestens eine biometrische Authentifizierung des FernwartungsNutzers erforderlich ist.

Nach Ausführungsformen der Erfindung enthält die Konfiguration des Uploadprogramms und/oder des Dateimanagementservers eine Angabe einer Gruppe von Fernwartungs-Nutzern, welcher allein berechtigt ist, auf Statusdaten, die das Gerät in den Speichermedien der identifizierten Dienste gespeichert hat, zuzugreifen. Der Dateimanagementserver sendet die Anforderung des weiteren Berechtigungstokens nur dann an die identifizierten Speicherdienste, falls das Nutzer-Computersystem, von welchem der Fernwartungs-Nutzer die Zugriffs-Anfrage an den Dateimanagementserver versendet hat, die Angabe des allein berechtigten Computertyps erfüllt.

Nach Ausführungsformen der Erfindung verwaltet der Dateimanagementserver ein Nutzerprofil des Fernwartungs-Nutzers. Das Nutzerprofil enthält einen öffentlichen Schlüssel, der zusammen mit einem privaten Entschlüsselungsschlüssel ein asymmetrisches kryptographisches Schlüsselpaar bildet, wobei der eine private Entschlüsselungsschlüssel in dem Nutzer-Computersystem des Fernwartungs-Nutzers geschützt gespeichert ist und zur Entschlüsselung der Metadaten der Statusdatei oder zur Entschlüsselung von Teilen der Metadaten dient. Falls sich der Fernwartungs-Nutzer erfolgreich gegenüber dem Dateimanagementserver authentifiziert hat und falls der Fernwartungs-Nutzer die Zugriffsrechte für die Statusdatei besitzt, sendet der Dateimanagementserver den öffentlichen Schlüssels an das Uploadprogramm zur Verschlüsselung der Metadaten oder von Teilen der Metadaten durch das Uploadprogramm. Außerdem empfängt der Dateimanagementserver die ganz oder teilweise mit dem gesendeten öffentlichen Schlüssel verschlüsselten Metadaten der Statusdatei und leitet die empfangenen Metadaten an das Nutzer-Computersystem des Fernwartungs-Nutzers weiter um dem Nutzer-Computersystem eine Entschlüsselung der weitergeleiteten Metadaten mit dem privaten Entschlüsselungsschlüssel und eine Rekonstruktion der Statusdatei aus den Dateifragmenten zu ermöglichen.

Nach Ausführungsformen umfasst das Verfahren ferner:
- Erzeugung einer Wartungsdatei durch ein auf dem Nutzer-Computersystem instantisiertes Fernwartungsprogramm;
- Übertragung der Wartungsdatei an ein Server-Computersystem, insbesondere das Dateimanagementcomputersystem;
- Speicherung der Wartungsdatei durch das Server-Computersystem; und
- Herunterladen der Wartungsdatei von dem Server-Computersystem durch das Gerät

Dies kann vorteilhaft sein, da hierdurch ein duplexfähiger indirekter Kommunikationskanal zwischen Gerät und dem Fernwartungsprogramm des Fernwartungsnutzers erschaffen wird, der eine flexible und gleichzeitig sichere Wartung des Geräts aus der Ferne ermöglicht.

Nach Ausführungsformen der Erfindung dient der Dateimanagementserver als der Server-Computer. Der Dateimanagementserver beinhaltet ein Geräteregister, in welchem Geräte-IDs einer Vielzahl von bei dem Dateimanagementserver registrierten Geräten einschließlich des Geräts gespeichert sind. In dem Geräteregister ist jedem der registrierten Geräte ein serverseitiger Speicherbereich eineindeutig zugewiesen. Der serverseitigen Speicherbereich kann zum Beispiel ein physikalischer Speicherbereich eines einzelnen physikalischen Speichermediums oder ein logischer Speicherbereich sein, wobei der logische Speicherbereich mehrere verbundene physikalische Speicher umfasst und diese zu einem Speicherbereich integriert. Die den Geräten zugewiesenen Speicherbereiche sind voneinander isoliert und zugriffsbeschränkt, was bedeutet, dass nur solche Fernwartungsnutzer Zugriff auf einen der serverseitigen Speicherbereiche haben, die sich erfolgreich im Hinblick auf das zu diesem serverseitigen Speicherbereich gehörende Gerät gegenüber dem Dateimanagementserver authentifiziert haben. Die Speicherung der Wartungsdatei durch den Dateimanagementserver erfolgt so, dass die Wartungsdatei in dem Speicherbereich gespeichert wird, das dem Gerät zugewiesen ist, für welches die Wartungsdatei bestimmt ist und welches die Wartungsdatei herunterlädt

Die serverseitigen Speicherbereiche können zum Beispiel Bereiche auf einem nichtflüchtigen Speicher des Dateimanagementservers sein. Zusätzlich oder alternativ dazu kann es sich aber auch um Speicherbereiche auf den Speichermedien von über das Netzwerk, zum Beispiel das Internet erreichbaren Speicherdiensten handeln. Bei diesen Speicherdiensten kann es sich um die gleichen Speicherdienste handeln, die bereits zur Speicherung der Dateifragmente verwendet wurden, oder um andere Speicherdienste, oder eine Mischung dieser Speicherdienste.

Nach Ausführungsformen beinhaltet das Gerät ein Downloadprogramm. In Ausführungsformen bei welchen eine Mehrheit von Geräten bei dem Dateimanagementserver registriert sind, kann das Downloadprogramm auf ein oder mehreren dieser Geräte installiert sein.

Das Downloadprogramm ist konfiguriert zum:
- Zugriff auf den serverseitigen Speicherbereich, der dem Gerät in dem Geräteregister des Dateimanagementservers zugewiesen ist, um zu prüfen, ob in diesem Speicherbereich eine Wartungsdatei gespeichert ist, wobei die Wartungsdatei ein oder mehrere der folgenden Elemente beinhaltet: Geräteprogrammbefehle zur Steuerung der zumindest einen Hardwarefunktion; ein Softwareupdate des Geräteprogramms, ein Firmwareupdate des Geräts; kryptographische Schlüssel; Konfigurationsparameterwerte für das Gerät; Konfigurationsparameterwerte für das Steuerprogramm;
- Falls die Prüfung ergibt, dass in dem serverseitigen Speicherbereich eine Wartungsdatei gespeichert ist, die noch nicht heruntergeladen wurde, automatisches Herunterladen der Wartungsdatei durch das Downloadprogramm; und
- Speichern, Verarbeiten und/oder Ausführen der heruntergeladenen Wartungsdatei durch das Downloadprogramm.

Das Speichern, verarbeiten und/oder Ausführen der Wartungsdatei kann zum Beispiel dazu dienen, dass Gerät funktional zu verbessern oder zu aktualisieren. Beispielsweise kann es sich bei der Wartungsdatei um ein Firmwareupdate der Gerätefirmware oder um ein Softwareupdate eines Gerätetreibers handeln. Zusätzlich oder alternativ dazu kann es sich bei der Wartungsdatei um ein sogenanntes "Patch" handeln, also um eine Datei, die dazu in der Lage ist, frisch erkannte funktionale Fehler und/oder Sicherheitslücken einer Firmware oder Software zu beheben. Das Downloadprogramm ist dazu konfiguriert, zu erkennen, ob die heruntergeladenen Wartungsdatei eine bestehende Firmware oder eine bestehende Software ersetzen oder ergänzen soll und die Wartungsdatei an entsprechender Stelle zu speichern und/oder zu installieren. Bei der Wartungsdatei kann es sich auch um eine Datei handeln, die ein oder mehrere Steuerbefehle zur Durchführung der Hardwarefunktion des Geräts und/oder zur Durchführung eines Firmware Updates oder Software-Updates handeln.

Dies kann vorteilhaft sein, da durch nachträgliche Installation des Downloadprogramms auf dem Gerät die Steuerung des Geräts und/oder die Durchführung von Firmware Updates und sonstigen Wartungsarbeiten am Gerät durch einen Fernwartungs-Nutzer auf sehr einfache und sichere Art und Weise bewerkstelligt werden kann: es ist nicht erforderlich, dem Fernwartungs-Nutzer direkten Zugriff auf das Gerät zu verschaffen, da das Downloadprogramm sich die Wartungsdateien selber und automatisch von einem vordefinierten, sicheren Speicherbereich herunterlädt. Es ist außerdem nicht erforderlich, dass bestehende Firmware bzw. Gerätesoftware umgeschrieben wird. Es ist lediglich erforderlich, dass Downloadprogramm auf dem Gerät zu installieren und entsprechende Dateien auf serverseitigen, sicheren Speicherbereichen bereitzustellen, um eine sichere Fernwartung eines Gerätes möglich zu machen. Die jedoch ermöglichte Fernwartung ist ausgesprochen flexibel: vorzugsweise ist es Downloadprogramm dazu konfiguriert, im Zuge einer Analyse einer Wartungsdatei automatisch zu erkennen, wie diese Wartungsdatei weiterverarbeitet werden muss: beispielsweise kann es sich bei der Wartungsdatei um eine Datei mit ein oder mehreren Steuerbefehlen oder um ein Softwarepatch oder ein Firmwareupdate für das Geräteprogramm handeln. Falls es sich um eine Datei mit Steuerbefehlen handelt, liest das Downloadprogramm die Steuerbefehle aus und führt diese aus oder gibt sie zur Ausführung an das Geräteprogramm und/oder an die Hardwarefunktion. Falls es sich bei der Wartungsdatei um das Patch oder Firmwareupdate handelt, wird die bestehende Gerätesoftware durch die Wartungsdatei ersetzt bzw. die Wartungsdatei an geeigneter Stelle installiert, um die Gerätesoftware funktional zu verbessern.

Nach Ausführungsformen der Erfindung ist das Downloadprogramm dazu konfiguriert, den Zugriff auf den serverseitigen Speicherbereich automatisch und regelmäßig und/oder in Antwort auf eine Interaktion eines Nutzers mit dem Gerät durchzuführen, um eine Wartungsdatei herunterzuladen.

Dies kann vorteilhaft sein, da hierdurch eine zeitnahe und automatische Umsetzung der Wartungsbefehle des Fernwartungs-Nutzers gewährleistet wird.

Nach Ausführungsformen der Erfindung ist das Downloadprogramm dazu konfiguriert, den Zugriff auf den serverseitigen Speicherbereich automatisch und regelmäßig mit einer Frequenz von mindestens einmal pro 10 Sekunden, vorzugsweise von mindestens einmal pro Sekunde durchzuführen, um ein oder mehrere neue Wartungsdateien herunterzuladen, die das Gerät noch nicht heruntergeladen hat, wobei die ein oder mehreren neue Wartungsdateien insbesondere Geräteprogrammbefehle beinhalten.

Dies kann vorteilhaft sein, da eine Fernwartung eines Gerätes in Echtzeit bzw. nahezu in Echtzeit ermöglicht wird. Besonders vorteilhaft sind diese Merkmale in Kombination mit einem automatischen hochladen von Statusdateien durch das Uploadprogramm in regelmäßigen und ähnlich bzw. identisch kurzen Zeitintervallen. Dies bewirkt nämlich, dass ein Fernwartungsnutzer ein Gerät in Echtzeit warten kann und die Statusänderungen des Gerätes, die durch die vorgenommenen Wartungsarbeiten bewirkt werden, praktisch unmittelbar in den in Echtzeit zur Verfügung gestellten neuen Statusdaten erkennen kann. Ohne dass der Fernwartungsnutzer also direkten Zugriff auf das Gerät hat vermittelt das Fernwartungsprogramm in Interoperation mit dem Dateimanagementserver, dem Uploadprogramm und dem Downloadprogramm dem Fernwartungsnutzer den Eindruck, er bzw. sie würden das Gerät direkt von der Ferne aus warten, also zum Beispiel neu konfigurieren, mit aktualisierter Software ausstatten etc. und erhielten sofort eine Rückmeldung bezüglich der Ergebnis ihrer Tätigkeiten.

Nach Ausführungsformen der Erfindung verwendet der Fernwartungsnutzer ein Nutzer-Computersystem auf dem ein Fernwartungsprogramm instanziiert ist zum Zugriff auf die Statusdatei und/oder zur Erstellung von ein oder mehreren Statusdateien. Das Fernwartungsprogramm hat eine graphische Benutzeroberfläche (GUI), die dem Fernwartungsnutzer die Spezifikation einer oder mehrerer Wartungsdateien ermöglicht.

Beispielsweise kann sich der Fernwartungsnutzer zunächst gegenüber dem Dateimanagementserver authentifizieren, um zumindest Lesezugriff auf ein oder mehrere Statusdateien zu erhalten, die von dem Geräteprogramm des Geräts erzeugt wurden und oder um ein oder mehrere Wartungsdateien in den serverseitigen Speicherbereich dieses Geräts speichern zu dürfen. Je nach Implementierungsvariante kann für das Recht, auf die Statusdateien zugreifen zu dürfen und für das Recht, Wartungsdateien hochladen zu dürfen, unterschiedliche Authentifizierungsprozesse erforderlich sein, oder es kann dem Nutzer beides gewährt werden, wenn es sich ein einziges Mal erfolgreich gegenüber dem Dateimanagementserver authentifiziert hat.

Nur nachdem sich der Fernwartungsnutzer erfolgreich gegenüber dem Dateimanagementserver (als schreib-/Upload-berechtigt) authentifiziert hat, speichert das Fernwartungsprogramm die ein oder mehreren Wartungsdateien in dem serverseitigen Speicherbereich des Geräts.

Das Fernwartprogramm ist dazu konfiguriert, für den erfolgreich authentifiziert Nutzer automatisch und regelmäßig von dem Dateimanagementserver neue von dem Geräteprogramm erzeugte Statusdateien anzufordern, auf das Nutzer-Computersystem des Fernwartungs-Nutzers herunterzuladen, und zu analysieren. Beispielsweise kann das Fernwartprogramm dazu konfiguriert sein, mindestens einmal in der Stunde, vorzugsweise mindestens einmal in der Minute, weiterhin vorzugsweise mindestens einmal in der Sekunde eine Anfrage an den Dateimanagementserver zu senden, ob von einem bestimmten Gerät eine neue/aktuellere Wartungsdatei erzeugt und für den Fernwartungsnutzer bereitgestellt wurde. Falls dies der Fall ist, lädt das Fernwartungsprogramm die neue Wartungsdatei automatisch auf das Nutzer-Computersystem des Fernwartungs-Nutzers herunter, analysiert die heruntergeladene Statusdatei und zeigt zumindest Teile des Inhalts der Statusdatei über die GUI des Fernwartprogramms dem Fernwartungsnutzer an.

Außerdem ist das Fernwartungsprogramm dazu konfiguriert, Automatische oder semiautomatische eine oder mehrere weitere Wartungsdateien in Abhängigkeit vom Ergebnis der Analyse zu erzeugen und zur Speicherung auf den dem Gerät zugewiesenen serverseitigen Speicherbereich automatisch hochzuladen. Das hochladen erfolgt vorzugsweise sofort, d. h. ohne weitere Verzögerung, unmittelbar nach der Erstellung der ein oder mehreren Wartungsdateien. In manchen Ausführungsformen erfolgt das hochladen auch "batchweise", sodass in vordefinierten, regelmäßigen Abständen von zum Beispiel mindestens einmal pro Stunde, vorzugsweise mindestens einmal pro Minute, weiterhin vorzugsweise von mindestens einmal pro Sekunde alle zwischenzeitlich neu erstellten Wartungsdateien von dem Fernwartungsprogramm in den dem Gerät zugewiesenen serverseitigen Speicherbereich aufzuladen.

Beispielsweise kann es sich bei dem Gerät um ein Analysegerät eines chemischen Labors handeln, dass in seinen regelmäßig erzeugten Statusdateien die für die Analyse verwendeten Reagenzien und das Ergebnis der chemischen Analyse festhält. Das Fernwartungsprogramm kann automatisch oder in Interoperation mit dem Fernwartungsnutzer erkennen, das zum Beispiel ein bestimmtes Reagenz zur Neige geht und nachgefüllt werden muss. Das Fernwartungsprogramm kann automatisch oder in Interoperation mit dem Nutzer eine Wartungsdatei erzeugen, in welcher ein Befehl spezifiziert ist, den Tank mit dem zur Neige gehenden Reagenz wieder aufzufüllen. Das auf dem Analysegerät instanziiert Downloadprogramm ist dazu konfiguriert, in regelmäßigen Abständen, also zum Beispiel mindestens einmal pro Tag, oder mindestens einmal pro Stunde, oder mindestens einmal pro Minute, oder vorzugsweise mindestens einmal pro Sekunde alle für das Analysegerät in dem serverseitigen Speicherbereich gespeicherte Wartungsdaten herunterzuladen und zu analysieren und/oder auszuführen. Das Downloadprogramm führt also den Wartungsbefehl, den Tank neu zu befüllen, aus und sendet einen entsprechenden Befehl an eine Robotereinheit oder einen Hinweis an einen Mitarbeiter vor Ort, um die automatische oder manuelle Neubefüllung des Tanks zu veranlassen. Bei diesem Beispiel (Neubefüllung eines Tanks) handelt es sich um ein vergleichsweise einfaches Problem. Oftmals sind die Fernwartungsarbeiten und die entsprechenden Steuerbefehle hochgradig komplex und hängen stark von dem Typ des jeweils verwendeten Gerätes ab. Insbesondere bei komplexen und schwierigen Wartung-und Konfigurationsproblemen kommt die Möglichkeit der Fernwartung positiv zum Tragen.

Nach Ausführungsformen ist also das Downloadprogramm des Geräts dazu konfiguriert, automatisch und regelmäßig auf den diesem Gerät zugewiesenen serverseitigen Speicherbereich zuzugreifen und neue Wartungsdateien herunterzuladen und zu speichern, zu verarbeiten und/oder auszuführen.

Nach Ausführungsformen der Erfindung kann das Fernwartungsprogramm die Wartungsdatei in Form einer mittels eines Fehlerkorrekturverfahrens erzeugten Menge an Dateifragmenten in einem serverseitigen Speicherbereich speichern, wobei der serverseitige Speicherbereich als eine Vielzahl von Speichermedien mehrerer Speicherdienste ausgebildet ist. In dieser Ausführungsform arbeitet also das Fernwartungsprogramm im Hinblick auf die Speicherung der Wartungsdatei in funktional analoger Weise wie das Uploadprogramm des Geräts im Hinblick auf die Statusdatei. Der Dateimanagementserver ist dazu konfiguriert, dem Downloadprogramm des Gerätes nach entsprechender Authentifizierung Zugriff auf die verteilt gespeicherte Wartungsdateien mittels Berechtigungstoken zu verschaffen wie dies im Hinblick auf das Uploadprogramm und die Statusdatei hier bereits für Ausführungsformen der Erfindung beschrieben wurde.

Nach Ausführungsformen der Erfindung umfasst das Verfahren ferner eine Authentifizierung des Fernwartungsnutzers gegenüber dem Dateimanagementserver im Hinblick auf denjenigen serverseitigen Speicherbereich, der der Geräte-ID des Gerätes in dem Geräteregister zugeordnet ist. Nur im Falle einer erfolgreichen Authentifizierung des Nutzers speichert eine Fernwartungssoftware, die auf einem Nutzer-Computer des Fernwartungsnutzers instanziiert ist, ein oder mehrere Wartungsdateien in diesem serverseitigen Speicherbereich.

Dass der Dateimanagementserver eine Speicherung von Wartungsdateien in den von ihm verwalteten serverseitigen Speicherbereichen nur nach erfolgreicher Authentifizierung des Fernwartungsnutzers erlaubt kann vorteilhaft sein, da hierdurch vermieden wird, dass ein nicht berechtigte Nutzer eine Wartungsdatei mit Steuerbefehlen hochlädt, deren Speicherung oder Ausführung durch das Gerät das Gerät schädigt oder bewirkt, dass die Hardwarefunktionalitäten des Geräts in unerwünschter Weise ausgeführt werden.

Nach manchen Ausführungsformen umfasst das Verfahren:
- Bereitstellung einer editierbaren Konfiguration, die Anforderungen eines Nutzers, z.B. eines Fernwartungsnutzers oder eines Geräteherstellers, Gerätewartungsunternehmens oder Geräteverkäufers hinsichtlich der Geschwindigkeit, der geographischen Lage, der Sicherheit und/oder der Kosten einer für die Speicherung von Daten zu nutzenden IT-Infrastruktur sowie Anforderungen hinsichtlich der Verfügbarkeit der zu speichernden Daten enthält;
- Bereitstellung eines Speicherdienst-Katalogs, der Spezifikationen einer Vielzahl von zur Verfügung stehenden Speicherdiensten umfasst, wobei die Spezifikation jedes der Speicherdienste Angaben hinsichtlich der Geschwindigkeit, der geographischen Lage, der Sicherheit und/oder der Kosten einer für die Speicherung der Daten genutzten IT-Infrastruktur des Speicherdienstes enthalten;
- um den Verteilungsplan zu generieren, automatische Auswertung der Konfiguration und des Speicherdienst-Katalogs, um in Abhängigkeit von den Spezifikationen der verfügbaren Speicherdienste und in Abhängigkeit der Anforderungen ein Fehlerkorrekturverfahren aus einer Vielzahl von Fehlerkorrekturverfahren zu identifizieren, das den Anforderungen hinsichtlich der Verfügbarkeit der zu speichernden Daten genügt und um die im Verteilungsplan identifizierten Speicherdienste aus der Vielzahl der zur Verfügung stehenden Speicherdienste zu identifizieren, die zu einer verteilten Speicherung der Datei gemäß den nutzerspezifischen Anforderungen hinsichtlich der Geschwindigkeit, geographischen Lage, Sicherheit und/oder Kosten der für die Speicherung von Daten zu nutzenden IT-Infrastruktur geeignet sind; und
- Verwenden des identifizierten Fehlerkorrekturverfahrens als das Fehlerkorrekturverfahren des Verteilungsplans.

Beispielsweise können die Konfigurationsregeln enthalten, die von dem Nutzer erstellt und angepasst werden können. Einige Regeln sollen hier beispielhaft angeführt werden: "wenn die zu speichernde Statusdatei eine Logdatei ist, dann sollen die Kosten pro Gigabyte Speicherplatz unterhalb 2 Euro liegen"; "wenn die zu speichernde Datei eine Fehlermeldungsdatei ist, dann sollen die minimal garantierte Upload-Rate bei 1 MB/Sekunde liegen"; "wenn die erforderliche Dateiverfügbarkeit 2 X 9/9 ist, dann sollen die Kosten pro GB Speicherplatz unter 2 liegen, wobei die Upload- und Download Übertragungsrate so groß wie möglich sein soll.

Bei Ausführungsformen in welchen der Verteilungsplan von dem Gerät generiert wird erfolgt auch die automatische Auswertung durch das Gerät. Wird der Verteilungsplan von dem Dateimanagementserver generiert, erfolgt auch die automatische Auswertung durch den Dateimanagementserver. Vorzugsweise wird jedoch in beiden Ausführungsformen sowohl der Speicherdienst-Katalog als auch die Konfiguration zur Nutzung durch eine Vielzahl von Geräten zentral gespeichert, zum Beispiel auf dem Dateimanagementserver oder einem mit diesem verbundenen Datenbankserver. Dies kann die Aktualisierung des Speicherdienst-Katalogs erleichtern. Nach manchen Ausführungsformen hat der Dateimanagementserver eine Schnittstelle, die mit Schnittstellen der Speicherdienste interoperabel ist und bewirkt, dass bei einer Änderung bezüglich der Sicherheit, geographischen Lage, Verfügbarkeit oder Kosten der IT-Infrastruktur eines der Speicherdienste eine automatische Aktualisierung der in dem Speicherdienst-Katalog enthaltenen Spezifikation dieses Speicherdienst bewirkt wird.

Nach Ausführungsformen werden für die automatische Generierung des Verteilungsplans außerdem Merkmale der zu speichernden Wartungsdatei berücksichtigt. Diese Merkmale können zum Beispiel ein oder mehrere der folgenden Merkmale beinhalten: den Dateityp (normale Log-Datei oder dringliche Fehlerwarnung); das Dateiformat (das ggf. einen Hinweis auf die betroffene Hardwarefunktion gibt); die Dateigröße und weitere. Falls der Verteilungsplan von dem Dateimanagementserver erstellt wird können diese Merkmale zum Beispiel als Bestandteil einer Nachricht von dem Gerät an den Dateimanagementserver übertragen werden. Dies kann vorteilhaft sein, dafür unterschiedliche Dateitypen beispielsweise unterschiedliche Speicherdienste optimal sein können. Für Statusdateien geringer Dringlichkeit, z.B. normalen Logdateien, können zum Beispiel Auswahl löschen kostengünstige aber vergleichsweise langsame Speicherdienste geeignet sein während für Statusdateien mit dringlichen Fehlerwarnungen Speicherdienste geeigneter sein können, die eine hohe Uploadrate und/oder Downloadrate anbieten. Die besagten Merkmale der Datei können nicht nur Einfluss haben auf die Speicherdienste, deren Identifikatoren in den Verteilungsplan integriert werden, sondern auch auf das in dem Verteilungsplan spezifizierte Fehlerkorrekturverfahren. Ist die zu speichernde Datei zum Beispiel sehr groß und eine schnelle Speicherung über das Netzwerk gewünscht, kann das Fehlerkorrekturverfahren automatisch so konfiguriert werden, dass es viele kleine Dateifragmente generiert, die schnell parallel über das Netzwerk übertragen werden können. Bei einer kleineren Datei kann auch eine entsprechend kleinere Anzahl an Dateifragmenten ausreichend sein um eine hinreichend schnelle Übertragung zu gewährleisten.

Nach Ausführungsformen speichert das Gerät die Metadaten in einem - vorzugsweise geschützten - Datenspeicher des Geräts und überträgt die Metadaten an den Dateimanagementserver. Der Dateimanagementserver verwendet die übertragenen Metadaten zur Kontrolle des Zugriffs von einem oder mehreren Fernwartungsnutzern auf die Statusdatei. Dies kann zum Beispiel dadurch geschehen, dass die Metadaten selektiv nur solchen weiteren Fernwartungsnutzern zur Verfügung gestellt werden, die eine Berechtigungsanfrage an den Dateimanagementserver zum Lesen der Datei gesendet haben und die von dem Dateimanagementserver als berechtigt zur Durchführung der angefragten Leseoperation erkannt wurden. Dies kann vorteilhaft sein, da die Metadaten dem Dateimanagementserver erlauben, eine feingranulare Zugangskontrolle speziell für diese Datei für eine Vielzahl von weiteren Fernwartungsnutzern zu ermöglichen, wobei weder der Dateimanagementserver Zugriff auf die Daten hat noch die einzelnen Speicherdienste die ursprüngliche Datei rekonstruieren können. Ihnen fehlen hierzu die Metadaten und außerdem die durch die anderen Speicherdienste gespeicherten Dateifragmente.

Nach manchen Ausführungsformen sind in dem Gerät und dem Dateimanagementserver Metadaten einer Vielzahl von verteilt in den Speicherdiensten gespeicherten Statusdateien von einem oder mehreren Geräten gespeichert. Der Dateimanagementserver verwendet die besagten Metadaten zur Generierung einer netzwerkbasierten Sicht auf die verteilt gespeicherten Dateien für ein oder mehrere authentifizierte Fernwartungsnutzer.

Nach Ausführungsformen umfasst das Verfahren ferner eine Berechnung eines Hashwerts der gesamten Statusdatei durch das Uploadprogramm. Das Uploadprogramm verschlüsselt jedes der Dateifragmente der Datei, wobei der Hashwert als symmetrischer Schlüssel zur Verschlüsselung der Dateifragmente verwendet wird. Zudem verschlüsselt das Uploadprogramm die generierten Metadaten, die den symmetrischen Schlüssel beinhalten, oder zumindest den symmetrischen Schlüssel, durch einen öffentlichen Schlüssel ("Verschlüsselungsschlüssel"), der dem Fernwartungsnutzer, der die Statusdatei lesen können soll, zugeordnet ist, z.B. in einer Nutzerprofildatenbank/Nutzerregister, das von dem Dateimanagementserver verwaltet wird. Ein privater Schlüssel ("Entschlüsselungsschlüssel") bildet mit dem öffentlichen Schlüssel ein asymmetrisches kryptographisches Schlüsselpaar, wobei der öffentliche Schlüssel in dem Dateimanagementserver (DMS) mit einem Profil des Fernwartungsnutzers, dem der öffentliche Schlüssel zugeordnet ist, verknüpft ist. Der private Schlüssel, mit welchem die Metadaten bzw. der symmetrische Schlüssel wieder entschlüsselt werden kann, ist vorzugsweise in dem Nutzer-Computersystem dieses Fernwartungsnutzers geschützt gespeichert. Falls mehrere Nutzer-Computersysteme zum Zugriff auf die verteilt gespeicherte Statusdatei berechtigt sind kann nach Ausführungsformen für jedes dieser berechtigten Nutzer-Computersysteme eine eigene Version von Metadaten für die eine verteilt gespeicherte Statusdatei generiert werden, wobei die Metadaten oder zumindest deren symmetrischer Schlüssel durch das Gerät, das die Datei ursprünglich gemäß dem Verteilungsplan verteilt speicherte, mittels des öffentlichen Schlüssels des jeweiligen Fremdwartungsnutzers verschlüsselt wird. Die Metadaten bzw. der symmetrische Schlüssel können nur von Nutzer-Computersystem desjenigen Fremdwartungsnutzers entschlüsselt werden, die einen zu dem öffentlichen Verschlüsselungsschlüssel korrespondierenden privaten kryptographischen Schlüssel geschützt gespeichert haben.

Zusätzlich oder alternativ dazu kann das Uploadprogramm die generierten Metadaten durch einen öffentlichen Schlüssel eines weiteren, zum Zugriff auf die Datei berechtigten Nutzer-Computersystems, das einem weiteren Fremdwartungsnutzer zugeordnet ist, verschlüsseln, sodass eine andere Version der verschlüsselten Metadaten generiert wird, um die andere Version der Metadaten für eine sichere Übermittlung an das weitere Nutzer-Computersystem zu verwenden.

Das Uploadprogramm generiert die Metadaten für die zu speichernde Datei, wobei die Metadaten zumindest den berechneten Hashwert der Datei - vorzugsweise in verschlüsselter Form - sowie die Hashwerte der Dateifragmente beinhalten. Die Dateifragmente werden in verschlüsselter Form in den Speichermedien der identifizierten Speicherdienste gespeichert. Die Verschlüsselung der einzelnen Dateifragmente mit einem Datei-spezifisch erstellten Schlüssel kann die Sicherheit des Verfahrens weiter erhöhen, da ein anderer Nutzer, der berechtigterweise oder unberechtigterweise die Metadaten einer bestimmten Datei empfängt, selektiv nur auf diese eine Datei zugreifen kann und nicht etwa auf eine andere Datei. Bei dem als symmetrischer Schlüssel verwendeten Hashwertes kann es sich beispielsweise um einen mittels eines MD5, Sha-1 oder Sha-2 Hashalgorithmus berechneten Hashwert handeln.

Nach Ausführungsformen können die Dateifragment-spezifischen Hashwerte als Identifikatoren der Dateifragmente dienen. Die Hash Werte der Dateifragmente können mit einem Mapping mit dem ursprünglichen Dateinamen verknüpft werden, und das Mapping kann zusammen mit dem ursprünglichen Dateinamen in die Metadaten aufgenommen werden. Das Uploadprogramm verschlüsselt jedes der Dateifragmente der Datei, wobei der Hashwert der gesamten, ursprünglichen Datei als symmetrischer Schlüssel verwendet wird. Vorzugsweise wird eine starke Verschlüsselung beispielsweise mittels AES-256 oder AES 512 verwendet.

Nach Ausführungsformen umfasst das Verfahren eine Authentifizierung des Uploadprogramms gegenüber dem Dateimanagementserver. Auf Empfang der Berechtigungsanfrage zur Speicherung der Dateifragmente, prüft der Dateimanagementserver ob das Gerät auf dem das Uploadprogramm installiert ist Zugriffsrechte zum Speichern der Datei mittels der identifizierten Speicherdienste besitzt. Der Dateimanagementserver fordert die Berechtigungstoken nur dann von den identifizierten Speicherdiensten an, falls sich das Gerät gegenüber dem Dateimanagementserver erfolgreich authentifiziert hat und falls das Gerät die erforderlichen Zugriffsrechte besitzt. Die Prüfung der Zugriffsrechte erfolgt dabei vorzugsweise nur bezogen auf die angeforderte Schreiboperation bezüglich der zu schreibenden Statusdatei. Dies hat den Vorteil, dass die Zugriffskontrolle sehr feingranulare ist im Hinblick auf einzelne Geräte, im Hinblick auf die Zeit, und im Hinblick auf einzelne Dateien flexibel und spezifisch erfolgen kann.

Nach Ausführungsformen werden die Berechtigungstoken, die in Antwort auf die Anforderung des Dateimanagementservers von jedem der in dem Verteilungsplan identifizierten mehreren Speicherdienste an den Dateimanagementserver übermittelt werden, selektiv nur für die Berechtigungsanfrage zur Speicherung der Datei generiert und besitzen nur temporäre Gültigkeit.

Nach Ausführungsformen kann auch ein weiterer Fremdwartungsnutzer auf die Statusdatei lesend zugreifen. Hierfür sendet der Dateimanagementserver, nachdem sich der weitere Fremdwartungsnutzer erfolgreich gegenüber dem Dateimanagementserver authentifiziert hat und außerdem der Dateimanagementserver festgestellt hat, dass der weitere Fremdwartungsnutzer zum Zugriff auf die Statusdatei berechtigt ist, einen öffentlichen Schlüssel des weiteren Fremdwartungsnutzers, der z.B. in einem von dem Dateimanagementserver verwalteten Nutzerprofil gespeichert ist an das Gerät, das die Statusdatei verteilt gespeichert hat. Das Uploadprogramm des besagten Geräts empfängt den öffentlichen Schlüssel des anfragenden, berechtigten weiteren Fremdwartungsnutzers, verschlüsselt damit den symmetrischen Schlüssel und sendet die Metadaten mit dem verschlüsselten symmetrischen Schlüssel an den Dateimanagementserver. Der Dateimanagementserver wiederum sendet die Metadaten der besagten Statusdatei an das Nutzer-Computersystem des weiteren Fremdwartungsnutzers. Optional kann der Dateimanagementserver die besagten Metadaten, also eine spezifisch für diesen weiteren Fremdwartungsnutzer verschlüsselte Version der Metadaten, speichern, sodass bei einer späteren Zugriffsanfrage des berechtigten weiteren Fremdwartungsnutzers der Dateimanagementserver die gespeicherten Metadaten direkt ohne weitere Interaktion mit dem weiteren Fremdwartungsnutzer an diesen weiterleiten kann. Die für verschiedene weitere Fremdwartungsnutzer generierten und unterschiedlich verschlüsselten Versionen der Metadaten können von dem Dateimanagementserver z.B. in einer Datenbank gespeichert werden. Das Nutzer-Computersystem des weiteren Fremdwartungsnutzers verwendet den geschützt gespeicherten privaten asymmetrischen Schlüssel des weiteren Fremdwartungsnutzers, um die Metadaten der Statusdatei oder zumindest den verschlüsselten symmetrischen Schlüssel zu entschlüsseln und verwendet die von dem Dateimanagementserver angeforderten und weitergeleiteten Berechtigungstoken zum Lesen der Datei, indem es die Dateifragmente der Statusdatei von den einzelnen Speicherdiensten herunterlädt . Sobald die Dateifragmente und die Metadaten oder zumindest der symmetrische Schlüssel in entschlüsselter Form vorliegen, verwendet ein auf dem weiteren Nutzer-Computersystem installiertes Fernwartungsprogramm den entschlüsselten symmetrischen Schlüssel, um die Dateifragmente zu entschlüsseln. Außerdem können die Metadaten noch weitere Informationen beinhalten, aus welchem hervorgeht, wie der Inhalt der ursprünglichen Datei von den durch das Fehlerkorrekturverfahren generierten Fehlerkorrekturbits getrennt werden können und wie die ursprüngliche Datei einschließlich des Dateinamens aus den Dateifragmenten rekonstruiert werden kann.

Alle diese Schritte geschehen vorzugsweise voll automatisch, sodass der weitere Fernwartungsnutzer, der die Statusdatei lesen möchte, im normalen Betrieb nicht erfährt, auf welchen und wie vielen Speicherdiensten die Datei verteilt gespeichert ist. Dies kann vorteilhaft sein, da der Dateimanagementserver zentral die öffentlichen Schlüssel einer Vielzahl von Nutzern verwalten kann und durch die Weiterleitung sowohl der Metadaten als auch der öffentlichen Schlüssel selektiv an berechtigte weitere Nutzer einen besonders hohen Schutz vor unberechtigtem Zugriff gewährleisten kann. Der symmetrische Schlüssel sorgt dafür, dass die Dateifragmente verschlüsselt in den Speichermedien der einzelnen Speicherdienste gespeichert werden und auch der Upload und Download der Dateifragmente in verschlüsselter Form erfolgt, wobei vorzugsweise für jede Datei ein anderer symmetrischer Schlüssel dynamisch generiert wird. Die beschriebene Kombination aus einem dateispezifischen symmetrischen Schlüssel zur Ver- und Entschlüsselung der Dateifragmente und einem dem Nutzer zugeordneten öffentlichen Schlüssel zur Integration des symmetrischen Schlüssels in die Metadaten der Datei kann außerdem vorteilhaft sein, da eine Verschlüsselung bzw. Entschlüsselung großer Datenmengen mittels symmetrischer kryptographische Schlüssel in der Regel deutlich performanter ist als mittels eines asymmetrischen kryptografischen Schlüsselpaars. Der Geschwindigkeitsaspekt ist bei der Verschlüsselung der (vergleichsweise kleinen) Metadaten weniger relevant, so das hier auf eine Verschlüsselung mit einem asymmetrischen kryptografischen Schlüsselpaar zurückgegriffen werden kann, die den Austausch eines zur Entschlüsselung notwendigen Schlüssels ermöglicht, ohne dabei den privaten Schlüssel zu offenbaren. Die Verschlüsselung der Datensätze mit dem eigenen Hashwert kann vorteilhaft sein, da es dem Dateimanagementserver dadurch ermöglicht wird, die redundante Datenspeicherung zu vermeiden, falls beispielsweise verschiedene Geräte die gleichen Inhalte ablegen sollten.

Nach manchen Ausführungsformen ist ein Signierschlüssel in dem Dateimanagementserver geschützt gespeichert. Das Verfahren umfasst ferner eine Bereitstellung eines Signaturprüfschlüssels an jeden der Speicherdienste. Der Signaturprüfschlüssel ist zur Prüfung der von dem Signierschlüssel generierten Signaturen ausgebildet. Der Dateimanagementserver signiert das von jedem der identifizierten Speicherdienste empfangene Berechtigungstoken mit dem Signierschlüssel. Die Berechtigungstoken werden anschließend in signierter Form an das Gerät weitergeleitet. Jedes der signierten Berechtigungstoken ermöglicht einem Empfänger dieses signierten Berechtigungstokens einen Zugriff auf einen durch das Berechtigungstoken identifizierten Speicherplatz auf dem Speichermedium des jeweiligen Speicherdienstes nur dann, wenn der jeweilige Speicherdienst die Signatur als valide erkennt. Die einzelnen Speicherdienste führen also vorzugsweise eine Signaturprüfung durch um die Sicherheit der durch sie gespeicherten Daten weiter zu erhöhen. Die Signierung der Berechtigungstoken erfolgt ebenfalls sowohl für Berechtigungstoken, die einen Lesezugriff auf eine bereits verteilt gespeicherte Datei ermöglichen wie auch für Berechtigungstoken die einen Schreibzugriff zur verteilten Speicherung einer Datei gewähren.

Nach Ausführungsformen umfasst das Verfahren ferner:
- Empfang, durch den Dateimanagementserver, einer Zugriffs-Anfrage eines weiteren Nutzer-Computersystems zum Zugriff auf die verteilt gespeicherte Statusdatei;
- Identifikation der Speicherdienste, die Dateifragmente der Datei gespeichert haben anhand der Metadaten der Statusdatei durch den Dateimanagementserver;
- Prüfung durch den Dateimanagementserver ob ein weiterer Fremdwartungsnutzer, dem das weitere Nutzer-Computersystem zugeordnet ist, Zugriffsrechte für den Typ des angeforderten Zugriffs und für die Statusdatei besitzt; der Typ des angeforderten Zugriffs kann zum Beispiel ein Lesezugriff sein; mancher Ausführungsformen können weiterhin unterscheiden zwischen Schreibzugriff, Modifikationszugriff, Löschzugriff, Lesezugriff;
- Authentifizierung des weiteren Nutzer-Computersystems gegenüber dem Dateimanagementserver;
- Nach erfolgreicher Authentifizierung und falls der weitere Fernwartungsnutzer die Zugriffsrechte für die Datei besitzt, Anforderung eines weiteren Berechtigungstokens durch den Dateimanagementserver von jedem der anhand der Metadaten identifizierten Speicherdienste und Weiterleitung der in Antwort auf diese Anforderung erhaltenen weiteren Berechtigungstoken durch den Dateimanagementserver an das weitere Nutzer-Computersystem, wobei die weiteren Berechtigungstoken dem weiteren Nutzer-Computersystem den angeforderten Zugriff auf die durch die Speicherdienste jeweils gespeicherten Dateifragmente in direkter Form ermöglichen.

Dass der Zugriff weiterer Fernwartungsnutzer auf die gespeicherte Datei der Kontrolle des Dateimanagementservers und nicht der einzelnen Speicherdienste unterliegt kann vorteilhaft sein, da zum einen eine Registrierung der weiteren Fernwartungsnutzer bei den einzelnen Speicherdiensten nicht erforderlich ist und zum anderen die Sicherheit der gespeicherten Daten erhöht wird, da eine strikte Trennung von Nutzer- und Berechtigungsmanagement einerseits und Dateispeicherung andererseits gewährleistet werden kann.

Nach Ausführungsformen verwaltet der Dateimanagementserver ein Nutzerprofil des Fernwartungsnutzers und optional weitere Nutzerprofile weiterer Fernwartungsnutzer. Das Nutzerprofil enthält einen öffentlichen Schlüssel, der zusammen mit einem privaten Verschlüsselungsschlüssel ein asymmetrisches kryptographisches Schlüsselpaar bildet. Der besagte private Verschlüsselungsschlüssel dient zur Entschlüsselung der Metadaten der Statusdatei, da diese mit dem öffentlichen Schlüssel der berechtigten Nutzers verschlüsselt werden. Falls sich der weitere Fernwartungsnutzer, der Zugriff zu der Datei begehrt, erfolgreich gegenüber dem Dateimanagementserver authentifiziert hat und falls der weitere Nutzer die Zugriffsrechte für die Datei besitzt, sendet der Dateimanagementserver den öffentlichen Schlüssel des weiteren Nutzers an das Uploadprogramm, das die Datei ursprünglich fragmentiert und verteilt gespeichert hatte, um dem Uploadprogramm eine Verschlüsselung des symmetrischen Schlüssels, der zur Verschlüsselung der Dateifragmente verwendet wurde, mit dem öffentlichen Schlüssel zu ermöglichen. Der Dateimanagementserver empfängt die Metadaten der Datei mit dem verschlüsselten symmetrischen Schlüssel von dem Uploadprogramm und leitet diese an das Nutzer-Computersystem des Fernwartungsnutzers weiter, um dem weiteren Fernwartungsnutzer eine Entschlüsselung der Metadaten oder des symmetrischen Schlüssels innerhalb der Metadaten mit dessen privaten Schlüssel zu ermöglichen und um eine Rekonstruktion der Datei aus den entschlüsselten Dateifragmenten zu ermöglichen. Die Dateirekonstruktion kann zum Beispiel eine Entschlüsselung der verschlüsselten Dateifragmente mittels eines in den entschlüsselten Metadaten enthaltenen symmetrischen kryptographischen Schlüssels, der identisch ist mit dem Hashwert der ursprünglichen Datei, beinhalten.

Alternativ dazu kann es sein, dass eine Version der Metadaten, die für das berechtigte Nutzer-Computersystem bei dessen erster erfolgreicher Zugriffsanfrage bezüglich der Datei generiert und verschlüsselt wurde, von dem Dateimanagementserver gespeichert wurden und dort also bereits lokal vorliegen. In diesem Fall identifiziert der Dateimanagementserver diese Version der Metadaten automatisch als dem anfragenden, berechtigten Nutzer-Computersystem zugehörig und leitet sie an das Nutzer-Computersystem des weiteren berechtigten Fernwartungsnutzers weiter.

Nach Ausführungsformen ist in dem Nutzer-Computersystem des Fernwartungsnutzers ein privater kryptographischer Schlüssel geschützt gespeichert, der weder an den Dateimanagementserver noch an ein anderes Nutzer-Computersystem kommuniziert wird. Der private Schlüssel, hier auch ,privater asymmetrischer Schlüssel' genannt, bildet mit einem zugehörigen öffentlichen Schlüssel ein asymmetrisches kryptographisches Schlüsselpaar. Beispielsweise kann das Schlüsselpaar im Zuge der Installation eines Fernwartungsprogrammes auf dem Nutzer-Computersystem generiert werden und dabei dem Nutzer eindeutig zugeordnet werden. Dies kann z.B. beinhalten, dass der zugehörige öffentliche Schlüssel von dem Nutzer-Computersystem an den Dateimanagementserver übertragen und dort als Bestandteil des Nutzerprofils des Nutzers dieses Nutzer-Computersystems gespeichert wird.

In entsprechender Weise kann auch anderen Nutzer-Computersystemen jeweils ein asymmetrisches kryptographisches Schlüsselpaar zugeordnet sein.

Nach manchen Ausführungsformen verwendet und/oder generiert das Uploadprogramm, das die Datei verteilt in den Speicherdiensten speichert, einen symmetrischen Schlüssel, um die Dateifragmente der Datei vor deren Übertragung an die Speicherdienste zu verschlüsseln. Der symmetrische Schlüssel kann z.B. ein dynamisch berechneter Hashwert der zu speichernden Datei sein. Eine Verschlüsselung mittels eines symmetrischen Schlüssels kann z.B. den Effekt haben, die Performance der Verschlüsselung zu erhöhen. Der symmetrische Schlüssel wird anschließend durch das Uploadprogramm als Bestandteil der Metadaten, die zur Rekonstruktion der Datei notwendig sind, verwendet. Die Metadaten mit dem symmetrischen Schlüssel werden von dem Uploadprogramm zunächst lokal in einem Speicher des Geräts gespeichert während die verschlüsselten Dateifragmente über das Netzwerk in den Speicherdiensten gespeichert werden wie zuvor beschrieben. Kein anderes Gerät oder Nutzer-Computersystem und auch nicht der Dateimanagementserver kann auf die verteilt gespeicherte Datei zugreifen da diese nicht in Besitz der Metadaten sind. Nach manchen Ausführungsformen, in welchen die Metadaten in einer oder mehreren Versionen lokal vom Dateimanagementserver vorgehalten werden, kann der Dateimanagementserver zumindest die der Datei zu Grunde liegenden Dateifragmente nicht entschlüsseln, da die Metadaten oder zumindest der in diesen enthaltene symmetrische Schlüssel mit dem öffentlichen Schlüssel eines berechtigten Nutzer-Computersystems verschlüsselt ist und der Dateimanagementserver nicht im Besitz des entsprechenden privaten Schlüssels ist.

Der Dateimanagementserver kann einem anderen Nutzer-Computersystem, das Zugriff auf die besagte, verteilt gespeicherten Datei anfordert, durch folgende Schritte Zugriff auf die Datei ermöglichen:
- zunächst erfolgt eine Prüfung der Berechtigung des anderen Nutzer-Computersystems durch den Dateimanagementserver um festzustellen ob das andere Nutzer-Computersystem zum Zugriff auf die Datei berechtigt ist.
- Falls das andere Nutzer-Computersystem zum Zugriff berechtigt ist, wird ein öffentlicher kryptographischer Schlüssel, der dem anderen Nutzer-Computersystem zugeordnet ist, von dem Dateimanagementserver an das Nutzer-Computersystem über das Netzwerk übertragen. Der öffentliche Schlüssel des anderen Nutzer-Computersystems kann z.B. im Nutzerprofil eines anderen Nutzers, dem das andere Nutzer-Computersystem zugeordnet ist, gespeichert sein oder kann bereits vorab oder zusammen mit der Berechtigungsanfrage des anderen Nutzer-Computersystems über das Netzwerk von dem anderen Nutzer-Computersystem an den Dateimanagementserver übertragen worden sein.
- Das Uploadprogramm, das die Datei ursprünglich verteilt gespeichert hatte und die Metadaten besitzt, empfängt den öffentlichen Schlüssel des anderen Nutzer-Computersystems von dem Dateimanagementserver;
- Das Uploadprogramm verwendet den empfangenen öffentlichen Schlüssel um zumindest den symmetrischen Schlüssel, der zur Verschlüsselung der Dateifragmente verwendet wurde, zu verschlüsseln. Vorzugsweise sind die übrigen Metadaten, z.B. Informationen in welchen Speicherdiensten und Speicherdienstpfaden die Dateifragmente gespeichert sind, nicht verschlüsselt oder mit einem öffentlichen Schlüssel des Dateimanagementservers verschlüsselt; Die Metadaten enthalten also nun den symmetrischen Schlüssel in verschlüsselter Form;
- Die Metadaten mit dem verschlüsselten symmetrischen Schlüssel werden von dem Uploadprogramm an den Dateimanagementserver übermittelt;
- Der Dateimanagementserver analysiert die empfangenen Metadaten um anhand diejenigen Speicherdienste zu identifizieren, in welchen die zur Widerherstellung der Ausgansdaten notwendigen Dateifragmente gespeichert wurden;
- Der Dateimanagementserver identifiziert Berechtigungstoken zum Zugriff auf die Datenfragmete der Datei und leitet die identifizierten Berechtigungstoken an das berechtigte andere Nutzer-Computersystem. Dies kann z.B. dadurch geschehen, dass der Dateimanagementserver auf lokal gespeicherte Berechtigungstoken für die Dateifragmente der Datei zugreift. Die lokal gespeicherten Berechtigungstoken können z.B. im Zuge des Schreibens der Dateifragmente von den Speicherdiensten generiert und an den Dateimanagementserver übermittelt worden sein. Alternativ dazu können die Berechtigungstoken vom Dateimanagementserver in Antwort auf die Zugriffsanfrage des anderen Nutzer-Computersystems neu von den einzelnen Speicherdiensten angefordert und empfangen worden sein.
- Der Dateimanagementserver kann jedoch, obwohl er im Besitz der Berechtigungstoken ist, die Metadaten nicht verwenden um den Inhalt der ursprünglichen Datei zu rekonstruieren, da der symmetrische Schlüssel innerhalb der Metadaten ja mit dem öffentlichen Schlüssel des anfragenden anderen Nutzer-Computersystems verschlüsselt ist. Die Verschlüsselung des symmetrischen Schlüssels und sichere Aufbewahrung des privaten Entschlüsselungsschlüssels auf Nutzer-Computersystemseite schützt die Datei vor Zugriff durch den Dateimanagementserver;
- Der Dateimanagementserver übermittelt die Metadaten oder zumindest den verschlüsselten symmetrischen Schlüssel der Metadaten an das anfragende andere Nutzer-Computersystem; dies kann z.B. zusammen mit der Übermittlung der Berechtigungstoken zum Zugriff auf die Dateifragmente an das andere Nutzer-Computersystem oder in einer separaten Nachricht erfolgen;
- Das andere Nutzer-Computersystem empfängt die Berechtigungstoken und empfängt die Metadaten oder zumindest den verschlüsselten symmetrischen Schlüssel der Metadaten;
- Das andere Nutzer-Computersystem entschlüsselt den verschlüsselten symmetrischen Schlüssel mit Hilfe seines privaten Schlüssels, der in dem anderen Nutzer-Computersystem geschützt gespeichert ist und der zusammen mit dem öffentlichen Schlüssel, der zur Verschlüsselung des symmetrischen Schlüssels verwendet wurde, ein asymmetrisches kryptographisches Schlüsselpaar bildet;
- Das andere Nutzer-Computersystem kann wie bereits für mehrere Ausführungsformen beschrieben mittels der Berechtigungstoken die verschlüsselt gespeicherten Dateifragmente von den Speicherdiensten herunterladen und mittels der ebenfalls empfangenen Metadaten die ursprüngliche Datei rekonstruieren. Hierzu entschlüsselt das andere Nutzer-Computersystem mit seinem privaten Schlüssel den verschlüsselten symmetrischen Schlüssel und verwendet den entschlüsselten symmetrischen Schlüssel zur Entschlüsselung der verschlüsselt empfangenen Dateifragmente.

Dies kann vorteilhaft sein, da nur im Hinblick auf individuelle Dateien ermächtigte Nutzer-Computersysteme Dateifragmente entschlüsseln können. Der Dateimanagementserver oder unberechtigte Nutzer-Computersysteme haben keine Möglichkeit, auf die Inhalte einer Datei oder deren Fragmente zuzugreifen. Neben dem Nutzer-Computersystem und dem anderen Nutzer-Computersystem können noch mehrere weitere Nutzer-Computersysteme bei dem Dateimanagementserver registriert sein. In deren Speichermedien können jeweils einen privaten asymmetrischen Schlüssel so gespeichert sein, dass diese privaten Schlüssel vor dem Zugriff anderer Nutzer-Computersysteme und vor dem Zugriff des Dateimanagementservers geschützt sind. Dies kann vorteilhaft sein, da der Dateimanagementserver dadurch keine Möglichkeit bekommt, diese zur Entschlüsselung der symmetrischen Schlüssel der Metadaten, die an den Dateimanagementserver übertragen wurden, zu verwenden.

Nach Ausführungsformen verwaltet der Dateimanagementserver für jede gespeicherte Datei ein oder mehrere Versionen von Metadaten. Eine dieser Versionen enthält einen symmetrischen Schlüssel, der zur Verschlüsselung der aus der Datei generierten Dateifragmente diente, und der von einem öffentlichen Schlüssel des Geräts das die Datei verteilt speicherte, verschlüsselt ist. Eine andere der Versionen enthält im Wesentlichen die gleichen Daten, wobei allerdings der symmetrischen Schlüssel von einem öffentlichen Schlüssel eines Nutzer-Computersystems, das von dem Dateimanagementserver als zum Zugriff auf die Datei berechtigt identifiziert wurde, verschlüsselt ist.

In einem weiteren Aspekt betrifft die Erfindung ein computerlesbares Speichermedium das zur Verwendung in einem oder durch ein Gerät bestimmt ist. Das Speichermedium beinhaltet computerlesbarer Instruktionen welche bei Ausführung durch einen Prozessor den Prozessor zur Durchführung eines Verfahrens veranlassen, wobei die Instruktionen die Instruktionen eines Geräteprogramms, und eines Uploadprogramms umfassen, wobei das Verfahren beinhaltet:
- Erzeugung, durch das Geräteprogramm, einer Statusdatei, die Informationen bezüglich des Status des Gerätes beinhaltet;
- Durchführung eines Fehlerkorrekturverfahrens zur Generierung von Dateifragmenten aus der Statusdatei durch das Uploadprogramm, wobei zumindest eines der Dateifragmente Fehlerkorrekturbits beinhaltet;
- Senden, durch das Uploadprogramm, einer Berechtigungsanfrage zum Speichern der Dateifragmente in mehreren Speicherdiensten an einen Dateimanagementserver über ein Netzwerk;
- In Antwort auf das Senden der Berechtigungsanfrage, Empfang der in Antwort auf die Anfrage von den Speicherdiensten erhaltenen Berechtigungstoken von dem Dateimanagementserver durch das Uploadprogramm;
- Speicherung der generierten Dateifragmente in den Speichermedien der mehreren Speicherdienste über das Netzwerk mittels Berechtigungsnachweis durch die Berechtigungstoken unter Umgehung des Dateimanagementservers durch das Uploadprogramm;
- Speicherung von Metadaten, die die Rekonstruktion der Statusdatei aus den gespeicherten Dateifragmenten erlauben, durch das Uploadprogramm so, dass die Metadaten gegen einen Zugriff der Speicherdienste gesichert sind, und dass der Dateimanagementserver die Metadaten zur Kontrolle des Zugriffs eines Fernwartungs-Nutzers auf die Daten der Statusdatei verwenden kann.

Nach Ausführungsformen der Erfindung umfassen die Instruktionen zudem Instruktionen eines Downloadprogramms. Das Verfahren beinhaltet:
- Authentifikation des Geräts gegenüber dem Dateimanagementserver durch das Downloadprogramm;
- Nach erfolgreicher Authentifikation, automatisches Herunterladen einer Wartungsdatei von dem Dateimanagementserver durch das Downloadprogramm; und
- Automatische Verarbeitung und/oder Ausführung der heruntergeladenen Wartungsdatei durch das Downloadprogramm.

Nach Ausführungsformen umfasst das Verfahren eine Erzeugung neuer Statusdateien in Antwort auf die Verarbeitung oder das Ausführen der heruntergeladenen Wartungsdatei. Beispielsweise kann eine Hardwarefunktion des Geräts gemäß eines in der Wartungsdatei ausgeführten Kommandos ausgeführt werden, was wiederum den Zustand des Geräts ändert, was wiederum das Geräteprogramm zur Erzeugung der neuen Statusdateien veranlasst.

Weitere Ausführungsformen des Speichermediums beinhalten Instruktionen, die die hier für Ausführungsformen des Geräts oder des Verfahrens beschriebenen Schritte spezifizieren, welche von dem Geräteprogramm, dem Downloadprogramm und/oder Uploadprogramm durchgeführt werden.

In einem weiteren Aspekt betrifft die Erfindung ein computerlesbares Speichermedium mit computerlesbaren Instruktionen welche eine Dateimanagementapplikation spezifizieren und welche bei Ausführung durch einen Prozessor den Prozessor zur Durchführung eines Verfahrens veranlassen, welches diejenigen Schritte beinhaltet, welche gemäß Ausführungsformen des hier beschriebenen erfinderischen Verfahrens von dem Dateimanagementserver oder der Dateimanagement-Applikation durchgeführt werden. In einem weiteren Aspekt betrifft die Erfindung ein entsprechendes computerlesbares Verfahren.

In einem weiteren Aspekt betrifft die Erfindung ein computerlesbares Speichermedium mit computerlesbaren Instruktionen welche ein Fernwartungsprogramm spezifizieren und welche bei Ausführung durch einen Prozessor den Prozessor zur Durchführung eines Verfahrens veranlassen, welches diejenigen Schritte beinhaltet, welche gemäß Ausführungsformen des hier beschriebenen erfinderischen Verfahrens von dem Nutzer-Computersystem oder dem Fernwartungsprogramm durchgeführt werden. In einem weiteren Aspekt betrifft die Erfindung ein entsprechendes computerlesbares Verfahren.

In einem weiteren Aspekt betrifft die Erfindung ein Gerät umfassend eine Schnittstelle zur operativen Kopplung des Geräts an eine Vielzahl von Speicherdiensten und an einen Dateimanagementserver über ein Netzwerk. Das Gerät beinhaltet einen Gerätespeicher mit einem von dem Prozessor ausführbaren Geräteprogramm zur Steuerung zumindest einer Hardwarefunktion des Gerätes. Das Gerät beinhaltet ferner ein Uploadprogramm. Das Geräteprogramm und das Uploadprogramm sind zur Ausführung folgenden Verfahrens konfiguriert:
- Erzeugung, durch das Geräteprogramm, eine Statusdatei, die Informationen bezüglich des Status des Gerätes beinhaltet; die Erzeugung kann zum Beispiel automatisch oder in Antwort auf eine Nutzerinteraktion erfolgen. Die Statusdatei kann zum Beispiel aktuelle und/oder bisherige und/oder für die Zukunft automatisch vorhergesagte Statusinformationen beinhalten; die Statusdatei kann zum Beispiel eine Konfigurationsdatei des Geräts sein und/oder ein automatisch von dem Geräteprogramm erzeugtes Protokoll oder Fehlerprotokoll;

- Durchführung eines Fehlerkorrekturverfahrens zur Generierung von Dateifragmenten aus der Statusdatei durch das Uploadprogramm, wobei zumindest eines der Dateifragmente Fehlerkorrekturbits beinhaltet;
- Senden, durch das Uploadprogramm, einer Berechtigungsanfrage zum Speichern der Dateifragmente in mehreren Speicherdiensten an den Dateimanagementserver über ein Netzwerk;
- In Antwort auf das Senden der Berechtigungsanfrage, Empfang von Berechtigungstoken, die von jedem der mehreren Speicherdienste in Antwort auf eine Anforderung durch den Dateimanagementserver erzeugt und an den Dateimanagementserver gesendet wurden, durch das Uploadprogramm von dem Dateimanagementserver; und
- Speicherung der generierten Dateifragmente in den Speichermedien der mehreren Speicherdienste über das Netzwerk mittels Berechtigungsnachweis durch die Berechtigungstoken unter Umgehung des Dateimanagementservers durch das Uploadprogramm;
- Optional Speicherung von Metadaten, die die Rekonstruktion der Statusdatei aus den gespeicherten Dateifragmenten erlauben, durch das Uploadprogramm so, dass die Metadaten gegen einen Zugriff der Speicherdienste gesichert sind.

Nach Ausführungsformen ist Gerät ausgewählt ist aus einer Gruppe umfassend:
- ein medizinisches Gerät, insbesondere ein bildgebendes Gerät, insbesondere ein MRT Gerät;
- eine Maschine die zur Herstellung eines Erzeugnisses verwendet wird;
- eine chemische Syntheseeinheit;
- eine chemische oder medizinische oder physikalische Analyseeinheit;
- ein Fahrzeug oder Fahrzeugkomponente;
- eine Gebäudekomponente;
- eine Transportkomponente;
- eine Belüftungskomponente;
- eine Klimatisierungskomponente;
- ein Bioreaktor;
- ein Gerät zur Gewinnung, Umwandlung, Weiterleitung oder Speicherung elektrischer oder chemischer Energie.

In einem weiteren Aspekt betrifft die Erfindung einen Dateimanagementserver umfassend einen Prozessor, ein Geräteregister mit Geräte-IDs einer Vielzahl von bei dem Dateimanagementserver registrierten Geräten. Der Dateimanagementserver beinhaltet eine Netzwerkschnittstelle zur operativen Kopplung des Dateimanagementservers mit zumindest einem Nutzer-Computersystem eines Fernwartungsnutzers und zur operativen Kopplung an ein oder mehrere Geräte und zur operativen Kopplung an eine Vielzahl von Speicherdiensten über ein Netzwerk. Der Dateimanagementserver beinhaltet ein Speichermedium mit einer von dem Prozessor ausführbaren Dateimanagement-Applikation, wobei die Dateimanagement-Applikation zur Ausführung folgenden Verfahrens zur Speicherung einer Datei konfiguriert ist:
- Empfang einer Berechtigungsanfrage von dem zumindest einen Gerät zum Speichern von Dateifragmenten einer von dem Gerät erstellten Statusdatei über das Netzwerk in mehreren der Speicherdienste, wobei der Dateimanagementserver keinen Speicherdienst bereitstellt; und
- In Antwort auf den Empfang der Berechtigungsanfrage, Anforderung eines Berechtigungstokens von jedem der mehreren Speicherdienste und Weiterleitung der in Antwort auf die Anforderung erhaltenen Berechtigungstoken an das Gerät; und
- Verwendung von Metadaten, die die Rekonstruktion der Statusdatei aus den gespeicherten Dateifragmenten erlauben, zur Kontrolle des Zugriffs des Fernwartungs-Nutzers auf die Daten der Statusdatei, wobei die Metadaten gegen einen Zugriff der Speicherdienste gesichert sind.

Nach Ausführungsformen ist das Uploadprogramm mit einer DateimanagementApplikation des Dateimanagementservers interoperabel. Das Uploadprogramm kann Programlogik beinhalten, in welcher die Schritte des Verfahrens nach einer der vorgenannten Ausführungsformen codiert sind, die für das Erzeugen der Dateifragmente aus der Statusdatei, das Anfordern der Berechtigungstoken über den Dateimanagementserver von den Speicherdiensten und das verteilte Speichern der Dateifragmente in den Speicherdiensten benötigt werden. Hierzu können optional auch Schritte wie eine Authentifizierung des Geräts gegenüber dem Dateimanagementserver, die Verschlüsselung der Fragmente und/oder eine Authentifizierung des Dateimanagementservers gegenüber dem Gerät gehören. Die Dateimanagement-Applikation kann Programlogik beinhalten, in welcher die von dem Dateimanagementserver ausgeführten Schritte des Verfahrens nach einer der vorgenannten Ausführungsformen codiert sind.

Nach Ausführungsformen ist auf jedem der Nutzer-Computersysteme von ein oder mehreren Fernwartungsnutzern eine Client-Applikation installiert, die hier als "Fernwartungssoftware" oder "Fernwartungsprogramm" bezeichnet wird, und welche es dem Fernwartungsnutzer erlaubt, über eine GUI Wartungsdateien zu definieren und/oder Statusdateien zu betrachten und auszuwerten. Optional kann die Fernwartungssoftware automatisch auf Basis von Statusdateien auch eine oder mehrere Wartungsdateien für ein Bestimmtes Gerät automatisch oder semiautomatisch in Interoperation mit dem Fernwartungsnutzer erstellen.

Nach Ausführungsformen ist die Fernwartungssoftware mit einer Dateimanagement-Applikation des Dateimanagementservers interoperabel. Die Fernwartungssoftware kann Programlogik beinhalten, in welcher die von dem Nutzer-Computersystem ausgeführten Schritte des Verfahrens nach einer der vorgenannten Ausführungsformen codiert sind.

Unter einem "**Gerät**" wird hier ein Gegenstand verstanden, mit dessen Hilfe etwas bearbeitet, bewirkt oder hergestellt wird. Ein Gerät kann insbesondere ein elektronisches Gerät sein, also ein Gerät mit elektronischen Bauteilen. Ein Gerät kann z.B. ein Fahrzeug sein, ein Werkzeug, eine Maschine, aber auch eine Komponente bzw. Bauteil eines größeren Gerätes bzw. einer Maschine. Unter einer "Maschine" wird hier ein Gerät mit mindestens einem durch ein Antriebssystem bewegten Teil verstanden.

Unter "**Hardware**" wird hier ein Oberbegriff für die physischen Komponenten (die elektronischen und mechanischen Bestandteile) eines Gerätes verstanden, welches zusätzlich noch ein oder mehrere weitere Bestandteile, nämlich Programme und Daten, beinhaltet. Die Programme werden auch als "Software" bezeichnet und können Firmware und/oder Anwendungssoftware umfassen.

Unter einer "**Hardwarefunktion**" des Gerätes wird hier eine Funktion verstanden, deren Ausführung durch eine Hardwarekomponente bewirkt oder zumindest mitbewirkt wird.

Unter "**Firmware**" wird hier Software verstanden, die in elektronischen Geräten eingebettet ist. Typischerweise erfolgt die Einbettung durch den Hersteller, das heißt, das Gerät wird mit der Firmware als integraler Bestandteil ausgeliefert. Die Firmware ist oft in einem Flash-Speicher, einem EPROM, EEPROM oder ROM gespeichert und durch den Anwender nicht oder nur mit speziellen Mitteln bzw. Funktionen austauschbar. Die Firmware eines Geräts ist in der Regel funktional fest mit der Hardware verbunden, was bedeutet, dass das eine ohne das andere nicht nutzbar ist. Sie nimmt eine Zwischenstellung zwischen Hardware (also den physikalischen Anteilen eines Gerätes) und der Anwendungssoftware (den ggf. austauschbaren Programmen eines Gerätes) ein. Als Firmware bezeichnet man z.B. auch die Betriebssoftware diverser Geräte oder Komponenten als auch die grundlegende Software, die notwendig ist, um den Betriebssystemkern des eigentlichen Betriebssystems laden und betreiben zu können. Firmware wird beispielsweise verwendet in Fernsehgeräten, Haushaltsgeräten, Digitalkameras, Steuergeräten (z. B. ABS, ESP, ACC, Airbags, Motorsteuerung, Tacho, Radio, Klimaanlage, Einparkhilfe oder Fensterheber).

Unter einem "**Geräteprogramm**"" wird hier eine Software, z.B. eine Firmware oder eine Anwendungssoftware, verstanden, welche mindestens eine Hardwarefunktionalität des Geräts steuert und/oder in Abhängigkeit von gerätebezogenen Statusinformationen, die diese Hardwarefunktion bereitstellt, eine Aktion auszuführen. Die Aktion kann z.B. darin bestehen, eine Statusdatei zu erstellen und optional auf einem Geräte-Datenspeicher zu speichern.

Unter einem "**Uploadprogramm**" wird hier eine Software, die als Firmware oder Anwendungssoftware implementiert sein kann, verstanden, die dazu konfiguriert ist,

Daten über eine Netzwerkverbindung auf einen oder mehrere Zielrechner hochzuladen.

Unter einem "**Downloadprogramm**" wird hier eine Software, die als Firmware oder Anwendungssoftware implementiert sein kann, verstanden, die dazu konfiguriert ist, Daten über eine Netzwerkverbindung von einem oder mehreren über das Netzwerk verbundenen Datenspeichern in einen lokalen Geräte-Datenspeicher des Geräts herunterzuladen.

Ein **"Verteilungsplan"** im Sinne der vorliegenden Erfindung ist eine Spezifikation, welche zumindest Angaben über die Identität derjenigen Speicherdienste enthält, über welche Fragmente einer Datei (z.B. Statusdatei) gespeichert werden sollen sowie Angaben enthält, die einen Fehlerkorrekturverfahren festlegen, welches zur Generierung dieser Dateifragmente aus der besagten Datei verwendet werden soll. Ein Verteilungsplan kann z.B. als XML Datei oder binäre Datei ausgebildet sein.

Ein **"Dateimanagementserver"** ist ein Computersystem, welches eine Schnittstelle zur Kommunikation mit ein oder mehreren Geräten und zur Kommunikation mit mehreren Speicherdiensten besitzt um den ein oder mehreren Geräten Zugriffsrechte auf von diesen Speicherdiensten verwaltete Speichermedien zu vermitteln. Der Dateimanagementserver stellt dabei selbst keinen Speicherdienst bereit und ist vorzugsweise auch von den Speicherdiensten durch sicherheitstechnische Maßnahmen getrennt, welche dafür sorgen, dass keiner dieser Speicherdienste Zugriff auf von dem Dateimanagementserver verwaltete Daten, insbesondere z.B. Geräteregister, Nutzerprofile und/oder Metadaten, hat. Der Dateimanagementserver kann aus einem Datenverarbeitungsgerät bestehen oder aus mehreren Datenverarbeitungsgeräten, insbesondere Computern, bestehen, die zusammenwirken und gemeinsam verwaltet werden um die Funktionalität des Dateimanagementservers gemäß den oben beschriebenen Ausführungsformen bereitzustellen.

Ein **"Berechtigungstoken"** ist eine Datenstruktur, z.B. eine Datei oder eine URL, welche Informationen beinhaltet, die einer Instanz, die im Besitz dieses Berechtigungstokens ist, eine Berechtigung zum Zugriff auf Speicherbereiche externer Speichermedien einräumt. Die externen Speichermedien können z.B. von einem Speicherdienst über ein Netzwerk wie z.B. das Internet bereitgestellt werden. Nach Ausführungsformen kann das Berechtigungstoken sowohl einen Zeiger als auch einen Berechtigungsausweis enthalten. Der Zeiger kann z.B. aus einer Kombination aus einer IP Adresse eines Speicherdienstes und eines Dateipfades eines von diesem Speicherdienst verwalteten Speichermediums bestehen. Der Berechtigungsausweis kann z.B. ein oder mehrere Datenwerte beinhalten, die den Besitzer des Berechtigungstokens als zugriffsberechtigt ausweisen, z.B. einen von dem Speicherdienst generierten Zufallswert der mit einem Referenzwert verglichen werden kann. Die besagten Datenwerte können auch eine Signatur umfassen.

Ein **"Speicherdienst"** ist ein über ein Netzwert bereitgestellter Dienst, der es ein oder mehreren Geräten ermöglicht, Daten über das Netzwerk an den Dienst zu senden damit diese von dem Speicherdienst auf ein oder mehreren von dem Speicherdienst verwalteten Speichermedien gespeichert werden, und/oder der es den Geräten und/oder Nutzer-Computersystemen von einem oder mehreren Fernwartungsnutzern ermöglicht, auf bereits von diesem oder einem anderen Geräten gespeicherte Daten über das Netzwerk - z.B. lesend oder schreibend - zuzugreifen. Ein einzelner Speicherdienst ist dabei von jedem anderen Speicherdienst vorzugsweise technisch und organisatorisch getrennt, sodass jeder Speicherdienst nur Zugriff auf die von ihm selbst verwalteten Speichermedien und den darin gespeicherten Daten besitzt, nicht auf die Speichermedien anderer Speicherdienste. Nach Ausführungsformen ist jeder der Speicherdienste dazu konfiguriert, über eine Schnittstelle Daten von dem Gerät über das Netzwerk zu empfangen und diese in seinem nicht flüchtigen Speichermedium zu speichern, sofern das Gerät die zur Speicherung nötigen Berechtigungstoken vorweisen kann.

Unter einem **"serverseitigen Speicherbereich"** wird hier ein Speicherbereich auf einem logischen oder physischem Datenspeicher verstanden, wobei die Zugriffsberechtigung zum Lesen und/oder Schreiben von Daten von oder in diesen Speicherbereich von einem Server, insbesondere einem Dateimanagementserver, verwaltet wird. Bei den serverseitigen Speicherbereich kann es sich also zum Beispiel um eine Festplatte des Dateimanagementservers handeln oder es kann sich um eine Vielzahl an Speicherbereichen von Datenspeichern handeln, die in verschiedenen über ein Netzwerk mit dem Dateimanagementserver verbundenen Computersystemen vorhanden sind. Beispielsweise kann es sich bei den Datenspeichern um Datenspeicher von Speicherdiensten handeln. In manchen Ausführungsformen kann es sich bei den Speicherdiensten um die gleichen Speicherdienste handeln, die zur verteilten Speicherung der Dateifragmente der Statusdatei verwendet werden.

Unter einem "**Nutzer-Computersystem**" wird im Folgenden ein Datenverarbeitungssystem, z.B. ein Desktop-PC, ein Notebook oder ein Smartphone verstanden, welches einem Nutzer, hier auch als Fernwartungsnutzer bezeichnet, zugeordnet ist.

Fernwartung, Remote-Service oder Teleservice bedeutet aus der Ferne auf eine Gegenstelle zuzugreifen. Die Gegenstelle befindet sich oftmals innerhalb eines geschlossenen System, z.B. innerhalb eines geschützten Firmen-Intranets. Mittels Fernwartung wird aus der Ferne auf die Gegenstelle zugegriffen um diese überwachen und/oder bedienen zu können. Dadurch können Reisekosten vermieden und die Wartung effizienter gestaltet werden.

Eine "**Sicht**" ist eine dynamisch generierte visuelle Repräsentation von Daten, insbesondere von ein oder mehreren Dateien. Nach Ausführungsformen beinhaltet die Sicht eine Liste oder sonstige Anordnung von mehreren Dateien, wobei jede Datei unter ihrem ursprünglichen Dateinamen, optional ergänzt durch weitere dateibezogene Daten wie etwa Dateigröße, Datum der letzten Änderung, Dateityp etc., in der Sicht angezeigt wird. Die dynamisch generierte visuelle Repräsentation kann auf einem komplexen Datenverarbeitungsprozess z.B. von Metadaten mehrerer Dateien beruhen, die eine automatische Entschlüsselung und Verarbeitung von Metadaten mehrerer verteilt gespeicherter Dateien umfasst.

Unter einem "**Vertrauensniveau**" wird im Folgenden eine Menge von ein oder mehreren Parameterwerten verstanden, welche einen Grad der Vertrauenswürdigkeit in Bezug darauf angibt, ob ein Fernwartungsnutzer, der sich mit einem ihm zugeordneten Nutzer-Computersystem gegenüber dem Dateimanagementserver authentifiziert hat, auch tatsächlich derjenige ist, der er durch Bereitstellung seiner Authentifizierungsdaten vorgibt zu sein.

Ein "**Fehlerkorrekturbit**" oder "**Paritätsbit**" ist ein Bit, welches zusätzlich zu ein oder mehreren Bits der eigentlichen Nutzdaten generiert und ggf. an einen Empfänger übertragen wird, und welches zur Kontrolle der Integrität der besagten ein oder mehreren Bits der Nutzdaten während der Übertragung an den Empfänger dient.

Ein "**Fehlerkorrekturverfahren**" ist ein Verfahren, welches dazu dient, Fehler bei der Speicherung und Übertragung von Daten zu erkennen und zu korrigieren, wobei ein Fehler auch darin bestehen kann, dass Teile einer logisch zusammenhängenden Datenmenge (z.B. eine Datei) temporär oder dauerhaft nicht verfügbar sind, z.B. wegen Ausfalls eines Speichermediums, das diese Teile gespeichert hatte. Um dies zu erreichen fügen Fehlerkorrekturverfahren vor der Speicherung oder Übertragung von Nutzdaten diesen Nutzdaten zusätzliche Redundanz in Form zusätzlicher Fehlerkorrekturbits hinzu, die zur Bestimmung von Fehlern und Fehlerpositionen und auch zur Rekonstruktion fehlender Teile der Nutzdaten genutzt werden können.

Unter einer "Firewall" wird hier ein Sicherungssystem, das ein Gerät oder eine IT-Infrastruktur innerhalb welcher das Gerät betrieben wird vor unerwünschten Netzwerkzugriffen schützt. Die Firewall beschränkt Netzwerkzugriff um zu gewährleisten, dass nur mit vertrauenswürdigen Kommunikationspartnern und/oder über vertrauenswürdige Protokolle Daten über das Netzwerk, z.B. das Internet, ausgetauscht werden können. Sie überwacht den durch die Firewall laufenden Datenverkehr und entscheidet anhand festgelegter Regeln, ob bestimmte Netzwerkpakete durchgelassen werden oder nicht. Auf diese Weise versucht sie, unerlaubte Netzwerkzugriffe zu unterbinden. Die Firewall kann in dem Gerät installiert sein oder in einer Komponente der IT-Infrastruktur innerhalb welcher das Gerät betrieben wird.

Im Weiteren werden Ausführungsformen der Erfindung mit Bezugnahme auf die Zeichnungen näher erläutert. Es zeigen:
- Figur 1: zeigt ein Flussdiagramm eines Verfahrens zur Fernwartung eines Geräts;
- Figur 2: zeigt ein Blockdiagramm eines Systems mit einem Nutzer-Computersystem eines Fernwartungsnutzers, einem Dateimanagementserver und einem aus der Ferne gewarteten Gerät;
- Figur 3: ein Blockdiagramm des Uploadprogramms des Geräts;
- Figur 4: ein Blockdiagramm des Downloadprogramms des Geräts;
- Figur 5: ein Blockdiagramm eines verteilten Systems zur Gerätefernwartung mit mehreren kryptographischen Schlüsseln;
- Figur 6: ein Blockdiagramm eines Dateimanagementservers;
- Figur 7: ein Blockdiagramm eines Dateimanagementservers mit serverseitigen Speicherbereichen; und
- Figur 8: ein Ablaufdiagramm zum Upload einer Statusdatei durch ein Gerät; und
- Figur 9: ein Ablaufdiagramm zum Herunterladen der Statusdatei durch einen Fernwartungsnutzer.

Elemente der nachfolgenden Ausführungsformen, die einander entsprechen, werden mit denselben Bezugszeichen gekennzeichnet.

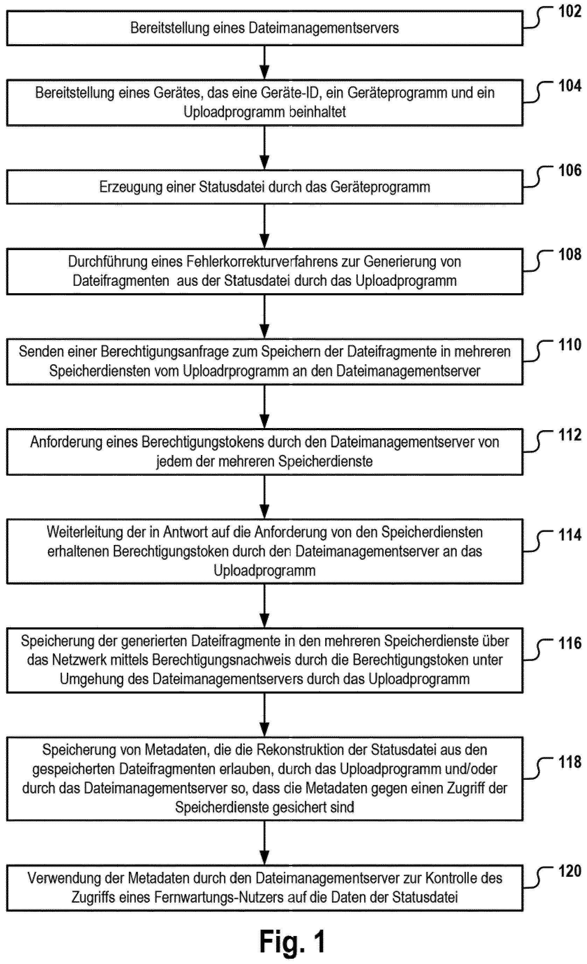

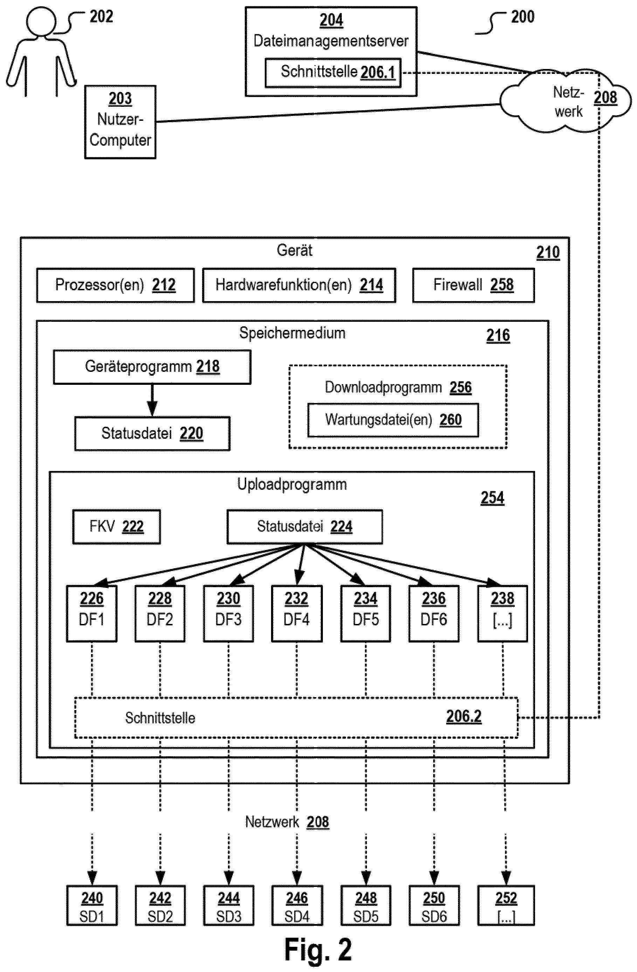

**Figur 1** zeigt ein Flussdiagramm eines Verfahrens zur Fernwartung eines Geräts, welches die Erzeugung und verteilte Speicherung einer Statusdatei durch das Gerät umfasst. Das Verfahren wird unter Bezugnahme auf das in **Figur 2** gezeigte verteilte System beschrieben.

Das in Figur 2 gezeigte verteilte System 200 kann zum Beispiel dazu verwendet werden, ein oder mehrere Geräte 210, zum Beispiel komplexe medizinische Geräte wie zum Beispiel ein NMR Gerät, von einem Fernwartungsnutzer 202 aus der Ferne über ein Netzwerk 208, zum Beispiel das Internet, warten zu lassen.

Hierzu wird in Schritt 102 ein Dateimanagementserver 204 bereitgestellt. Ausführungsformen des Dateimanagementservers sind beispielsweise im Hinblick auf Figur sechs näher beschrieben. Bei dem Dateimanagementserver handelt es sich um ein Computersystem mit einer speziellen Software (Dateimanagement-Applikation), die zumindest mit einem Uploadprogramm des zu wartenden Geräts 210 interoperabel ist.

Außerdem wird in Schritt 104 das zu wartende Gerät 210 oder eine Mehrzahl von zu wartenden Geräten bereitgestellt. Jedes der zu wartenden Geräte enthält ein oder mehrere Hardwarefunktionen 214. Im Falle des NMR Gerätes kann eine Hardwarefunktion zum Beispiel in einer automatisch bewegbaren Liegefläche für Patienten bestehen oder in einer Betätigung eines Stellmechanismus zur Variation des Hauptmagnetfeldes. Es kann sich bei dem Gerät aber auch einen chemischen Syntheseapparat zur Herstellung einer bestimmten Substanz unter bestimmten Druck- und Temperaturbedingungen handeln. Die Hardwarefunktionen können in diesem Fall beispielsweise in einem Heiz- oder Kühlelement bestehen, die die Temperatur in dem Reaktionsvolumen ändern, und/oder in automatisch bedienen waren oder bewegbaren Behältnissen, die chemische Substanzen beinhalten, die in variabler und durch die Hardwarefunktionen steuerbare Menge in das Reaktionsvolumen gegeben werden können.

Das Gerät beinhaltet ein Geräteprogramm 218 und ein oder mehrere Prozessoren 212, die das Geräteprogramm ausführen können. Das Geräteprogramm kann zum Beispiel aus einer Firmware bestehen, die schon bei der Herstellung des Geräts in das Gerät integriert wurde.

Das Geräteprogramm 218 erzeugt kontinuierlich oder in regelmäßigen Abständen oder zumindest nachdem ein kritischen Gerätezustand eingetreten ist oder voraussichtlich eintreten wird, in Schritt 106 ein oder mehrere Statusdateien 220. Die Statusdateien spezifizieren den aktuellen, vergangenen und/oder künftigen Status des Gerätes oder von Komponenten des Gerätes.

Außerdem beinhaltet das Gerät ein Uploadprogramm 254. Das Uploadprogramm kann auch bereits vom Hersteller in das Gerät integriert werden oder nachträglich, zum Beispiel beim Kunden, in dem Gerät installiert oder anderweitig instanziiert werden. Schritt 104 kann auch vor Schritt 102 ausgeführt werden. Durch das installieren des Uploadprogramms ist es möglich, dass ein Fernwartungsnutzer, der nicht vor Ort sein muss, also viele 100 km von dem Gerät entfernt sein kann, Zugriff auf wichtige Statusinformationen des Gerätes erhält, und so den Anwendern des Gerätes vor Ort Anweisungen geben kann, wie das Gerät bedient werden muss, um bestimmte Probleme zu vermeiden oder zu beheben. Diese Anweisungen können zum Beispiel per E-Mail oder telefonisch gegeben werden. Vorzugsweise werden aber auch diese Anweisungen automatisch an das Gerät übermittelt und dort durchgeführt. Hierfür ist es erforderlich, dass auf dem Gerät ein Downloadprogramm installiert ist, auf welches an späterer Stelle eingegangen wird.

Das Uploadprogramm 254 ist über eine Schnittstelle 206 mit der Dateimanagementsoftware des Dateimanagementservers 204 interoperabel.

Dem Fernwartungsnutzer 202 ist ein Nutzer-Computersystem 203 zugeordnet. Bei dem Nutzer-Computersystem kann es sich beispielsweise um einen Desktop-Computer, ein Notebook, ein Tablett-Computer, ein Smartphone oder ein beliebiges anderes Endgerät handeln. Gemäß bevorzugten Ausführungsformen hat sich der Nutzer 202 bei dem Dateimanagementserver 204 registriert, sodass in einem Nutzer-Register des Dateimanagementservers nutzerbezogene Daten, zum Beispiel Referenzdaten zur Authentifizierung des Nutzers gegenüber dem Dateimanagementserver und optional auch kryptographische Schlüssel des Nutzers, gespeichert sind.

Das Uploadprogramm ist dazu konfiguriert, die ein oder mehreren Statusdateien 224 von dem Geräteprogramm 218 zu empfangen. Beispielsweise kann das Uploadprogramm regelmäßig alle Dateien, die von dem Geräteprogramm 218 in einem bestimmten Bereich des Speichermediums 216 des Geräts gespeichert wurden, auslesen.

Das Uploadprogramm führt sodann in Schritt 108 ein Fehlerkorrekturverfahren 222 durch. Hierbei werden aus der Statusdatei 224 eine Vielzahl 226-238 an Dateifragmenten erzeugt. Mindestens eines der Dateifragmente, typischerweise die meisten oder alle der Dateifragmente, enthalten Fehlerkorrekturbits.

Das Uploadprogramm sendet in Schritt 110 eine Berechtigungsanfrage zum Speichern der Dateifragmente in mehreren Speicherdiensten 240-252 an den Dateimanagementserver über das Netzwerk 208. die Anfrage kann über die Schnittstelle 206.2 an die entsprechende Schnittstelle 206.1 des Dateimanagementservers gesendet werden. Bei der Schnittstelle 206 kann es sich zum Beispiel um ein sogenanntes Application-Interface (API) handeln.

In Antwort auf den Empfang der Berechtigungsanfrage fordert in Schritt 112 der Dateimanagementserver ein Berechtigungstoken von jedem der mehreren Speicherdienste für das Hochladen von Dateifragmenten durch das Gerät 210 an. Beispielsweise kann diese Berechtigungsanfrage ein oder mehrere Kennungen des Geräts und/oder ein oder mehrere Kennungen des Dateimanagementservers beinhalten, wobei die Kennungen von jedem der Speicherdienste ausgewertet werden um zu entscheiden, ob Schreibzugriff in Antwort auf die Berechtigungsanfrage gewährt werden soll.

Der Dateimanagementserver erhält in Antwort auf die Anforderung von jedem der Speicherdienste ein Berechtigungstoken. In dem Berechtigungstoken ist das Recht zum Schreiben von Daten auf einen von einem bestimmten Speicherdienst verwalteten Speicherbereich spezifiziert.

In Schritt 114 leitet der Dateimanagementserver die erhaltenen Berechtigungstoken an das Uploadprogramm weiter.

Das Uploadprogramm empfängt die Berechtigungstoken von dem Dateimanagementserver über die Schnittstelle 206 und verwendet diese, um in Schritt 116 die erzeugten Dateifragmente über das Netzwerk unter Umgehung des Dateimanagementservers zu den mehreren Speicherdiensten 240-252 hochzuladen und dort zu speichern.

Im Zuge der Erzeugung der Dateifragmente hat das Uploadprogramm außerdem Metadaten erzeugt, welche die Rekonstruktion der Statusdatei aus den gespeicherten Dateifragmenten erlauben. Diese Metadaten werden von dem Uploadprogramm an den Dateimanagementserver übertragen und in Schritt 118 so gespeichert, dass die Metadaten gegenüber einen Zugriff der Speicherdienste geschützt sind.

Der Dateimanagementserver verwendet die Metadaten in Schritt 120 zur Kontrolle des Zugriffs eines Fernwartungs-Nutzers auf die Daten der Statusdatei. Beispielsweise werden die Metadaten nur denjenigen Fernwartungsnutzern zur Verfügung gestellt, die sich zuvor als zum Dateizugriff berechtigt gegenüber dem Dateimanagementserver authentifiziert und ausgewiesen haben. Es ist auch möglich, dass die Metadaten speziell für einen berechtigten Fernwartungsnutzer erstellt werden, nachdem diese sich authentifiziert haben. Die speziell für einen Fernwartungsnutzer erzeugten Metadaten können zum Beispiel mit einem öffentlichen Schlüssel des Nutzers verschlüsselt sein.

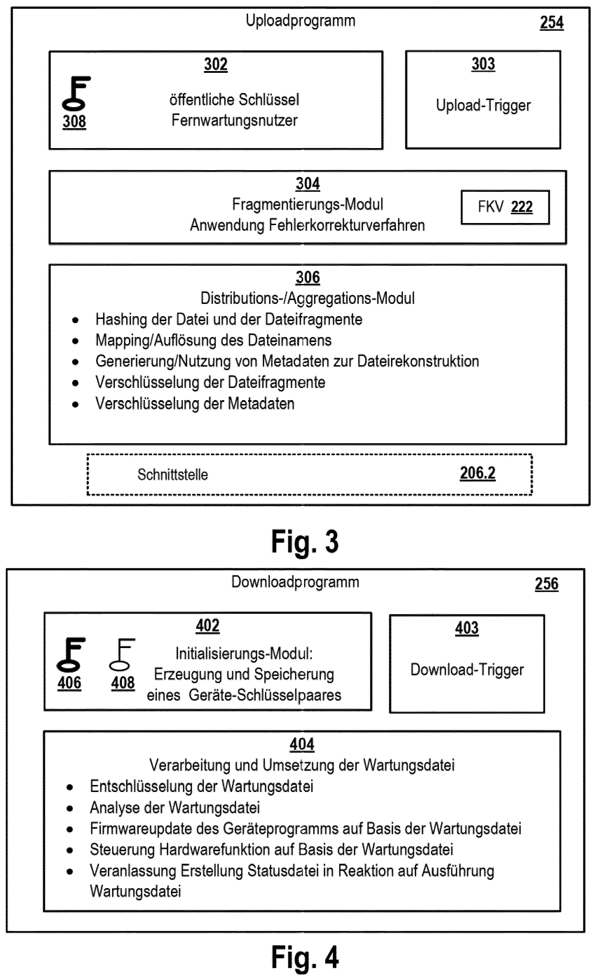

**Figur 3** zeigt ein Blockdiagramm des Uploadprogramms 254 des Geräts 210. Das Uploadprogramm kann zum Beispiel je nach Ausführungsform mehrere unterschiedliche Module und Funktionen beinhalten.

Beispielsweise enthält das Uploadprogramm 254 ein Modul 304 das dazu ausgebildet ist, mittels eines Fehlerkorrekturverfahrens 222 eine Vielzahl von Dateifragmenten 226-238 aus einer Statusdatei 224 zu erzeugen.

Außerdem kann das Uploadprogramm ein Modul 306 beinhalten, welches verschiedene Schritte vor und nach der Erzeugung der Dateifragmente ausführt. Beispielsweise kann das Modul ein Hashing der Statusdatei und/oder der Dateifragmente durchführen, um einen symmetrischen Schlüssel für die Statusdatei bzw. die Dateifragmente zu erzeugen, welcher individuell für diese Datei bzw. für jedes der Dateifragmente ist. Das Modul 306 kann Funktionen zum Auflösen bzw. Mapping eines Dateinamens der Statusdatei zu Kennungen bzw. automatisch generierten Namen für jedes der mehreren Dateifragmente beinhalten. Außerdem kann das Modul 306 Funktionen zur Verschlüsselung oder Entschlüsselung von Dateifragmenten und Metadaten beinhalten.

Das Modul 306 beinhaltet mehrere Funktionalitäten, die zur verteilten und sicheren Speicherung der von Modul 304 generierten Dateifragmente in den in dem Verteilungsplan spezifizierten Speicherdiensten dienen. Das Modul 306 kann zum Beispiel einen Hashwert der Statusdatei berechnen und diesen als symmetrischen Schlüssel zur schnellen Verschlüsselung jedes der Dateifragmente der Statusdatei verwenden. Außerdem kann ein Hashwert jedes der generierten Dateifragmente berechnet werden, die als Identifikatoren der Dateifragmente dienen und die dem ursprünglichen Dateinamen der Datei mittels eines "Mappings" zugeordnet werden. Die besagten Hashwerte, der private Schlüssel und das Mapping können als Metadaten dienen um eine Rekonstruktion der Statusdatei bzw. einer Kopie der Statusdatei aus den Dateifragmenten zu ermöglichen. Außerdem können die Metadaten Identifikatoren und Pfade der Speicherdienste beinhalten, in welchen die Dateifragmente gespeichert wurden.

Die von dem Uploadprogramm erzeugten Metadaten der Statusdatei werden gemäß Ausführungsformen zumindest teilweise durch einen öffentlichen Schlüssel 308, der dem Gerät 210 spezifisch zugeordnet ist, verschlüsselt und in verschlüsselter Form an den Dateimanagementserver über das Netzwerk übertragen. Alternativ dazu werden die Metadaten zumindest teilweise durch einen öffentlichen Schlüssel eines Fernwartungsnutzers, der sich gegenüber dem Dateimanagementserver erfolgreich als zum Lesen der Statusdatei berechtigt ausgewiesen hat, verschlüsselt. Da der Fernwartungsnutzer über den dazu korrespondierenden privaten Schlüssel verfügt, kann er die Metadaten entschlüsseln und zur Rekonstruktion der Statusdatei verwenden. Falls das Nutzer-Computersystem des Fernwartungsnutzers zu einem späteren Zeitpunkt auf die verteilt gespeicherte Datei zugreifen soll, kann es die Metadaten von dem Dateimanagementserver empfangen und den verschlüsselten symmetrischen Schlüssel, der in den Metadaten enthalten ist, mittels seines privaten Schlüssels entschlüsseln.

Gemäß Ausführungsformen der Erfindung beinhaltet das Uploadprogramm ein Modul 302, das den öffentlichen Schlüssel 308 eines zum Zugriff auf die verteilt gespeicherte Statusdatei berechtigten Fernwartungsnutzers gespeichert hat. Der öffentliche Schlüssel wird von dem Modul 306 verwendet um die Metadaten, die an den Fernwartungsnutzer übermittelt werden sollen, mit dessen öffentlichen Schlüssel 308 zu verschlüsseln. Das Modul 302 erlaubt also die sichere Verwaltung von öffentlichen Schlüsseln von ein oder mehreren Fernwartungsnutzern. Dieses Modul ist jedoch optional, da die Verschlüsselung der Metadaten, z.B. eines dateispezifischen symmetrischen Schlüssels, auch vom Dateimanagementserver durchgeführt werden kann.

Das Uploadprogramm kann ein Triggermodul 303 beinhalten, dass dazu konfiguriert ist, in regelmäßigen Abständen, zum Beispiel einmal in der Sekunde, den Geräte-Datenspeicher darauf hin zu analysieren, ob eine neue Statusdatei in diesem gespeichert wurde. Falls dies der Fall ist, initiiert das Modul 303 eine verteilte Speicherung der neuen Statusdatei wie für Ausführungsformen der Erfindung beschrieben.

**Figur 4** ein Blockdiagramm des Downloadprogramms 256 des Geräts 210. Gemäß Ausführungsformen der Erfindung beinhaltet das Downloadprogramm ein Initialisierungsmodul 402, das zum Beispiel im Zuge der Installation des Downloadprogramms auf dem Gerät 210 das asymmetrische kryptographische Schlüsselpaar 406, 408 spezifisch für das Gerät 210 erzeugt und den öffentlichen Schlüssel 406 über die Schnittstelle 206.2 an die Dateiverwaltungs-Applikation (auch Dateimanagement-Applikation genannt) des Dateimanagementservers übermittelt. Das Modul 402 erlaubt also die Erzeugung und sichere Verwaltung der öffentlichen und privaten Schlüssel 406, 408 des Geräts. Der Dateimanagementserver kann dazu ausgebildet sein, den öffentlichen Schlüssel 406 einem Fernwartungsnutzer 202 zur Verfügung zu stellen, um diesem zu ermöglichen, eine auf dem Nutzer-Computersystem des Fernwartungsnutzers erzeugte Wartungsdatei mit dem öffentlichen Schlüssel 406 zu verschlüsseln, bevor die verschlüsselte Wartungsdatei auf den Speicherbereich des serverseitigen Speichers hochgeladen wird, der dem Gerät 210 zugewiesen ist. Das Downloadprogramm ist dazu konfiguriert, die verschlüsselte Wartungsdatei herunterzuladen und mit dem privaten Schlüssel 408 zu entschlüsseln. Das Modul 402 zur Initialisierung kann in alternativen Ausführungsformen Bestandteil des Uploadprogramms 254 sein.

Das Downloadprogramm kann ein Triggermodul 403 beinhalten, dass dazu konfiguriert ist, in regelmäßigen Abständen, zum Beispiel einmal in der Sekunde, einen dem Gerät vom Dateimanagementserver zugewiesenen, serverseitigen Speicherbereich darauf hin zu analysieren, ob dort eine neue Wartungsdatei von dem Fernwartungsnutzer für das Gerät 210 gespeichert wurde. Falls dies der Fall ist, initiiert Modul 403 das Herunterladen der neuen Wartungsdatei, eine optionale Entschlüsselung der Wartungsdatei mit dem privaten Schlüssel 408 des Geräts, sowie eine Verarbeitung der Wartungsdatei durch Modul 404.

Das Modul 404 ist nach Ausführungsformen der Erfindung dazu konfiguriert, Wartungsdateien, die von dem Downloadprogramm 256 empfangen werden, zu verarbeiten. Die Verarbeitung kann insbesondere bedeuten, die Wartungsdatei mit dem öffentlichen Schlüssel 308 des Gerätes zu entschlüsseln, falls diese verschlüsselt sein sollte. Die Verarbeitung kann weiterhin beinhalten, zu analysieren, ob die Wartungsdatei zum Beispiel ein Firmwareupdate für die Gerätesoftware beinhaltet oder ein Firmwareupdate darstellt. In diesem Fall wird die alte Gerätesoftware durch das Firmwareupdate ersetzt oder entsprechend aktualisiert. Falls die Analyse ergibt, dass die Wartungsdatei ein oder mehrere Steuerbefehle zur Steuerung von Hardwarefunktionen beinhaltet, veranlasst das Modul 404 die Gerätesoftware und/oder die Hardwarefunktionen des Geräts, diese Steuerbefehle umzusetzen. In manchen Implementierungsvarianten ist es auch möglich, dass die Verarbeitung einer Wartungsdatei bzw. die Umsetzung eines Steuerbefehls automatisch die Erzeugung oder Aktualisierung einer Statusdatei bewirkt. Die neuerzeugte Statusdatei wird von dem Uploadprogramm verteilt gespeichert und dem Fernwartungsnutzer zur Verfügung gestellt. Es ergibt sich somit eine zeitlich eng getaktete Schleife, innerhalb welcher das Gerät neue Wartungsdateien ausführt, in Reaktion darauf das Gerät neue Statusdateien erzeugt, die dem Fernwartungsnutzer zur Verfügung gestellt werden, der Fernwartungsnutzer daraufhin neue Wartungsdateien erzeugt, die erneut von dem Gerät heruntergeladen und ausgeführt werden usw. Obwohl der Fernwartungsnutzer niemals direkt auf das Gerät zugreifen kann, erhält er aufgrund der engen zeitlichen Takten auf interaktive Weise eine Kontrolle des Geräts in Echtzeit.

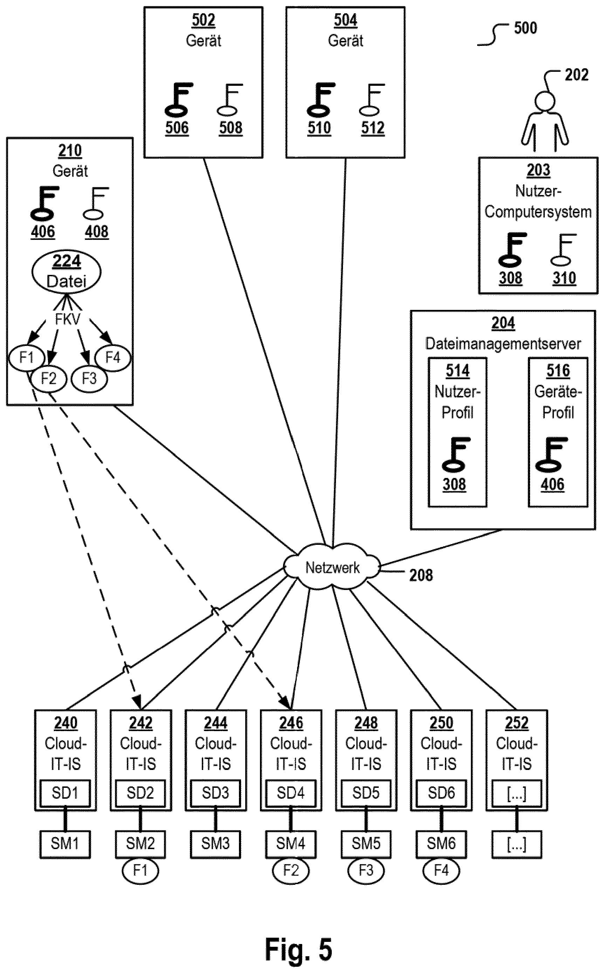

**Figur 5** zeigt ein Blockdiagramm eines verteilten Systems 500 zur Gerätefernwartung mit mehreren kryptographischen Schlüsseln.

Das System umfasst ein Nutzer-Computersystem 203 eines Fernwartungsnutzers 202, mehrere als Cloudspeicherdienste ausgebildete Speicherdienste 240-252 mit entsprechenden IT-Infrastrukturen und Speichermedien SM1-SM6 und einen Dateimanagementserver 204. Die Systemkomponenten sind über ein Netzwerk 208 z.B. das Internet miteinander verbunden sind. Das System ermöglicht eine automatisierte und dynamische Bereitstellung von Speicherressourcen der einzelnen Speicherdienste, die zum Beispiel jeweils als öffentliche Cloud-Speicherdienste ausgebildet sein können. Die Auswahl der Speicherdienste erfolgt vorzugsweise dynamisch basierend auf Anforderungen, die ein Nutzer 202 in einem zentral hinterlegten Nutzerprofil 514 hinterlegen kann, basierend auf bestimmten Merkmalen der zu speichernden Statusdatei 224 und/oder basierend auf technischen und/oder organisatorischen Eigenschaften der jeweiligen Speicherdienste, die beispielsweise zentral in einem Katalog gespeichert sein können.

Im Zuge der Installation einer Fernwartungs-Applikation auf dem Nutzer-Computersystem 203 kann ein für das Nutzer-Computersystem spezifisches asymmetrisches kryptographisches Schlüsselpaar 308, 310 generiert werden. Der private Schlüssel 310 wird in dem jeweiligen Nutzer-Computersystem 203 geschützt gespeichert. Der entsprechende öffentliche Schlüssel 308 wird an den Dateimanagementserver übertragen und von diesem zentral verwaltet.

Beispielsweise kann der Dateimanagementserver dazu konfiguriert sein, nach erfolgreicher Authentifikation des Nutzers 202 gegenüber dem Dateimanagementserver 204 den öffentlichen Schlüssel 308 des Nutzers an das Gerät 210 zu übermitteln, sodass das Gerät die Metadaten einer Statusdatei 224 ganz oder teilweise mit dem öffentlichen Schlüssel 308 des Nutzers 102 verschlüsseln kann, bevor die Metadaten dem Nutzer 202 zur Verfügung gestellt werden, um die Statusdatei aus den Dateifragmenten zu rekonstruieren. Die Metadaten können somit Zugriffs geschützt und sicher an den berechtigten Nutzer übertragen werden. Der Nutzer 202 kann die Metadaten mit seinem privaten Schlüssel 310 entschlüsseln und zur Rekonstruktion der Wartungsdatei verwenden.

In analoger Weise kann der Dateimanagementserver dazu konfiguriert sein, nach erfolgreicher Authentifikation des Nutzers 202 gegenüber dem Dateimanagementserver 204 den öffentlichen Schlüssel 406 des Gerätes 210 an den Nutzer-Computer 203 des Nutzers 202 zu übermitteln, sodass ein Fernwartungsprogramm, das auf dem Nutzer-Computersystem instanziiert ist, den öffentlichen Schlüssel 406 verwenden kann, um eine von dem Nutzer mithilfe des Fernwartungsprogrammes erstellte Wartungsdatei zu verschlüsseln und in verschlüsselter Form an das Gerät dadurch zu übertragen, dass die verschlüsselte Wartungsdatei auf einen Speicherbereich eines serverseitigen Speichers, der den Gerät zugewiesen ist, gespeichert wird, und sich das Downloadprogramm die verschlüsselte Wartungsdatei von diesen Speicherbereich herunterlädt.

Der Dateimanagementserver kann ein Nutzer-Register verwalten, in dem nutzerbezogene Daten und optional auch öffentliche Schlüssel von mehreren Fernwartungsnutzern hinterlegt sind. Zusätzlich dazu kann der Dateimanagementserver auch ein Geräte-Register verwalten, in welchem gerätebezogene Daten und optional auch öffentliche Schlüssel der jeweiligen Geräte hinterlegt sind.

So ist dem Nutzer 202 beispielsweise das Nutzerprofil 514 zugeordnet, welches den öffentlichen Schlüssel 308 des Nutzers 202 beinhaltet. Dem Gerät 210 ist das Geräteprofil 516 zugeordnet, welches den öffentlichen Schlüssel 406 des Geräts 210 beinhaltet. Außerdem können in dem Geräte-Register auch die öffentlichen Schlüssel 506, 510 der Geräte 502, 504 hinterlegt sein (nicht dargestellt).

Der Dateimanagementserver 204 agiert als zentrale Instanz zur Verwaltung von Nutzeraccounts, Nutzer-Anforderungen und Geräten 210, 502, 504 und zur Prüfung der Berechtigung einzelner Nutzer und gegebenenfalls auch einzelne Geräte zur Durchführung einer dateibezogenen Zugriffsoperation.

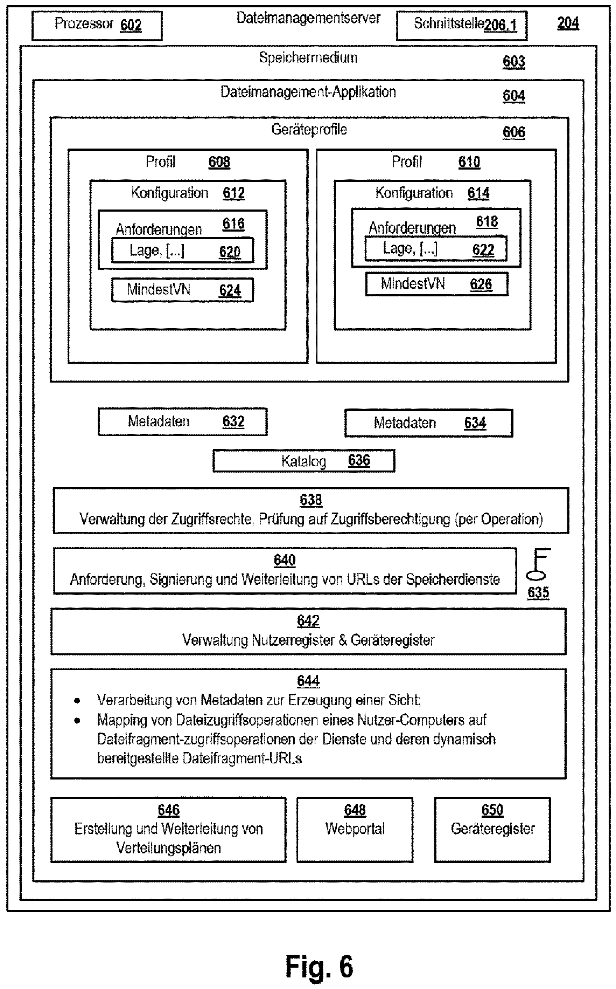

**Figur 6** zeigt ein Blockdiagramm eines Dateimanagementservers 204. Der Dateimanagementserver umfasst einen Prozessor 602 und ein Nicht-flüchtiges Speichermedium 603, auf welchem eine Dateiverwaltungs-Applikation 604 installiert ist. Diese kann zur Verwaltung mehrerer Geräteprofile 606, zum Beispiel Geräteprofil 608 von Gerät 210 oder Geräteprofil 610 eines anderen Geräts dienen. Die Betreiber der einzelnen Geräte können in den Geräteprofilen in einer Konfiguration 612, 614 festlegen, welche Anforderungen 616, 618 im Hinblick auf Kosten, geographische Lage 620, 622, Datensicherheit und/oder Datenverfügbarkeit 624, 626 bezüglich der von den Speicherdiensten SD1-SD6 jeweils verwendeter IT-Infrastrukturen zur Speicherung von Statusdateien erfüllt werden müssen. Die Anforderungen können auch einheitlich für ganze Gerätegruppen, zum Beispiel Geräten eines bestimmten Typs, Geräte die von der gleichen Organisation betrieben werden oder Geräte eines bestimmten Herstellers, definiert sein. Dies kann vorteilhaft sein, da hierdurch unternehmenseinheitliche Vorgaben im Hinblick auf die Kosten, geographische Lage, Sicherheit und Verfügbarkeit der verteilt gespeicherten Dateien realisiert werden können. Außerdem kann der Nutzer spezifizieren, welche Fernwartungsnutzer oder Nutzergruppen unter welchen Bedingungen (z.B. im Hinblick auf ein Mindestvertrauensniveau des Authentifizierungsverfahrens dem Fernwartungsnutzer Zugriff auf eine Statusdatei eines Gerätes durch den Dateimanagementserver gewährt werden soll.

Die Dateiverwaltungs-Applikation 604 kann also als zentrale Instanz die Geräteprofile mehrerer Geräte und/oder die Nutzerprofile mehrerer Nutzer verwalten und auch die Vorgaben bezüglich der Zugriffsberechtigung verschiedener Nutzer auf die Wartungsdateien verschiedener Geräte kontrollieren und umsetzen. Neben den Nutzerprofilen und Geräteprofilen, die in den jeweiligen Registern gespeichert sind, kann die Dateiverwaltungs-Applikation auch die Metadaten 632, 634 einer Vielzahl von verteilt gespeicherten Statusdateien mehrerer Geräte und/oder einen Katalog 636 mit den Spezifikationen aller zur Verfügung stehenden Speicherdienste SD1-SD6 verwalten.

Modul 638 der Dateiverwaltungs-Applikation ist zum Beispiel für die zentrale Verwaltung der Zugriffsrechte und für die dateibezogene Prüfung auf Zugriffsberechtigung durch Fernwartungsnutzer und/oder durch die Geräte auf Statusdateien und/oder in vom Dateiverwaltungsserver serverseitig verwalteten Speicherbereichen gespeicherten Wartungsdateien verantwortlich.

Ein Fernwartungsnutzer kann sich gegenüber der Dateiverwaltungs-Applikation dadurch als berechtigt ausweisen, dass er seine Identität, die sich aus unterschiedlichen Attributen zusammensetzen kann (Name, E-Mail-Adresse, Bankkonto, Wohnadresse, Geburtsdatum, Nationalität etc.) gegenüber der Dateiverwaltungs-Applikation in vertrauenswürdiger Weise nachweist.

In analoger Weise kann ein Gerät sich gegenüber der Dateiverwaltungs-Applikation dadurch als berechtigt ausweisen, dass es Attribute wie z.B. eine Geräte-ID die im Geräteregister enthalten ist oder einen Nachweis des Besitzes eines Geheimnisses, das auch der Dateiverwaltungs-Applikation bekannt ist, übermittelt und sich dadurch gegenüber der Dateiverwaltungs-Applikation als vertrauenswürdiges, registriertes Gerät ausweist.

Die Echtheit dieser Attribute des Nutzers und/oder des Geräts kann mit unterschiedlichem Aufwand nachgewiesen werden. Das Modul 638 ordnet den unterschiedlichen Attributen einen bestimmten Vertrauenslevel zu. Dieser Wert bildet die Qualität der Identifizierung ab. Vorzugsweise verfügt das Modul 638 über eine graduelle Abstufung mehrerer Vertrauensniveaus bezüglich einer oder mehrerer digitaler Identitäten eines Fernwartungsnutzers und/oder der einzelnen Geräte. Damit können die Hersteller oder Betreiber der einzelnen Geräte individuelle Anforderungen (Mindestvertrauensniveaus) im Hinblick auf die Vertrauenswürdigkeit der Identifizierung des Geräts und/oder der Fernwartungsnutzer im Hinblick auf den Zugriff der von den jeweiligen Geräten erzeugten Statusdateien spezifizieren. Ob ein Fernwartungsnutzer das geforderte Mindestvertrauensniveau erfüllt hängt also von dem Authentifizierungsverfahren des Fernwartungsnutzers gegenüber dem Dateimanagementserver ab, mittels welchen diese seine digitale Identität nachweist (also z.B. Nutzername/Passwort, Email-Adresse, elektronischem Personalausweis oder ein anderes Sicherheitstoken wie beispielsweise FID).

Nach Ausführungsformen müssen sich die einzelnen Geräte bzw. die Uploadprogramme gegenüber dem Dateimanagementserver in analoger Weise wie die Fernwartungsnutzer authentifizieren, bevor der Dateimanagementserver für das Gerät bzw. für das Uploadprogramm Berechtigungsanfragen an die Speicherdienste sendet um dem Uploadprogramm Schreibzugriff zur verteilten Speicherung der Statusdatei in den Speichermedien der Speicherdienste sendet und die in Antwort darauf erhaltenen Berechtigungstoken an das Uploadprogramm weiterleitet.

Modul 640 dient dazu, nachdem ein Gerät seine Berechtigung zum Schreiben einer Statusdatei auf eine Statusdatei und/oder zum Lesen einer Wartungsdatei und/oder nachdem ein Fernwartungsnutzer seine Berechtigung zum Lesen einer Statusdatei und zum Schreiben einer Wartungsdatei gegenüber der Dateiverwaltungs-Applikation nachgewiesen hat, fordert die Dateimanagement-Applikation Berechtigungstoken von den in einem Verteilungsplan (bei initialem Schreibzugriff) oder den Metadaten (bei Lesezugriff, bei einer UPDATE oder DELETE-Operation) spezifizierten Speicherdiensten an. Die Berechtigungstoken werden vorzugsweise mit einem Signierungsschlüssel 635 der Dateiverwaltungs-Applikation signiert und in signierter Form an das Gerät oder Nutzer-Computersystem, von welchem eine entsprechende Berechtigung-Anfrage zum schreibenden oder lesenden Dateizugriff empfangen wurde, gesendet.

Modul 642 verwaltet Profildaten einer Vielzahl von Geräten und Fernwartungsnutzern de bei dem Dateimanagementserver registriert sind.

Das Modul 644 ist dazu ausgebildet, die für die einzelnen Statusdateien erzeugten Metadaten zu verwalten. Optional können auch die Wartungsdateien auf Basis eines Fehlerkorrekturverfahrens in Dateifragmente aufgeteilt und verteilt in einem verteilten Speicherbereich gespeichert worden sein, der einem bestimmten Gerät zugewiesen ist. Auch für die Wartungsdateien werden also nach manchen Ausführungsformen der Erfindung Metadaten erzeugt, die eine Rekonstruktion der Wartungsdateien ermöglichen. Das Modul 644 kann auch diese Metadaten verwalten und anhand der Metadaten für die Statusdateien und/oder Wartungsdateien eine Sicht auf die verteilt gespeicherten Dateien generieren und den Nutzer-Computersystemen über das Netzwerk zur Verfügung stellen ohne jedoch Zugriff auf den Inhalt der Dateien zu besitzen. Die Sicht kann alternativ dazu jedoch auch von einem auf einem Nutzer-Computersystem installierten Fernwartungsapplikation auf Basis der übermittelten Metadaten erzeugt werden.

Ferner kann der Dateimanagementserver ein Modul 646 umfassen. Dieses ermöglicht eine dynamische Erstellung und Weiterleitung von Verteilungsplänen zur verteilten Speicherung einer Statusdatei und/oder Wartungsdatei, wobei in dem Verteilungsplan ein Fehlerkorrekturverfahren FKV spezifiziert ist sowie mehrere Speicherdienste.

Insgesamt kann somit gemäß Ausführungsformen eine flexible Lösung zur sicheren und hochverfügbaren Übermittlung von Statusdateien und optional auch Wartungsdateien unter Verwendung mehrerer externer Speicherdienste bereitgestellt werden.

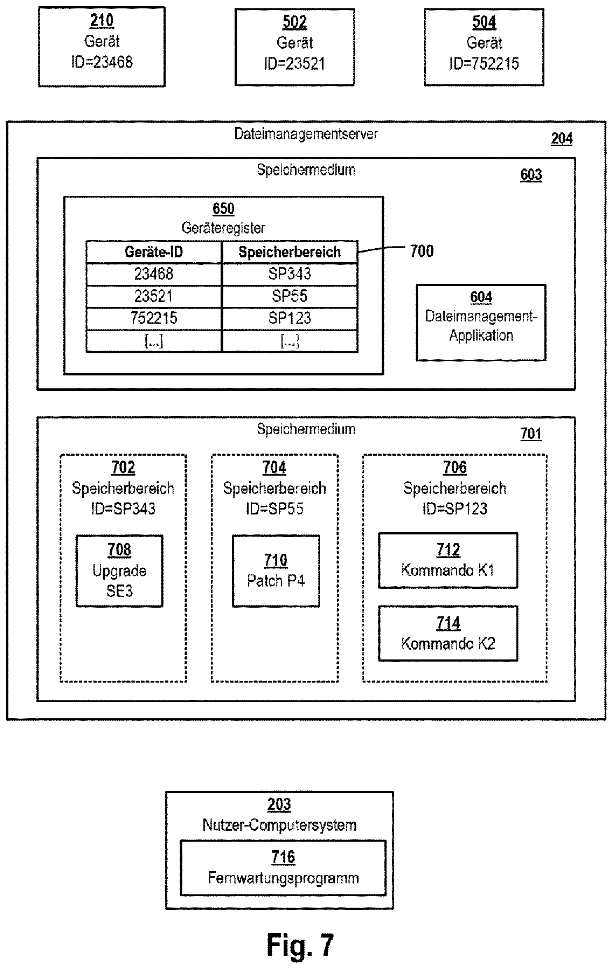

**Figur 7** zeigt ein Blockdiagramm eines Dateimanagementservers 204 mit einer Dateimanagement-Applikation 604, die dazu ausgebildet ist, mehrere serverseitige Speicherbereiche 702, 704, 706 zu verwalten. Die Speicherbereiche können auf einem einzigen physikalischen Speichermedium 701 liegen, wie hier in Figur 7 dargestellt, oder können auf mehreren Speichermedien liegen. Der Dateimanagementserver beinhaltet oder ist operativ gekoppelt an ein Speichermedium 603, in welchem ein Geräteregister 650 gespeichert ist. Das Geräteregister beinhaltet eine Zuweisung 700, zum Beispiel eine Zuweisungstabelle, die jedem bei dem Dateimanagementserver registrierten Gerät 210, 502, 504 einen der Speicherbereiche 702, 704, 706 zuweist. Die Downloadprogramme der jeweiligen Geräte 210, 502, 504, sind dazu konfiguriert, in regelmäßigen Abständen auf den ihnen zugewiesenen Speicherbereich lesend zuzugreifen und neue Dateien, insbesondere Wartungsdateien, herunterzuladen um diese auszuwerten und gegebenenfalls auszuführen.

Auf einem Nutzer-Computersystem 203 eines Fernwartungsnutzers ist ein Fernwartungsprogramm 716 installiert. Das Fernwartungsprogramm ist dazu konfiguriert, eine von dem Fernwartungsnutzer erstellte oder modifizierte Wartungsdatei auf ein oder mehrere Speicherbereiche von denjenigen Geräten hochzuladen, die der Fernwartungsnutzer warten möchte und für welche er entsprechende Berechtigungen zum Schreiben einer Wartungsdatei auf den jeweiligen Speicherbereich besitzt.

Die Wartungsdateien können unterschiedliche Inhalte haben. Beispielsweise beinhaltet die Wartungsdatei 708 ein Upgrade des Geräteprogrammes, welches in Gerät 210 installiert ist. Wartungsdatei 710 beinhaltet einen Patch zum Schließen einer Sicherheitslücke in der Gerätesoftware des Gerätes 502. In Speicherbereich 706 sind zwei Wartungsdateien 712, 714 gespeichert, die jeweils unterschiedliche Steuerbefehle (Kommandos K1, K2) zur Steuerung unterschiedlicher Hardwarefunktionen des Gerätes 504 beinhalten.

Die in Figur 7 dargestellte Ausführungsform stellt eine einfache Implementierung eines bidirektionalen und indirekten Datenaustausches zwischen einem Gerät und einem Fernwartungsnutzer zum Austausch von Statusdateien und/oder Wartungsdateien dar, wobei hier lediglich die Übermittlung der Wartungsdatei vom Fernwartungsprogramm 716 über den Dateimanagementserver 204 an die einzelnen Geräte 210, 502, 504 beschrieben ist. In dieser einfachen Ausführungsform ist es nicht nötig, dass die Wartungsdateien mittels eines Fehlerkorrekturverfahrens verteilt gespeichert werden, wie dies im Hinblick auf die Statusdateien beschrieben wurde. Bei anderen, komplexeren Implementierungsformen basiert auch der Datenübertragungskanal vom Nutzercomputer in Richtung der einzelnen Geräte darauf, dass die Wartungsdatei verteilt in mehreren Speicherdiensten gespeichert wird und nur einzelnen Geräten Zugriff auf die Wartungsdatei durch den Dateimanagementserver gewährt wird. In diesem Fall beinhaltet das Fernwartungsprogramm 716 ein Modul, das in funktionaler Hinsicht dem Uploadprogramm der Geräte entspricht, nur dass hier nicht eine Statusdatei sondern eine Wartungsdatei hochgeladen wird.

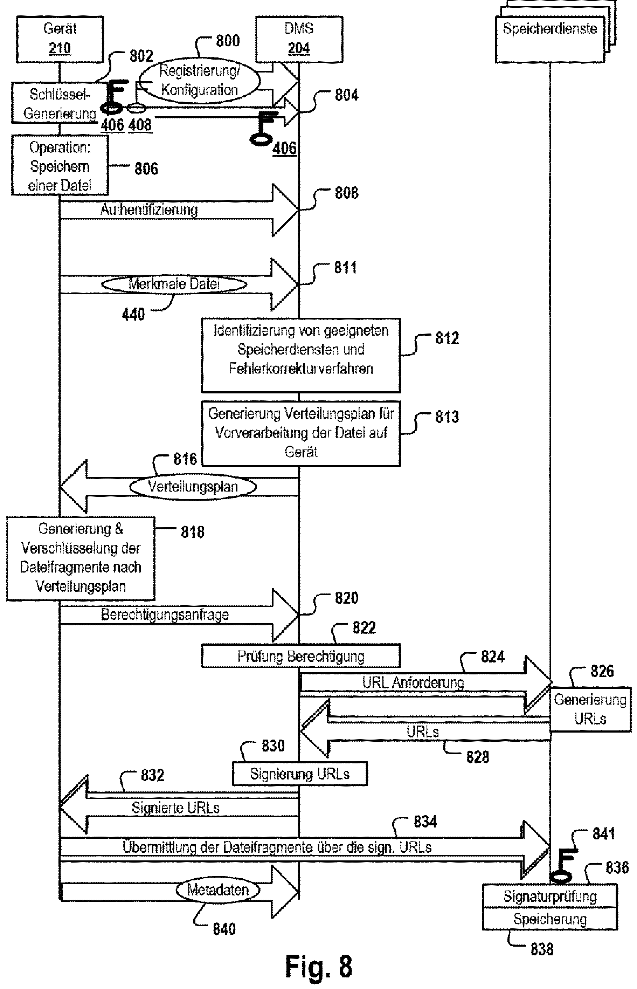

**Figur 8** zeigt ein Ablaufdiagramm zum Upload einer Statusdatei durch ein Gerät 210 gemäß einer Ausführungsform. Zunächst, zum Beispiel im Zuge der Installation des Uploadprogramms auf dem Gerät, wird automatisch von dem Uploadprogramm ein asymmetrisches kryptographisches Schlüsselpaar beinhaltend einen privaten Entschlüsselungsschlüssel 408 und einen öffentlichen Verschlüsselungsschlüssel 406 gebildet. Der private Entschlüsselungsschlüssel wird in dem Speichermedium des Geräts geschützt gespeichert. Der öffentliche Verschlüsselungsschlüssel 406 wird an die Dateiverwaltungs-Applikation des Dateimanagementservers 204 übertragen und dort als Bestandteil eines Geräteprofils des Geräts 210 zentral gespeichert.

Die Übertragung des öffentlichen Schlüssels 406 kann beispielsweise im Zuge einer Registrierung 800 des Geräts bei der Dateiverwaltungs-Applikation erfolgen. Bei der Registrierung oder auch danach hat der Hersteller oder Betreiber des Geräts die Möglichkeit, das Geräteprofil und insbesondere das darin enthaltene Anforderungsprofil an die technischen Eigenschaften der Speicherdienste und seine Anforderungen an die Voraussetzungen zur Gewährung einer Zugriffsberechtigung an Fernwartungsnutzer auf die von dem Gerät erzeugten Daten zu konfigurieren. Um eine bestimmte Statusdatei zu speichern, ist eine Speicheroperation 806 zum Zugriff auf mehrere Speicherdienste erforderlich. Um dies zu ermöglichen, erfolgt jedoch keine direkte Authentifizierung bei den einzelnen Speicherdiensten. Vielmehr authentifiziert sich das Gerät in Schritt 808 zunächst gegenüber dem Dateimanagementserver. Außerdem sendet das Gerät Merkmale der zu speichernden Statusdatei an den Dateimanagementserver.

Der Dateimanagementserver analysiert die in dem Geräteprofil gespeicherten Anforderungen, analysiert einen Katalog mit Spezifikationen sämtlicher aktuell verfügbare Speicherdienste und analysiert außerdem Merkmale der Statusdatei (z.B. die Dateigröße, den Typ der Datei etc.). Anhand der analysierten Daten identifiziert der Dateimanagementserver in Schritt 812 automatisch die Identität und Anzahl derjenigen Speicherdienste, die zur Speicherung von Dateifragmenten der zu speichernden Datei verwendet werden sollen. Außerdem identifiziert der Dateimanagementserver ein Fehlerkorrekturverfahren und dessen Konfiguration, welches dazu in der Lage ist, die zu speichernde Datei so in Dateifragmente aufzuteilen, dass die Anforderungen im Hinblick auf die Kosten, die Sicherheit, die geographische Lage der einzelnen zur Speicherung verwendeten Speicherdienste und/oder der Datenübertragungsgeschwindigkeit über das Netzwerk erfüllt werden.

Außerdem muss das Fehlerkorrekturverfahren die Statusdatei auch so auf Dateifragmente verteilen, dass die Anforderungen im Hinblick auf die Verfügbarkeit der Datei gewährleistet sind. Generell gilt, dass je höher der Anteil der Fehlerkorrekturbits pro Dateifragment, desto größer die über das Netzwerk zu übertragende Datenmenge und desto größer die Redundanz der übertragenen Daten, desto höher aber auch die Verfügbarkeit der Datei trotz eines eventuellen Ausfalls einer oder mehrerer der Speicherdienste.

Der Dateimanagementserver generiert in Schritt 813 einen Verteilungsplan 816, der Identifikatoren der ermittelten Speicherdienste sowie Instruktionen zur Durchführung des ermittelten Fehlerkorrekturverfahrens (zum Beispiel Konfigurationsdaten des Fehlerkorrekturverfahrens) beinhaltet. Der Verteilungsplan wird an das Gerät über das Netzwerk übertragen. Alternativ dazu kann in manchen Ausführungsformen der Verteilungsplan auch durch das Gerät erstellt werden, zum Beispiel durch das Uploadprogramm des Geräts. Das Gerät generiert mittels des in dem Verteilungsplan spezifizierten Fehlerkorrekturverfahrens in Schritt 818 mehrere Dateifragmente F1-F4 und verschlüsselt diese. Die Dateifragmente können zum Beispiel jeweils mit einem Hashwert der ursprünglichen Statusdatei, welcher als symmetrischer kryptographischer Schlüssel dient, verschlüsselt werden.

Um die generierten Dateifragmente speichern zu können, sendet das Gerät eine Berechtigungsanfrage in Schritt 820 an den Dateimanagementserver, wobei diese Berechtigungsanfrage eine Anfrage beinhaltet, ob das Gerät berechtigt ist, auf die in dem Verteilungsplan spezifizierten Speicherdienste bzw. deren Speichermedien schreibend zuzugreifen um die Dateifragmente dort zu speichern. In Antwort auf den Erhalt der Berechtigungsanfrage prüft der Dateimanagementserver in Schritt 822 ob das Gerät für die angefragte Schreiboperation berechtigt ist. Falls dies der Fall ist und sich der Nutzer außerdem gegenüber dem Dateimanagementserver erfolgreich authentifiziert 808 hat, fordert das Dateimanagementsystem von den in dem Verteilungsplan und in der Berechtigungsanfrage spezifizierten Speicherdiensten Berechtigungstoken über das Netzwerk an. Die Berechtigungstoken können zum Beispiel als URLs 824 ausgebildet sein. In Antwort auf den Erhalt der Anforderung generieren die einzelnen Speicherdienste in Schritt 826 URLs zum Zugriff auf einen Speicherbereich von Speichermedien der jeweiligen Speicherdienste und senden die URLs an den Dateimanagementserver. Der Dateimanagementserver signiert in Schritt 830 die empfangenen URLs und leitet sie in signierter Form 832 an das Gerät weiter.

Das Gerät verwendet die signierten URLs um mittels dieser direkt auf die in den URLs angegebenen Speicherbereiche der Speicher der einzelnen Speicherdienste schreibend zuzugreifen und die Dateifragmente unter Umgehung des Dateimanagementservers direkt in den Speichermedien der besagten Speicherdienste über das Netzwerk zu speichern. Allerdings führen die einzelnen Speicherdienste in Schritt 836 eine Signaturprüfung der signierten URLs mittels eines Signaturprüfschlüssels 841, der mit dem Signierschlüssel des Dateimanagementservers ein asymmetrisches kryptographisches Schlüsselpaar bildet, durch. Eine Speicherung in Schritt 838 von Dateifragmenten erfolgt jeweils nur, falls die Prüfung ergab, dass die Signatur der URL valide war.

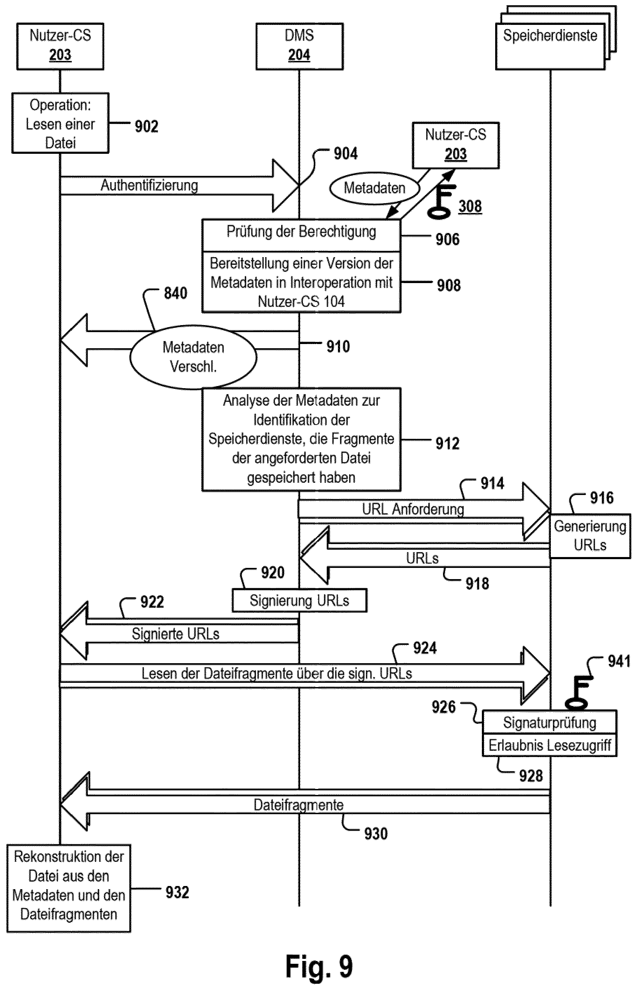

Nach manchen Ausführungsformen werden Pfadangaben, die auf die in den Speichermedien der Speicherdienste gespeicherten Dateifragmente verweisen, der zur Verschlüsselung der Dateifragmente verwendete symmetrische kryptographische Schlüssel sowie optional noch weitere Daten von dem Gerät als Metadaten 840 für die verteilt gespeicherte Statusdatei gespeichert und an den Dateimanagementserver übertragen. Nach manchen Ausführungsformen enthalten die Metadaten den symmetrischen kryptographischen Schlüssel in verschlüsselter Form, wobei zur Verschlüsselung des symmetrischen Schlüssels der öffentliche Schlüssel 406 des Geräts, durch welches die Datei gespeichert wurde, dient. Es ist auch möglich, dass in Antwort auf eine Zugriffsanfrage eines anderen Nutzer-Computersystems unter Vermittlung des Dateimanagementservers weitere Versionen der Metadaten durch das Nutzer-Computersystem generiert und unter Vermittlung des Dateimanagementservers an das anfragende Nutzer-Computersystem übertragen werden. Dies ist in Figur 9 näher erläutert.

**Figur 9** zeigt ein Ablaufdiagramm zum Herunterladen der Statusdatei durch ein Wartungsprogramm eines Nutzer-Computersystems 203 eines Fremdwartungsnutzers auf die verteilt gespeicherte Statusdatei eines Geräts 210. Ein auf dem Nutzer-Computersystem 203 installiertes Fernwartungsprogramm, das Metadaten der Statusdatei vom Dateimanagementserver empfängt oder alternativ auch die Dateiverwaltung-Applikation auf dem Dateimanagementserver kann dem Fernwartungsnutzer mittels bereits vorhandener Metadaten 840 eine Sicht auf die gemäß des Verteilungsplans verteilt gespeicherte Statusdatei generieren und anzeigen. Der Nutzer kann, beispielsweise mittels des Fernwartungsprogramms, eine visuelle Repräsentation, zum Beispiel ein Dateisymbol, der verteilt gespeicherten Statusdatei auswählen, um darauf lesend zuzugreifen. Dieser Vorgang ist als Leseoperation 902 dargestellt. Um auf die Datei lesend zugreifen zu können, authentifiziert sich der Nutzer in Schritt 904 zunächst gegenüber dem Dateimanagementserver, zum Beispiel mittels seines Personalausweises, seiner biometrischen Daten oder eines passwortbasierten Authentifizierungsverfahrens. Nach erfolgreicher Authentifizierung prüft der Dateimanagementserver, ob der Nutzer zum Lesezugriff auf die Datei berechtigt ist. Hierzu analysiert der Dateimanagementserver die Konfiguration des Geräts, das die Statusdatei erzeugt hat, insbesondere die darin enthaltenen Angaben bezüglich eines geforderten Mindestvertrauensniveaus oder sonstiger Erfordernisse im Hinblick auf die Zugangsberechtigungen einzelner Nutzer und Nutzergruppen ("Access Control List"), die ebenfalls Bestandteil der auf dem Dateimanagementserver hinterlegten Konfiguration des Geräts sein können.

Falls die Analyse ergibt dass der Fernwartungsnutzer zum Lesezugriff auf die Datei berechtigt ist und sich erfolgreich authentifiziert hat und gegebenenfalls auch der Nutzer-Computersystemtyp und das Mindestvertrauensniveau des verwendeten Authentifizierungsverfahrens 904 den von dem Gerätebetreiber spezifizierten Anforderungen entsprechen, identifiziert oder generiert der Dateimanagementserver in Schritt 908 die Metadaten 840, die eine Rekonstruktion der Datei aus den Dateifragmenten erlauben, und sendet diese in Schritt 910 an das Nutzer-Computersystem des Fernwartungsnutzers. Bei den in Schritt 908 identifizierten Metadaten kann es sich um eine spezifisch für die Datei und spezifisch für das Nutzer-Computersystem generierte Version der Metadaten handeln. Die Generation der für das um Lesezugriff anfragende Nutzer-Computersystem spezifischen Metadaten kann beinhalten, dass der Dateimanagementserver, der unter anderem auch den öffentlichen Schlüssel 308 des Fernwartungsnutzers verwaltet, nach der Feststellung, dass das Nutzer-Computersystem zum Zugriff auf die Datei berechtigt ist, den öffentlichen Schlüssel 308 dieses Nutzer-Computersystems an das Gerät sendet. Das Gerät 210 verwendet den öffentlichen Schlüssel 308 um den zur Verschlüsselung der Dateifragmente verwendeten symmetrischen Schlüssel zu verschlüsseln. Der verschlüsselte symmetrische Schlüssel wird mit weiteren Daten, z.B. den Pfadangaben zu den Dateifragmenten, kombiniert, um die weitere Version der Metadaten der Statusdatei bereitzustellen und an den Dateimanager zu senden. Der Dateimanagementserver leitet die weitere Version der Metadaten an das anfragende weitere Nutzer-Computersystem 203 weiter. Dieses entschlüsselt den symmetrischen kryptographischen Schlüssel der besagten Version der Metadaten mit seinem privaten Schlüssel 310. Außerdem analysiert der Dateimanagementserver in Schritt 912 die weitergeleiteten Metadaten um die Speicherdienste, in welchen die Dateifragmente der Statusdatei gespeichert sind, zu identifizieren.

Im nächsten Schritt sendet der Dateimanagementserver eine Anforderung 914 zum Erhalt von Berechtigungstoken zum Lesen der Dateifragmente an die in Schritt 912 identifizierten Speicherdienste. In Antwort auf den Erhalt der Anforderung generieren die identifizierten Speicherdienste in Schritt 916 Berechtigungstoken, zum Beispiel in Form von URLs, die auf die von dem jeweiligen Dienst gespeicherten Dateifragmente weisen. Die generierten Berechtigungstoken 918 werden an den Dateimanagementserver über das Netzwerk übermittelt und von diesem in Schritt 920 mit dessen Signierungsschlüssel signiert. Die signierten Berechtigungstoken 922 werden an das weitere Nutzer-Computersystem übertragen und ermöglichen es diesem, einen direkten Lesezugriff 924 auf die Speichermedien der jeweiligen Speicherdienste mittels der signierten URLs durchzuführen. Der Lesezugriff wird aber von den jeweiligen Speicherdiensten nur gestattet, falls eine Signaturprüfung mittels des Signaturprüfschlüssels 941 in Schritt 926 durch die jeweiligen Speicherdienste ergibt, dass die Signatur der Berechtigungstoken valide ist. In diesem Fall geben die Speicherdienste in Schritt 928 eine Erlaubnis zum Lesen der jeweiligen, verschlüsselt gespeicherten Dateifragmente. Die verschlüsselten Dateifragmente 930 werden über das Netzwerk direkt an das Nutzer-Computersystem übertragen und dort in Schritt 932 von dem auf dem Nutzer-Computersystem gespeicherten Fernwartungsprogramm unter Zuhilfenahme der generierten weiteren Version der Metadaten entschlüsselt und zu der ursprünglichen Statusdatei assembliert. Der mittels des privaten Schlüssels 310 des Nutzer-Computersystems entschlüsselte symmetrische Schlüssel erlaubt es dabei dem Nutzer-Computersystem, die empfangenen Metadaten zu entschlüsseln und zur Rekonstruktion der Statusdatei zu verwenden.

Der beanspruchte Schutzbereich wird durch die Patentansprüche definiert.

Die Offenbarung umfasst auch die folgenden als Klauseln formulierten Merkmale:
Klausel 1:
   1. Verfahren zur Fernwartung eines Gerätes (210, 502, 504), umfassend:
   - Bereitstellung (102) eines Dateimanagementservers (204);
   - Bereitstellung (104) mindestens des Gerätes (210, 502, 504), wobei das Gerät beinhaltet: ein Geräteprogramm (218) zur Steuerung zumindest einer Hardwarefunktion (214) des Gerätes, und ein Uploadprogramm (254);
   - Erzeugung (106), durch das Geräteprogramm, einer Statusdatei (220), die Informationen bezüglich des Status des Gerätes beinhaltet;
   - Durchführung (108) eines Fehlerkorrekturverfahrens (222) zur Generierung von Dateifragmenten (226-238) aus der Statusdatei durch das Uploadprogramm, wobei zumindest eines der Dateifragmente Fehlerkorrekturbits beinhaltet;
   - Senden (110), durch das Uploadprogramm, einer Berechtigungsanfrage zum Speichern der Dateifragmente in mehreren Speicherdiensten (240-252) an den Dateimanagementserver über ein Netzwerk (208);
   - In Antwort auf den Empfang der Berechtigungsanfrage, Anforderung (112) eines Berechtigungstokens durch den Dateimanagementserver von jedem der mehreren Speicherdienste und Weiterleitung (114) der in Antwort auf die Anforderung von den Speicherdiensten erhaltenen Berechtigungstoken durch den Dateimanagementserver an das Uploadprogramm;
   - Speicherung (116) der generierten Dateifragmente in den Speichermedien der mehreren Speicherdienste über das Netzwerk mittels Berechtigungsnachweis durch die Berechtigungstoken unter Umgehung des Dateimanagementservers durch das Uploadprogramm;
   - Speicherung (118) von Metadaten (840), die die Rekonstruktion der Statusdatei (220) aus den gespeicherten Dateifragmenten erlauben, durch das Uploadprogramm und/oder durch das Dateimanagementserver so, dass die Metadaten gegen einen Zugriff der Speicherdienste gesichert sind; und
   - Verwendung (120) der Metadaten durch den Dateimanagementserver zur Kontrolle des Zugriffs eines Fernwartungs-Nutzers auf die Daten der Statusdatei.
2. Verfahren nach Klausel 1,
   - wobei auf dem Gerät und/oder in einer IT-Infrastruktur innerhalb welcher das Gerät betrieben wird, eine Firewall (258) installiert ist, die einen Netzwerkzugriff des Geräts beschränkt auf den Datenaustausch mit Kommunikationspartnern, die auf einer Whitelist der Firewall spezifiziert sind,
   - wobei die Kommunikationspartner zumindest den Dateimanagementserver und die Speicherdienste, nicht jedoch eine Kennung des Nutzer-Computersystems (203) des Fernwartungsnutzers beinhalten.
3. Verfahren nach einer der vorigen Klauseln, wobei das Gerät einen nichtvolatilen Datenspeicher (216), der im Folgenden als "Geräte-Datenspeicher" bezeichnet wird, umfasst,
   wobei das Geräteprogramm konfiguriert ist zur automatischen Speicherung jeder durch das Geräteprogramm erzeugten Statusdatei in dem Geräte-Datenspeicher;
   wobei das Uploadprogramm konfiguriert ist, in Antwort auf eine Speicherung einer neuen Statusdatei in dem Gerätespeicher, die folgenden Schritte gemäß Klausel 1 für diese Statusdatei durchzuführen:
      - die Durchführung (108) des Fehlerkorrekturverfahrens (222) zur Generierung von Dateifragmenten aus der Statusdatei;
      - das Senden (110) der Berechtigungsanfrage;
      - In Antwort auf den Empfang der Berechtigungstoken, die Speicherung (116) der generierten Dateifragmente in den Speichermedien;
      - optional zudem die Speicherung von Metadaten, die die Rekonstruktion der Statusdatei (224) erlauben, so, dass die Metadaten gegen einen Zugriff der Speicherdienste gesichert sind und von dem Dateimanagementserver zur Kontrolle des Zugriffs eines Fernwartungs-Nutzers (202) auf die Daten der Statusdatei verwendet werden können.
4. Verfahren nach einer der vorigen Klauseln,
   - wobei das Verfahren ferner umfasst eine Generierung der Metadaten, durch das Uploadprogramm oder den Dateimanagementserver; und im Falle der Erzeugung der Metadaten durch das Uploadprogramm, Speicherung der Metadaten in dem Geräte-Datenspeicher und Übertragung der Metadaten an den Dateimanagementserver; und/oder
   - wobei die Metadaten beinhalten:
      - Pfade zu allen Speicherorten in den Speichermedien der Speicherdienste, in welchen die Dateifragmente der Statusdatei gespeichert werden sollen oder bereits gespeichert wurden; und/oder
      - einen symmetrischen Schlüssel, der eine Entschlüsselung des mit diesem symmetrischen Schlüssel verschlüsselten Dateifragments erlaubt; und/oder
      - für jedes der Dateifragmente einen Hash-Wert des Dateifragments; und/oder
      - den ursprünglichen Dateinamen der verteilt gespeicherten Statusdatei; und/oder
      - Konfigurationsdaten des Fehlerkorrekturverfahrens; und/oder
      - ein Mapping des ursprünglichen Dateinamens zu den Hashwerten und Pfaden der generierten Dateifragmente.
5. Verfahren nach einer der vorigen Klauseln,
   - wobei in dem Dateimanagementserver Metadaten einer Vielzahl von verteilt in den Speicherdiensten gespeicherten Statusdateien von einer oder von mehreren Geräten (210, 502, 504) gespeichert sind.
6. Verfahren nach einer der vorigen Klauseln,
   - wobei das Verfahren eine Verwendung von Metadaten zur Rekonstruktion von Statusdateien eines oder mehrerer Geräte durch ein auf dem Dateimanagementserver gehostetes Webportal (648) zur Generierung einer netzwerkbasierten Sicht auf die verteilt gespeicherten Statusdateien umfasst;
   - wobei die netzwerkbasierte Sicht dazu konfiguriert ist die ursprünglichen Dateinamen aus den Metadaten dynamisch zu rekonstruieren und durch Auswahl einer der verteilt gespeicherten Statusdateien eine dynamische und automatische Rekonstruktion des Dateiinhalts der ausgewählten Statusdatei durch das mindestens eine Gerät oder durch einen berechtigten Fernwartungs-Nutzer zu initiieren, wobei die Speicherdienste, in welchen Fragmente der ausgewählten Statusdatei gespeichert sind, durch die Sicht verborgen werden.
7. Verfahren nach einer der vorigen Klauseln, ferner umfassend:
   - Authentifizierung des Uploadprogramms gegenüber dem Dateimanagementserver;
   - Auf Empfang der Berechtigungsanfrage des Uploadprogramms zur Speicherung der Dateifragmente, Prüfung durch den Dateimanagementserver ob die zumindest einem Gerät, auf welcher das Uploadprogramms läuft, Zugriffsrechte zum Speichern der Statusdatei mittels der identifizierten Speicherdienste besitzt;
   wobei die Anforderung des Berechtigungstokens durch den Dateimanagementserver nur nach erfolgreicher Authentifizierung und nur falls das Uploadprogramm die Zugriffsrechte besitzt, erfolgt.
8. Verfahren nach einer der vorigen Klauseln, ferner umfassend:
   - Empfang einer Zugriffs-Anfrage des Fernwartungs-Nutzers zum Zugriff auf die verteilt gespeicherte Statusdatei, wobei die Zugriffs-Anfrage durch den Dateimanagementserver empfangen wird;
   - Identifikation der Speicherdienste, die Dateifragmente der Datei gespeichert haben anhand der Metadaten der Statusdatei auf die Zugriff angefragt wird durch den Dateimanagementserver;
   - Prüfung durch den Dateimanagementserver ob der Fernwartungs-Nutzer Zugriffsrechte für den Typ des angeforderten Zugriffs auf die Statusdatei besitzt;
   - Authentifizierung des Fernwartungs-Nutzers gegenüber dem Dateimanagementserver;
   - Nach erfolgreicher Authentifizierung und falls der Fernwartungs-Nutzer die Zugriffsrechte für die Statusdatei besitzt, Anforderung eines weiteren Berechtigungstokens durch den Dateimanagementserver von jedem der identifizierten Speicherdienste und Weiterleitung der in Antwort auf diese Anforderung erhaltenen weiteren Berechtigungstoken durch den Dateimanagementserver an das Nutzer-Computersystem des Fernwartungs-Nutzers, wobei die weiteren Berechtigungstoken dem Fernwartungsnutzer den angeforderten Zugriff auf die durch die Speicherdienste jeweils gespeicherten Dateifragmente in direkter Form ermöglichen.
9. Verfahren nach Klausel 8, ferner umfassend:
   - Prüfung durch den Dateimanagementserver, ob das zur Authentifizierung des Fernwartungs-Nutzers gegenüber dem Dateimanagementserver verwendete Authentifizierungsverfahren hinreichend verlässlich ist, um das von dem Fernwartungs-Nutzer konfigurierte Mindestvertrauensniveau für den angeforderten Zugriff zu erfüllen;
      wobei die Anforderung des weiteren Berechtigungstokens nur dann von dem Dateimanagementserver an die identifizierten Speicherdienste gesendet wird, falls der Fernwartungs-Nutzer sich erfolgreich gegenüber dem Dateimanagementserver authentifiziert hat, Zugriffsrechte für die angeforderte Datei besitzt und falls das verwendete Authentifizierungsverfahren ein Vertrauensniveau hat, welches mindestens so hoch ist wie das in der Konfiguration des Uploadprogramms und/oder in einer Konfiguration des Dateimanagementservers spezifizierte Mindestvertrauensniveau.
10. Verfahren nach einer der vorigen Klauseln, ferner mit:
   - Verwaltung eines Nutzerprofils des Fernwartungsnutzers durch den Dateimanagementserver, wobei das Nutzerprofil einen öffentlichen Schlüssel (308) enthält, der zusammen mit einem privaten Entschlüsselungsschlüssel (310) ein asymmetrisches kryptographisches Schlüsselpaar bildet, wobei der eine private Entschlüsselungsschlüssel in dem Nutzer-Computersystem des Fernwartungs-Nutzers geschützt gespeichert ist und zur Entschlüsselung der Metadaten der Statusdatei oder zur Entschlüsselung von Teilen der Metadaten dient; und
   - falls sich der Fernwartungs-Nutzer erfolgreich gegenüber dem Dateimanagementserver authentifiziert hat und falls der Fernwartungs-Nutzer die Zugriffsrechte für die Statusdatei besitzt, Senden des öffentlichen Schlüssels durch den Dateimanagementserver an das Uploadprogramm zur Verschlüsselung der Metadaten oder von Teilen der Metadaten durch das Uploadprogramm und Empfang und Weiterleitung der ganz oder teilweise mit dem gesendeten öffentlichen Schlüssel verschlüsselten Metadaten der Statusdatei durch den Dateimanagementserver an das Nutzer-Computersystem des Fernwartungs-Nutzers um dem Nutzer-Computersystem eine Entschlüsselung der weitergeleiteten Metadaten mit dem privaten Entschlüsselungsschlüssel und eine Rekonstruktion der Statusdatei aus den Dateifragmenten zu ermöglichen.
11. Verfahren nach einer der vorigen Klauseln, ferner umfassend:
   - Erzeugung einer Wartungsdatei (708, 710, 712) durch ein auf dem Nutzer-Computersystem instantisiertes Fernwartungsprogramm;
   - Übertragung der Wartungsdatei an ein Server-Computersystem (204), insbesondere das Dateimanagementcomputersystem;
   - Speicherung der Wartungsdatei durch das Server-Computersystem; und
   - Herunterladen der Wartungsdatei von dem Server-Computersystem durch das Gerät.
12. Verfahren nach Klausel 11, wobei der Server-Computer der Dateimanagementserver ist,
   - wobei der Dateimanagementserver ein Geräteregister (650) beinhaltet, in welchem Geräte-IDs einer Vielzahl von bei dem Dateimanagementserver registrierten Geräten einschließlich des Geräts gespeichert sind;
   - wobei der Dateimanagementserver in dem Geräteregister jedem der registrierten Geräte einen serverseitigen Speicherbereich (702, 704,706) eineindeutig zuweist (700),
   - wobei die den Geräten zugewiesenen Speicherbereiche voneinander isoliert sind und zugriffsbeschränkt sind, sodass nur solche Fernwartungsnutzer Zugriff auf einen der serverseitigen Speicherbereiche haben, die sich erfolgreich im Hinblick auf das zu diesem serverseitigen Speicherbereich gehörende Gerät gegenüber dem Dateimanagementserver authentifiziert haben; und
   - wobei die Speicherung der Wartungsdatei durch den Dateimanagementserver so erfolgt, dass die Wartungsdatei in dem Speicherbereich gespeichert wird, das dem Gerät zugewiesen ist, für welches die Wartungsdatei bestimmt ist und welches die Wartungsdatei herunterlädt.
13. Verfahren nach Klausel 11 oder 12, wobei das Gerät ein Downloadprogramm (256) beinhaltet, wobei das Downloadprogramm konfiguriert ist zum:
   - Zugriff auf den serverseitigen Speicherbereich, der dem Gerät in dem Geräteregister des Dateimanagementservers zugewiesen ist, um zu prüfen, ob in diesem Speicherbereich eine Wartungsdatei (260, 708, 710, 712, 714) gespeichert ist, wobei die Wartungsdatei ein oder mehrere der folgenden Elemente beinhaltet: Geräteprogrammbefehle zur Steuerung der zumindest einen Hardwarefunktion; ein Softwareupdate des Geräteprogramms, ein Firmwareupdate des Geräts; kryptographische Schlüssel; Konfigurationsparameterwerte für das Gerät; Konfigurationsparameterwerte für das Steuerprogramm;
   - Falls die Prüfung ergibt, dass in dem serverseitigen Speicherbereich eine Wartungsdatei gespeichert ist, die noch nicht heruntergeladen wurde, automatisches Herunterladen der Wartungsdatei durch das Downloadprogramm; und
   - Speichern, Verarbeiten und/oder Ausführen der heruntergeladenen Wartungsdatei durch das Downloadprogramm.
14. Verfahren nach Klausel 13, wobei das Downloadprogramm dazu konfiguriert ist, den Zugriff auf den serverseitigen Speicherbereich automatisch und regelmäßig und/oder in Antwort auf eine Interaktion eines Nutzers mit dem Gerät durchzuführen, um eine Wartungsdatei (260, 708, 710, 712, 714) herunterzuladen.
15. Verfahren nach Klausel 13 oder 14, wobei das Downloadprogramm dazu konfiguriert ist, den Zugriff auf den serverseitigen Speicherbereich automatisch und regelmäßig mit einer Frequenz von mindestens einmal pro 10 Sekunden, vorzugsweise von mindestens einmal pro Sekunde durchzuführen, um ein oder mehrere neue Wartungsdateien herunterzuladen, die das Gerät noch nicht heruntergeladen hat, wobei die ein oder mehreren neue Wartungsdateien insbesondere Geräteprogrammbefehle beinhalten.
16. Verfahren nach einer der Klauseln 11-15, ferner umfassend:
   - Bereitstellung eines Fernwartprogramms (716) mit einer GUI durch ein Nutzer-Computersystem des Fernwartungs-Nutzers, wobei die GUI dem Fernwartungsnutzer die Spezifikation einer oder mehrerer Wartungsdateien mittels der GUI ermöglicht;
   - Authentifizierung des Fernwartungsnutzers gegenüber dem Dateimanagementserver, um zumindest Lesezugriff auf Statusdateien zu erhalten, die von dem Geräteprogramm des Geräts erzeugt werden, und um ein oder mehrere Wartungsdateien in den serverseitigen Speicherbereich, der diesem Gerät zugewiesen ist, speichern zu können;
   - Nur nach einer erfolgreichen Authentifizierung des Fernwartungsnutzers gegenüber dem Dateimanagementserver, Speichern der einen oder mehreren Wartungsdateien in dem serverseitigen Speicherbereich des Geräts durch das Fernwartungsprogramm;
   - Automatischer und regelmäßiger Zugriff auf und Analyse von jeder neu von dem Geräteprogramm erzeugten Statusdatei durch das Fernwartprogramm;
   - Automatische oder semiautomatische Erzeugung einer weiteren Wartungsdatei durch das Fernwartprogramm in Abhängigkeit vom Ergebnis der Analyse; und
   - Automatische Speicherung der weiteren Wartungsdatei in dem serverseitigen Speicherbereich des Geräts.
17. Verfahren nach einer der Klauseln 11-16, ferner umfassend:
   - Authentifizierung des Fernwartungsnutzers gegenüber dem Dateimanagementserver im Hinblick auf denjenigen serverseitigen Speicherbereich, der der Geräte-ID des Gerätes in dem Geräteregister zugeordnet ist;
   - nur im Falle einer erfolgreichen Authentifizierung des Nutzers, Speicherung von ein oder mehreren Wartungsdateien in diesem serverseitigen Speicherbereich.
18. Computerlesbares Speichermedium (216) mit computerlesbaren Instruktionen (218, 256, 254) welche bei Ausführung durch einen Prozessor (212) den Prozessor zur Durchführung eines Verfahrens veranlassen, wobei die Instruktionen die Instruktionen eines Geräteprogramms (218), und eines Uploadprogramms (254) umfassen, wobei das Verfahren beinhaltet:
   - Erzeugung (106), durch das Geräteprogramm, einer Statusdatei (220), die Informationen bezüglich des Status des Gerätes beinhaltet;
   - Durchführung (108) eines Fehlerkorrekturverfahrens (222) zur Generierung von Dateifragmenten (226-238) aus der Statusdatei durch das Uploadprogramm, wobei zumindest eines der Dateifragmente Fehlerkorrekturbits beinhaltet;
   - Senden (110), durch das Uploadprogramm, einer Berechtigungsanfrage zum Speichern der Dateifragmente in mehreren Speicherdiensten (240-252) an einen Dateimanagementserver über ein Netzwerk (208);
   - In Antwort auf das Senden der Berechtigungsanfrage, Empfang der in Antwort auf die Anfrage von den Speicherdiensten erhaltenen Berechtigungstoken von dem Dateimanagementserver durch das Uploadprogramm;
   - Speicherung (116) der generierten Dateifragmente in den Speichermedien der mehreren Speicherdienste über das Netzwerk mittels Berechtigungsnachweis durch die Berechtigungstoken unter Umgehung des Dateimanagementservers durch das Uploadprogramm;
   - Speicherung (118) von Metadaten (840), die die Rekonstruktion der Statusdatei (220) aus den gespeicherten Dateifragmenten erlauben, durch das Uploadprogramm so, dass die Metadaten gegen einen Zugriff der Speicherdienste gesichert sind, und dass der Dateimanagementserver die Metadaten zur Kontrolle des Zugriffs eines Fernwartungs-Nutzers auf die Daten der Statusdatei verwenden kann.
19. Computerlesbares Speichermedium nach Klausel 18, wobei die Instruktionen die Instruktionen eines Downloadprogramms (256) umfassen, wobei das Verfahren beinhaltet:
   - Authentifikation des Geräts gegenüber dem Dateimanagementserver durch das Downloadprogramm;
   - Nach erfolgreicher Authentifikation, automatisches Herunterladen einer Wartungsdatei von dem Dateimanagementserver durch das Downloadprogramm; und
   - Automatische Verarbeitung und/oder Ausführung der heruntergeladenen Wartungsdatei durch das Downloadprogramm.
20. Ein Gerät (210, 502, 504) umfassend eine Schnittstelle (206.2) zur operativen Kopplung des Geräts an mehrere Speicherdienste (240-252) und an einen Dateimanagementserver (204) über ein Netzwerk (208), wobei das Gerät einen als Gerätespeicher (216) bezeichneten Datenspeicher mit einem Geräteprogramm (218) zur Steuerung zumindest einer Hardwarefunktion (214) des Gerätes und ein Uploadprogramm (254) umfasst, wobei das Geräteprogramm und das Uploadprogramm zur Ausführung folgenden Verfahrens konfiguriert sind:
   - Erzeugung (106), durch das Geräteprogramm, eine Statusdatei (220), die Informationen bezüglich des Status des Gerätes beinhaltet,
   - Durchführung (108) eines Fehlerkorrekturverfahrens zur Generierung von Dateifragmenten aus der Statusdatei durch das Uploadprogramm, wobei zumindest eines der Dateifragmente Fehlerkorrekturbits beinhaltet;
   - Senden (110), durch das Uploadprogramm, einer Berechtigungsanfrage zum Speichern der Dateifragmente in den mehreren Speicherdiensten an den Dateimanagementserver über das Netzwerk;
   - In Antwort auf das Senden der Berechtigungsanfrage, Empfang von Berechtigungstoken, die von jedem der mehreren Speicherdienste in Antwort auf eine Anforderung durch den Dateimanagementserver erzeugt und an den Dateimanagementserver gesendet wurden, durch das Uploadprogramm von dem Dateimanagementserver; und
   - Speicherung (116) der generierten Dateifragmente in den Speichermedien (SM1-SM6) der mehreren Speicherdienste über das Netzwerk mittels Berechtigungsnachweis durch die Berechtigungstoken unter Umgehung des Dateimanagementservers durch das Uploadprogramm;
   - Optional Speicherung von Metadaten, die die Rekonstruktion der Statusdatei aus den gespeicherten Dateifragmenten erlauben, durch das Uploadprogramm so, dass die Metadaten gegen einen Zugriff der Speicherdienste gesichert sind.
21. Ein Gerät nach Klausel 20, wobei das Gerät ausgewählt ist aus einer Gruppe umfassend:
   - ein medizinisches Gerät, insbesondere ein bildgebendes Gerät, insbesondere ein MRT Gerät;
   - eine Maschine die zur Herstellung eines Erzeugnisses verwendet wird;
   - eine chemische Syntheseeinheit;
   - eine chemische oder medizinische oder physikalische Analyseeinheit;
   - ein Fahrzeug oder Fahrzeugkomponente;
   - eine Gebäudekomponente;
   - eine Transportkomponente;
   - eine Belüftungskomponente;
   - eine Klimatisierungskomponente;
   - ein Bioreaktor;
   - ein Gerät zur Gewinnung, Umwandlung, Weiterleitung oder Speicherung elektrischer oder chemischer Energie.
Klausel 22. Ein Dateimanagementserver (204) umfassend einen Prozessor (602), ein Geräteregister (650) mit Geräte-IDs einer Vielzahl von bei dem Dateimanagementserver registrierten Geräten (210, 502, 504), eine Netzwerkschnittstelle zur operativen Kopplung des Dateimanagementservers mit zumindest einem Nutzer-Computersystem (203) eines Fernwartungsnutzers (202) und mit zumindest einem der Geräte und mit einer Vielzahl von Speicherdiensten (240-252) über ein Netzwerk (208), wobei der Dateimanagementserver eine Dateimanagement-Applikation (604) umfasst, wobei die Dateimanagement-Applikation zur Ausführung folgenden Verfahrens zur Speicherung einer Statusdatei (220) konfiguriert ist:
   - Empfang einer Berechtigungsanfrage von dem zumindest einen Gerät zum Speichern von Dateifragmenten (226-238) einer von dem Gerät erstellten Statusdatei (224) über das Netzwerk in mehreren der Speicherdienste, wobei der Dateimanagementserver keinen Speicherdienst bereitstellt; und
   - In Antwort auf den Empfang der Berechtigungsanfrage, Anforderung (112) eines Berechtigungstokens von jedem der mehreren Speicherdienste und Weiterleitung (114) der in Antwort auf die Anforderung erhaltenen Berechtigungstoken an das Gerät; und
   - Verwendung von Metadaten, die die Rekonstruktion der Statusdatei aus den gespeicherten Dateifragmenten erlauben, zur Kontrolle des Zugriffs des Fernwartungs-Nutzers auf die Daten der Statusdatei, wobei die Metadaten gegen einen Zugriff der Speicherdienste gesichert sind.

Die Ansprüche, die den Schutzbereich definieren, folgen nach dem Ende der Beschreibungsseite 90.

### Bezugszeichenliste

- 102-120: Schritte
- 200: System
- 202: Fernwartungsnutzer
- 203: Nutzer-Computersystem
- 204: Dateimanagementserver
- 206: Schnittstelle Dateimanagementserver-Uploadprogramm
- 208: Netzwerk
- 210: Gerät
- 212: Prozessor(en)
- 214: Hardwarefunktion(en)
- 216: Speichermedium
- 218: Geräteprogramm
- 220: Statusdatei
- 222: Fehlerkorrekturverfahren
- 224: Statusdatei
- 226-238: Dateifragmente
- 240-252: Speicherdienste
- 254: Uploadprogramm
- 256: Downloadprogramm
- 260: Wartungsdatei(en)
- 302: Modul zur Schlüsselverwaltung
- 303: Upload-Trigger
- 304: Modul zur Erzeugung von Dateifragmenten
- 306: Modul zur Erzeugung von Metadaten
- 308: öffentlicher Schlüssel eines Fernwartungsnutzers 202
- 402: Initialisierungsmodul
- 403: Download-Trigger
- 404: Modul zur Verarbeitung von Wartungsdateien
- 406: öffentlicher Schlüssel vom Gerät 210
- 408: privater Schlüssel vom Gerät 210
- 500: System
- 502: Gerät
- 504: Gerät
- 506: öffentliche Schlüssel von Gerät 502
- 508: privater Schlüssel von Gerät 502
- 510: öffentlicher Schlüssel von Gerät 504
- 512: privater Schlüssel von Gerät 504
- 514: Nutzerprofil von Fernwartungs-Nutzer 202
- 516: Geräteprofil von Gerät 210
- 606: Prozessor
- 603: Speichermedium
- 604: Dateimanagement-Applikation
- 606: Geräteprofile
- 608: Geräteprofile
- 610: Geräte Profil
- 612: Konfiguration
- 614: Konfiguration
- 616: Anforderungen
- 618: Anforderungen
- 620: Anforderungen hinsichtlich geographischer Lage
- 622: Anforderungen hinsichtlich geographischer Lage
- 624: Mindestvertrauensniveau
- 626: Mindestvertrauensniveau
- 632: Metadaten
- 634: Metadaten
- 636: Katalog verfügbaren Speicherdienste
- 638: Modul zur Verwaltung der Zugriffsrechte
- 640: Modul zur Verwaltung von Berechtigungstoken
- 642: Modul zur Verwaltung von Nutzer und Geräteregister
- 644: Modul zur Verarbeitung von Metadaten
- 646: Modul zur Erstellung von Verteilungsplänen
- 648: Webportal mit Sicht auf Dateien
- 650: Geräteregister
- 700: Zuordnung von Speicherbereichen an Geräte
- 701: Speichermedium
- 702: Speicherbereich für Gerät 210
- 704: Speicherbereich für Gerät 502
- 706: Speicherbereich für Gerät 504
- 708: Wartungsdatei mit Upgrade
- 710: Wartungsdatei mit Patch
- 712: Wartungsdatei mit Steuerbefehlen
- 714: Wartungsdatei mit Steuerbefehlen
- 716: Fernwartungsprogramm
- 800-838: Schritte
- 840: Metadaten
- 841: Signaturprüfschlüssel
- 902-932: Schritte
- 941: Signaturprüfschlüssel

## Patentansprüche

1. Verfahren zur Fernwartung eines Gerätes (210, 502, 504), umfassend
- Bereitstellung (102) eines Dateimanagementservers (204);
- Bereitstellung (104) mindestens des Gerätes (210, 502, 504), wobei das Gerät beinhaltet: ein Geräteprogramm (218) zur Steuerung zumindest einer Hardwarefunktion (214) des Gerätes, und ein Uploadprogramm (254);
- Erzeugung (106), durch das Geräteprogramm, einer Statusdatei (220), die Informationen bezüglich des Status des Gerätes beinhaltet;
- Durchführung (108) eines Fehlerkorrekturverfahrens (222) zur Generierung von Dateifragmenten (226-238) aus der Statusdatei durch das Uploadprogramm, wobei zumindest eines der Dateifragmente Fehlerkorrekturbits beinhaltet;
- Senden (110), durch das Uploadprogramm, einer Berechtigungsanfrage zum Speichern der Dateifragmente in mehreren Speicherdiensten (240-252) an den Dateimanagementserver über ein Netzwerk (208);
- In Antwort auf den Empfang der Berechtigungsanfrage, Anforderung (112) eines Berechtigungstokens durch den Dateimanagementserver von jedem der mehreren Speicherdienste und Weiterleitung (114) der in Antwort auf die Anforderung von den Speicherdiensten erhaltenen Berechtigungstoken durch den Dateimanagementserver an das Uploadprogramm;
- Speicherung (116) der generierten Dateifragmente in den Speichermedien der mehreren Speicherdienste über das Netzwerk mittels Berechtigungsnachweis durch die Berechtigungstoken unter Umgehung des Dateimanagementservers durch das Uploadprogramm;
- Speicherung (118) von Metadaten (840), die die Rekonstruktion der Statusdatei (220) aus den gespeicherten Dateifragmenten erlauben, durch das Uploadprogramm und/oder durch das Dateimanagementserver so, dass die Metadaten gegen einen Zugriff der Speicherdienste gesichert sind; und
- Zugriff eines Fernwartungs-Nutzers auf die Daten der Statusdatei unter Verwendung (120) der Metadaten; und
- Fernwartung.

2. Verfahren nach Anspruch 1,
- wobei auf dem Gerät und/oder in einer IT-Infrastruktur innerhalb welcher das Gerät betrieben wird, eine Firewall (258) installiert ist, die einen Netzwerkzugriff des Geräts beschränkt auf den Datenaustausch mit Kommunikationspartnern, die auf einer Whitelist der Firewall spezifiziert sind,
- wobei die Kommunikationspartner zumindest den Dateimanagementserver und die Speicherdienste, nicht jedoch eine Kennung des Nutzer-Computersystems (203) des Fernwartungsnutzers beinhalten.

3. Verfahren nach einem der vorigen Ansprüche, wobei das Gerät einen nichtvolatilen Datenspeicher (216), der im Folgenden als "Geräte-Datenspeicher" bezeichnet wird, umfasst,
wobei das Geräteprogramm konfiguriert ist zur automatischen Speicherung jeder durch das Geräteprogramm erzeugten Statusdatei in dem Geräte-Datenspeicher;
wobei das Uploadprogramm konfiguriert ist, in Antwort auf eine Speicherung einer neuen Statusdatei in dem Gerätespeicher, die folgenden Schritte gemäß Anspruch 1 für diese Statusdatei durchzuführen:
- die Durchführung (108) des Fehlerkorrekturverfahrens (222) zur Generierung von Dateifragmenten aus der Statusdatei;
- das Senden (110) der Berechtigungsanfrage;
- In Antwort auf den Empfang der Berechtigungstoken, die Speicherung (116) der generierten Dateifragmente in den Speichermedien.

4. Verfahren nach einem der vorigen Ansprüche,
- wobei in dem Dateimanagementserver Metadaten einer Vielzahl von verteilt in den Speicherdiensten gespeicherten Statusdateien von einer oder von mehreren Geräten (210, 502, 504) gespeichert sind;
- und/oder
- wobei das Verfahren eine Verwendung von Metadaten zur Rekonstruktion von Statusdateien eines oder mehrerer Geräte durch ein auf dem Dateimanagementserver gehostetes Webportal (648) zur Generierung einer netzwerkbasierten Sicht auf die verteilt gespeicherten Statusdateien umfasst; und wobei die netzwerkbasierte Sicht dazu konfiguriert ist die ursprünglichen Dateinamen aus den Metadaten dynamisch zu rekonstruieren und durch Auswahl einer der verteilt gespeicherten Statusdateien eine dynamische und automatische Rekonstruktion des Dateiinhalts der ausgewählten Statusdatei durch das mindestens eine Gerät oder durch einen berechtigten Fernwartungs-Nutzer zu initiieren, wobei die Speicherdienste, in welchen Fragmente der ausgewählten Statusdatei gespeichert sind, durch die Sicht verborgen werden;
- und/oder wobei die Metadaten beinhalten:
• Pfade zu allen Speicherorten in den Speichermedien der Speicherdienste, in welchen die Dateifragmente der Statusdatei gespeichert werden sollen oder bereits gespeichert wurden; und/oder
• einen symmetrischen Schlüssel, der eine Entschlüsselung des mit diesem symmetrischen Schlüssel verschlüsselten Dateifragments erlaubt; und/oder
• für jedes der Dateifragmente einen Hash-Wert des Dateifragments; und/oder
• den ursprünglichen Dateinamen der verteilt gespeicherten Statusdatei; und/oder
• Konfigurationsdaten des Fehlerkorrekturverfahrens; und/oder
- ein Mapping des ursprünglichen Dateinamens zu den Hashwerten und Pfaden der generierten Dateifragmente.

5. Verfahren nach einem der vorigen Ansprüche, ferner umfassend:
- Empfang einer Zugriffs-Anfrage des Fernwartungs-Nutzers zum Zugriff auf die verteilt gespeicherte Statusdatei, wobei die Zugriffs-Anfrage durch den Dateimanagementserver empfangen wird;
- Identifikation der Speicherdienste, die Dateifragmente der Datei gespeichert haben anhand der Metadaten der Statusdatei auf die Zugriff angefragt wird durch den Dateimanagementserver;
- Prüfung durch den Dateimanagementserver ob der Fernwartungs-Nutzer Zugriffsrechte für den Typ des angeforderten Zugriffs auf die Statusdatei besitzt;
- Authentifizierung des Fernwartungs-Nutzers gegenüber dem Dateimanagementserver;
- Nach erfolgreicher Authentifizierung und falls der Fernwartungs-Nutzer die Zugriffsrechte für die Statusdatei besitzt, Anforderung eines weiteren Berechtigungstokens durch den Dateimanagementserver von jedem der identifizierten Speicherdienste und Weiterleitung der in Antwort auf diese Anforderung erhaltenen weiteren Berechtigungstoken durch den Dateimanagementserver an das Nutzer-Computersystem des Fernwartungs-Nutzers, wobei die weiteren Berechtigungstoken dem Fernwartungsnutzer den angeforderten Zugriff auf die durch die Speicherdienste jeweils gespeicherten Dateifragmente in direkter Form ermöglichen.

6. Verfahren nach einem der vorigen Ansprüche, ferner mit:
- Verwaltung eines Nutzerprofils des Fernwartungsnutzers durch den Dateimanagementserver, wobei das Nutzerprofil einen öffentlichen Schlüssel (308) enthält, der zusammen mit einem privaten Entschlüsselungsschlüssel (310) ein asymmetrisches kryptographisches Schlüsselpaar bildet, wobei der eine private Entschlüsselungsschlüssel in dem Nutzer-Computersystem des Fernwartungs-Nutzers geschützt gespeichert ist und zur Entschlüsselung der Metadaten der Statusdatei oder zur Entschlüsselung von Teilen der Metadaten dient; und
- falls sich der Fernwartungs-Nutzer erfolgreich gegenüber dem Dateimanagementserver authentifiziert hat und falls der Fernwartungs-Nutzer die Zugriffsrechte für die Statusdatei besitzt, Senden des öffentlichen Schlüssels durch den Dateimanagementserver an das Uploadprogramm zur Verschlüsselung der Metadaten oder von Teilen der Metadaten durch das Uploadprogramm und Empfang und Weiterleitung der ganz oder teilweise mit dem gesendeten öffentlichen Schlüssel verschlüsselten Metadaten der Statusdatei durch den Dateimanagementserver an das Nutzer-Computersystem des Fernwartungs-Nutzers um dem Nutzer-Computersystem eine Entschlüsselung der weitergeleiteten Metadaten mit dem privaten Entschlüsselungsschlüssel und eine Rekonstruktion der Statusdatei aus den Dateifragmenten zu ermöglichen.

7. Verfahren nach einem der vorigen Ansprüche, ferner umfassend:
- Erzeugung einer Wartungsdatei (708, 710, 712) durch ein auf dem Nutzer-Computersystem instantisiertes Fernwartungsprogramm;
- Übertragung der Wartungsdatei an ein Server-Computersystem (204), insbesondere das Dateimanagementcomputersystem;
- Speicherung der Wartungsdatei durch das Server-Computersystem; und
- Herunterladen der Wartungsdatei von dem Server-Computersystem durch das Gerät.

8. Verfahren nach Anspruch 7, wobei der Server-Computer der Dateimanagementserver ist,
- wobei der Dateimanagementserver ein Geräteregister (650) beinhaltet, in welchem Geräte-IDs einer Vielzahl von bei dem Dateimanagementserver registrierten Geräten einschließlich des Geräts gespeichert sind;
- wobei der Dateimanagementserver in dem Geräteregister jedem der registrierten Geräte einen serverseitigen Speicherbereich (702, 704,706) eineindeutig zuweist (700),
- wobei die den Geräten zugewiesenen Speicherbereiche voneinander isoliert sind und zugriffsbeschränkt sind, sodass nur solche Fernwartungsnutzer Zugriff auf einen der serverseitigen Speicherbereiche haben, die sich erfolgreich im Hinblick auf das zu diesem serverseitigen Speicherbereich gehörende Gerät gegenüber dem Dateimanagementserver authentifiziert haben; und
- wobei die Speicherung der Wartungsdatei durch den Dateimanagementserver so erfolgt, dass die Wartungsdatei in dem Speicherbereich gespeichert wird, das dem Gerät zugewiesen ist, für welches die Wartungsdatei bestimmt ist und welches die Wartungsdatei herunterlädt.

9. Verfahren nach Anspruch 7 oder 8 wobei das Gerät ein Downloadprogramm (256) beinhaltet, wobei das Downloadprogramm konfiguriert ist zum:
- Zugriff auf den serverseitigen Speicherbereich, der dem Gerät in dem Geräteregister des Dateimanagementservers zugewiesen ist, um zu prüfen, ob in diesem Speicherbereich eine Wartungsdatei (260, 708, 710, 712, 714) gespeichert ist, wobei die Wartungsdatei ein oder mehrere der folgenden Elemente beinhaltet: Geräteprogrammbefehle zur Steuerung der zumindest einen Hardwarefunktion; ein Softwareupdate des Geräteprogramms, ein Firmwareupdate des Geräts; kryptographische Schlüssel; Konfigurationsparameterwerte für das Gerät; Konfigurationsparameterwerte für das Steuerprogramm;
- Falls die Prüfung ergibt, dass in dem serverseitigen Speicherbereich eine Wartungsdatei gespeichert ist, die noch nicht heruntergeladen wurde, automatisches Herunterladen der Wartungsdatei durch das Downloadprogramm; und
- Speichern, Verarbeiten und/oder Ausführen der heruntergeladenen Wartungsdatei durch das Downloadprogramm;
und/oder wobei das Verfahren umfasst:
- Authentifizierung des Fernwartungsnutzers gegenüber dem Dateimanagementserver im Hinblick auf denjenigen serverseitigen Speicherbereich, der der Geräte-ID des Gerätes in dem Geräteregister zugeordnet ist; und nur im Falle einer erfolgreichen Authentifizierung des Fernwartungsnutzers, Speicherung von ein oder mehreren Wartungsdateien in diesem serverseitigen Speicherbereich.

10. Verfahren nach Anspruch 9,
- wobei das Downloadprogramm dazu konfiguriert ist, den Zugriff auf den serverseitigen Speicherbereich automatisch und regelmäßig und/oder in Antwort auf eine Interaktion eines Nutzers mit dem Gerät durchzuführen, um eine Wartungsdatei (260, 708, 710, 712, 714) herunterzuladen und/oder
- wobei das Downloadprogramm dazu konfiguriert ist, den Zugriff auf den serverseitigen Speicherbereich automatisch und regelmäßig mit einer Frequenz von mindestens einmal pro 10 Sekunden, vorzugsweise von mindestens einmal pro Sekunde durchzuführen, um ein oder mehrere neue Wartungsdateien herunterzuladen, die das Gerät noch nicht heruntergeladen hat, wobei die ein oder mehreren neue Wartungsdateien insbesondere Geräteprogrammbefehle beinhalten.

11. Verfahren nach einem der Ansprüche 7-10, ferner umfassend:
- Bereitstellung eines Fernwartprogramms (716) mit einer GUI durch ein Nutzer-Computersystem des Fernwartungs-Nutzers, wobei die GUI dem Fernwartungsnutzer die Spezifikation einer oder mehrerer Wartungsdateien mittels der GUI ermöglicht;
- Authentifizierung des Fernwartungsnutzers gegenüber dem Dateimanagementserver, um zumindest Lesezugriff auf Statusdateien zu erhalten, die von dem Geräteprogramm des Geräts erzeugt werden, und um ein oder mehrere Wartungsdateien in den serverseitigen Speicherbereich, der diesem Gerät zugewiesen ist, speichern zu können;
- Nur nach einer erfolgreichen Authentifizierung des Fernwartungsnutzers gegenüber dem Dateimanagementserver, Speichern der einen oder mehreren Wartungsdateien in dem serverseitigen Speicherbereich des Geräts durch das Fernwartungsprogramm;
- Automatischer und regelmäßiger Zugriff auf und Analyse von jeder neu von dem Geräteprogramm erzeugten Statusdatei durch das Fernwartprogramm;
- Automatische oder semiautomatische Erzeugung einer weiteren Wartungsdatei durch das Fernwartprogramm in Abhängigkeit vom Ergebnis der Analyse; und
- Automatische Speicherung der weiteren Wartungsdatei in dem serverseitigen Speicherbereich des Geräts.

12. Ein Dateimanagementserver (204) umfassend einen Prozessor (602), ein Geräteregister (650) mit Geräte-IDs einer Vielzahl von bei dem Dateimanagementserver registrierten Geräten (210, 502, 504), eine Netzwerkschnittstelle zur operativen Kopplung des Dateimanagementservers mit zumindest einem Nutzer-Computersystem (203) eines Fernwartungsnutzers (202) und mit zumindest einem der Geräte und mit einer Vielzahl von Speicherdiensten (240-252) über ein Netzwerk (208), wobei der Dateimanagementserver eine Dateimanagement-Applikation (604) umfasst, wobei die Dateimanagement-Applikation zur Ausführung der folgenden Operationen zur Speicherung einer Statusdatei (220) konfiguriert ist:
- Empfang einer Berechtigungsanfrage von dem zumindest einen Gerät zum Speichern von Dateifragmenten (226-238) einer von dem Gerät erstellten Statusdatei (224) über das Netzwerk in mehreren der Speicherdienste, wobei der Dateimanagementserver keinen Speicherdienst bereitstellt; und
- In Antwort auf den Empfang der Berechtigungsanfrage, Anforderung (112) eines Berechtigungstokens von jedem der mehreren Speicherdienste und Weiterleitung (114) der in Antwort auf die Anforderung erhaltenen Berechtigungstoken an das mindestens eine Gerät; und
- Speicherung von Metadaten, die die Rekonstruktion der Statusdatei aus den gespeicherten Dateifragmenten erlauben und in Antwort auf eine Anfrage des Fernwartungs-Nutzers Bereitstellen der Metadaten für diesen Fernwartungs-Nutzer zur Ermöglichung seines Zugriffs auf die Daten der Statusdatei.

## Claims

1. Method for remote maintenance of a device (210, 502, 504), comprising
- providing (102) a file management server (204);
- providing (104) at least the device (210, 502, 504), wherein the device includes: a device program (218) for controlling at least one hardware function (214) of the device, and an upload program (254);
- generating (106), by the device program, a status file (220) containing information regarding the status of the device;
- performing (108) an error correction process (222) to generate file fragments (226-238) from the status file by the upload program, wherein at least one of the file fragments includes error correction bits;
- sending (110), by the upload program, an authorisation request for storing the file fragments in a plurality of storage services (240-252) to the file management server via a network (208);
- in response to receiving the authorisation request, requesting (112) an authorisation token from each of the multiple storage services by the file management server and forwarding (114) the authorisation tokens received from the storage services in response to the request by the file management server to the upload program;
- storing (116) the generated file fragments in the storage media of the plurality of storage services via the network by means of authentication by the authorisation tokens, bypassing the file management server by the upload program;
- storing (118) metadata (840) that allows the status file (220) to be reconstructed from the stored file fragments by the upload program and/or by the file management server in such a way that the metadata is protected against access by the storage services; and
- access by a remote maintenance user to the data of the status file using (120) the metadata; and
- remote maintenance.

2. Method according to claim 1,
- wherein a firewall (258) is installed on the device and/or in an IT infrastructure within which the device is operated, which restricts network access of the device to data exchange with communication partners specified on a whitelist of the firewall,
- wherein the communication partners include at least the file management server and the storage services, but not an identifier of the user computer system (203) of the remote maintenance user.

3. Method according to one of the preceding claims, wherein the device comprises a non-volatile data storage (216), hereinafter referred to as "device data storage",
wherein the device program is configured to automatically store each status file generated by the device program in the device data storage;
wherein the upload program is configured, in response to a new status file being stored in the device memory, to perform the following steps according to claim 1 for that status file:
- performing (108) the error correction method (222) to generate file fragments from the status file;
- sending (110) the authorisation request;
- In response to receiving the authorisation tokens, storing (116) the generated file fragments in the storage media.

4. Method according to one of the preceding claims,
- wherein metadata of a plurality of status files distributedly stored in the storage services are stored in the file management server by one or more devices (210, 502, 504);
- and/or
- wherein the method comprises using metadata to reconstruct status files of one or more devices through a web portal (648) hosted on the file management server to generate a network-based view of the distributedly stored status files; and wherein the network-based view is configured to dynamically reconstruct the original file names from the metadata and, by selecting one of the distributed status files, to initiate a dynamic and automatic reconstruction of the file content of the selected status file by the at least one device or by an authorised remote maintenance user, wherein the storage services in which fragments of the selected status file are stored are hidden by the view;
- and/or wherein the metadata includes:
• paths to all storage locations in the storage media of the storage services in which the file fragments of the status file are to be stored or have already been stored; and/or
• a symmetric key that allows decryption of the file fragment encrypted with this symmetric key; and/or
• for each of the file fragments, a hash value of the file fragment; and/or
• the original file name of the distributed status file; and/or
• configuration data of the error correction method; and/or
- a mapping of the original file name to the hash values and paths of the generated file fragments.

5. Method according to one of the preceding claims, further comprising:
- receiving an access request from the remote maintenance user to access the distributed status file, wherein the access request is received by the file management server;
- identifying the storage services that have stored file fragments of the file on the basis of the metadata of the status file for which access is requested by the file management server;
- checking by the file management server whether the remote maintenance user has access rights for the type of access requested to the status file;
- Authentication of the remote maintenance user to the file management server;
- After successful authentication and if the remote maintenance user has access rights for the status file, request of a further authorisation token by the file management server from each of the identified storage services and forwarding of the further authorisation tokens received in response to this request by the file management server to the user computer system of the remote maintenance user, wherein the further authorisation tokens enable the remote maintenance user to directly access the file fragments stored by the storage services.

6. Method according to one of the preceding claims, further comprising:
- management of a user profile of the remote maintenance user by the file management server, wherein the user profile contains a public key (308) which, together with a private decryption key (310), forms an asymmetric cryptographic key pair, wherein the private decryption key is stored in a protected manner in the user computer system of the remote maintenance user and serves to decrypt the metadata of the status file or to decrypt parts of the metadata; and
- if the remote maintenance user has successfully authenticated themselves to the file management server and if the remote maintenance user has access rights for the status file, the file management server sends the public key to the upload program for encryption of the metadata or parts of the metadata by the upload program, and the file management server receives and forwards the metadata of the status file, encrypted in whole or in part with the sent public key, to the user computer system of the remote maintenance user in order to enable the user computer system to decrypt the forwarded metadata with the private decryption key and to reconstruct the status file from the file fragments.

7. Method according to one of the preceding claims, further comprising:
- generating a maintenance file (708, 710, 712) by a remote maintenance program instantiated on the user computer system;
- transmitting the maintenance file to a server computer system (204), in particular the file management computer system;
- storage of the maintenance file by the server computer system; and
- downloading the maintenance file from the server computer system by the device.

8. Method according to claim 7, wherein the server computer is the file management server,
- wherein the file management server includes a device register (650) in which device IDs of a plurality of devices registered with the file management server, including the device, are stored;
- wherein the file management server uniquely assigns (700) a server-side storage area (702, 704, 706) to each of the registered devices in the device register,
- wherein the storage areas assigned to the devices are isolated from each other and access-restricted so that only those remote maintenance users who have successfully authenticated themselves to the file management server with regard to the device associated with that server-side storage area have access to one of the server-side storage areas; and
- wherein the maintenance file is stored by the file management server in such a way that the maintenance file is stored in the memory area assigned to the device for which the maintenance file is intended and which downloads the maintenance file.

9. Method according to claim 7 or 8, wherein the device includes a download program (256), wherein the download program is configured to:
- Accessing the server-side storage area assigned to the device in the device register of the file management server to check whether a maintenance file (260, 708, 710, 712, 714) is stored in this storage area, wherein the maintenance file contains one or more of the following elements: device program commands for controlling the at least one hardware function; a software update for the device program, a firmware update for the device; cryptographic keys; configuration parameter values for the device; configuration parameter values for the control program;
- if the check reveals that a maintenance file that has not yet been downloaded is stored in the server-side storage area, automatic downloading of the maintenance file by the download program; and
- storing, processing and/or executing the downloaded maintenance file by the download program;
and/or wherein the method comprises:
- authenticating the remote maintenance user to the file management server with regard to the server-side storage area assigned to the device ID of the device in the device register; and only in the event of successful authentication of the remote maintenance user, storing one or more maintenance files in this server-side storage area.

10. Method according to claim 9,
- wherein the download program is configured to access the server-side storage area automatically and regularly and/or in response to a user interaction with the device in order to download a maintenance file (260, 708, 710, 712, 714) and/or
- wherein the download program is configured to access the server-side storage area automatically and regularly at a frequency of at least once every 10 seconds, preferably at least once per second, in order to download one or more new maintenance files that the device has not yet downloaded, wherein the one or more new maintenance files contain, in particular, device program commands.

11. Method according to one of claims 7-10, further comprising:
- providing a remote maintenance program (716) with a GUI through a user computer system of the remote maintenance user, wherein the GUI enables the remote maintenance user to specify one or more maintenance files using the GUI;
- authenticating the remote maintenance user to the file management server in order to obtain at least read access to status files generated by the device program of the device and to be able to store one or more maintenance files in the server-side storage area assigned to this device;
- Only after successful authentication of the remote maintenance user to the file management server, storage of the one or more maintenance files in the server-side storage area of the device by the remote maintenance program;
- Automatic and regular access to and analysis of each new status file generated by the device program by the remote maintenance program;
- Automatic or semi-automatic generation of a further maintenance file by the remote maintenance program depending on the result of the analysis; and
- Automatic storage of the additional maintenance file in the server-side storage area of the device.

12. A file management server (204) comprising a processor (602), a device register (650) with device IDs of a plurality of devices (210, 502, 504) registered with the file management server, a network interface for the operational coupling of the file management server with at least one user computer system (203) of a remote maintenance user (202) and with at least one of the devices, and with a plurality of storage services (240-252) via a network (208), wherein the file management server comprises a file management application (604), wherein the file management application is configured to perform the following operations for storing a status file (220):
- receiving an authorisation request from the at least one device for storing file fragments (226-238) of a status file (224) created by the device over the network in a plurality of the storage services, wherein the file management server does not provide a storage service; and
- in response to receiving the authorisation request, requesting (112) an authorisation token from each of the plurality of storage services and forwarding (114) the authorisation tokens received in response to the request to the at least one device; and
- storing metadata that allows the status file to be reconstructed from the stored file fragments and, in response to a request from the remote maintenance user, providing the metadata to that remote maintenance user to enable them to access the data in the status file.

## Revendications

1. Procédé de maintenance à distance d'un appareil (210, 502, 504), comprenant :
• la mise à disposition (102) d'un serveur de gestion de fichiers (204) ;
• la mise à disposition (104) d'au moins l'appareil (210, 502, 504), l'appareil comprenant : un programme d'appareil (218) destiné à commander au moins une fonction matérielle (214) de l'appareil, et un programme de téléversement (254) ;
• la génération (106), par le programme d'appareil, d'un fichier d'état (220) comprenant des informations relatives à l'état de l'appareil ;
• l'exécution (108) d'un procédé de correction d'erreurs (222) afin de générer des fragments de fichier (226-238) à partir du fichier d'état par le programme de téléversement, au moins l'un des fragments de fichier comprenant des bits de correction d'erreurs ;
• l'envoi (110), par le programme de téléversement, d'une demande d'autorisation destinée au stockage des fragments de fichier dans plusieurs services de stockage (240-252) au serveur de gestion de fichiers via un réseau (208) ;
• en réponse à la réception de la demande d'autorisation, la demande (112), par le serveur de gestion de fichiers, d'un jeton d'autorisation auprès de chacun desdits services de stockage, et la transmission (114), par le serveur de gestion de fichiers, au programme de téléversement, des jetons d'autorisation reçus en réponse à ladite demande des services de stockage ;
• le stockage (116) des fragments de fichier générés dans des supports de stockage desdits services de stockage via le réseau, au moyen d'une preuve d'autorisation fournie par les jetons d'autorisation, en contournant le serveur de gestion de fichiers, par le programme de téléversement ;
• le stockage (118) de métadonnées (840) permettant la reconstruction du fichier d'état (220) à partir des fragments de fichier stockés, par le programme de téléversement et/ou par le serveur de gestion de fichiers, de sorte que les métadonnées soient protégées contre tout accès par les services de stockage ; et
• l'accès, par un utilisateur de maintenance à distance, aux données du fichier d'état au moyen (120) des métadonnées ; et
• la maintenance à distance.

2. Procédé selon la revendication 1, dans lequel :
• un pare-feu (258) est installé sur l'appareil et/ou dans une infrastructure informatique au sein de laquelle l'appareil est exploité, le pare-feu limitant l'accès réseau de l'appareil à l'échange de données avec des partenaires de communication spécifiés sur une liste blanche du pare-feu,
• les partenaires de communication comprenant au moins le serveur de gestion de fichiers et les services de stockage, mais ne comprenant pas un identifiant du système informatique utilisateur (203) de l'utilisateur de maintenance à distance.

3. Procédé selon l'une des revendications précédentes, dans lequel l'appareil comprend une mémoire de données non volatile (216), ci-après dénommée « mémoire de données de l'appareil »,
dans lequel le programme d'appareil est configuré pour stocker automatiquement chaque fichier d'état généré par le programme d'appareil dans la mémoire de données de l'appareil,
et dans lequel le programme de téléversement est configuré pour, en réponse au stockage d'un nouveau fichier d'état dans la mémoire de données de l'appareil, exécuter les étapes suivantes selon la revendication 1 pour ledit fichier d'état :
• l'exécution (108) du procédé de correction d'erreurs (222) pour générer des fragments de fichier à partir du fichier d'état ;
• l'envoi (110) de la demande d'autorisation ;
• en réponse à la réception des jetons d'autorisation, le stockage (116) des fragments de fichier générés dans les supports de stockage.

4. Procédé selon l'une des revendications précédentes,
• dans lequel des métadonnées d'une pluralité de fichiers d'état stockés de manière distribuée dans les services de stockage sont stockées dans le serveur de gestion de fichiers, provenant d'un ou de plusieurs appareils (210, 502, 504) ;
• et/ou
• dans lequel le procédé comprend une utilisation de métadonnées afin de reconstruire des fichiers d'état d'un ou de plusieurs appareils via un portail web (648) hébergé sur le serveur de gestion de fichiers afin de générer une vue réseau des fichiers d'état stockés de manière distribuée, la vue réseau étant configurée pour reconstruire dynamiquement des noms de fichier d'origine à partir des métadonnées et, par sélection de l'un des fichiers d'état stockés de manière distribuée, initier une reconstruction dynamique et automatique du contenu de fichier du fichier d'état sélectionné par au moins un appareil ou par un utilisateur de maintenance à distance autorisé, les services de stockage dans lesquels sont stockés des fragments du fichier d'état sélectionné étant masqués par ladite ue ;
• et/ou dans lequel les métadonnées comprennent :
∘ des chemins d'accès à tous les emplacements de stockage dans les supports de stockage des services de stockage dans lesquels les fragments de fichier du fichier d'état doivent être stockés ou ont déjà été stockés ; et/ou
∘ une clé symétrique permettant un déchiffrement du fragment de fichier chiffré au moyen de ladite clé symétrique ; et/ou
∘ pour chacun des fragments de fichier, une valeur de hachage du fragment de fichier ; et/ou
∘ le nom de fichier d'origine du fichier d'état stocké de manière distribuée ; et/ou
∘ des données de configuration du procédé de correction d'erreurs ; et/ou
• un mappage du nom de fichier d'origine vers les valeurs de hachage et les chemins d'accès des fragments de fichier générés.

5. Procédé selon l'une des revendications précédentes, comprenant en outre :
• la réception, par le serveur de gestion de fichiers, d'une demande d'accès d'un utilisateur de maintenance à distance afin d'accéder au fichier d'état stocké de manière distribuée ;
• l'identification, par le serveur de gestion de fichiers, des services de stockage ayant stocké des fragments du fichier sur la base des métadonnées du fichier d'état pour lequel l'accès est demandé ;
• la vérification, par le serveur de gestion de fichiers, du fait que l'utilisateur de maintenance à distance dispose de droits d'accès pour le type d'accès demandé au fichier d'état ;
• l'authentification de l'utilisateur de maintenance à distance auprès du serveur de gestion de fichiers ;
• après authentification réussie et si l'utilisateur de maintenance à distance dispose des droits d'accès pour le fichier d'état, la demande, par le serveur de gestion de fichiers, d'un autre jeton d'autorisation auprès de chacun des services de stockage identifiés, et la transmission, par le serveur de gestion de fichiers, desdits autres jetons d'autorisation au système informatique utilisateur de l'utilisateur de maintenance à distance, lesdits autres jetons d'autorisation permettant à l'utilisateur de maintenance à distance d'accéder directement aux fragments de fichier stockés respectivement par les services de stockage.

6. Procédé selon l'une des revendications précédentes, comprenant en outre :
• la gestion, par le serveur de gestion de fichiers, d'un profil utilisateur de l'utilisateur de maintenance à distance, le profil utilisateur contenant une clé publique (308) qui, avec une clé de déchiffrement privée (310), forme une paire de clés cryptographiques asymétriques, la clé de déchiffrement privée étant stockée de manière sécurisée dans le système informatique utilisateur de l'utilisateur de maintenance à distance et servant à déchiffrer les métadonnées du fichier d'état ou à déchiffrer des parties des métadonnées ; et
• si l'utilisateur de maintenance à distance s'est authentifié avec succès auprès du serveur de gestion de fichiers et si l'utilisateur de maintenance à distance dispose des droits d'accès au fichier d'état, l'envoi de la clé publique par le serveur de gestion de fichiers au programme de téléversement afin de chiffrer les métadonnées ou des parties des métadonnées par le programme de téléversement, et la réception et la transmission, par le serveur de gestion de fichiers, au système informatique utilisateur de l'utilisateur de maintenance à distance, des métadonnées du fichier d'état chiffrées en totalité ou en partie au moyen de ladite clé publique, afin de permettre audit système informatique utilisateur de déchiffrer les métadonnées transmises au moyen de la clé de déchiffrement privée et de reconstruire le fichier d'état à partir des fragments de fichier.

7. Procédé selon l'une des revendications précédentes, comprenant en outre :
• la génération d'un fichier de maintenance (708, 710, 712) par un programme de maintenance à distance instancié sur le système informatique utilisateur ;
• la transmission du fichier de maintenance à un système informatique serveur (204), en particulier au système informatique serveur de gestion de fichiers ;
• le stockage du fichier de maintenance par le système informatique serveur ; et
• le téléchargement du fichier de maintenance depuis le système informatique serveur par l'appareil.

8. Procédé selon la revendication 7, dans lequel le système informatique serveur est le serveur de gestion de fichiers, et dans lequel:
• le serveur de gestion de fichiers comprend un registre d'appareils (650) dans lequel sont stockés des identifiants d'appareils d'une pluralité d'appareils enregistrés auprès du serveur de gestion de fichiers, y compris l'appareil ;
• le serveur de gestion de fichiers attribue de manière unique (700), dans le registre d'appareils, à chacun des appareils enregistrés une zone de mémoire côté serveur (702, 704, 706),
• les zones de mémoire attribuées aux appareils étant isolées les unes des autres et leur accès étant limité, de sorte que seuls des utilisateurs de maintenance à distance qui se sont authentifiés avec succès auprès du serveur de gestion de fichiers pour l'appareil associé à ladite zone de mémoire côté serveur ont accès à ladite zone de mémoire côté serveur ; et
• le stockage du fichier de maintenance par le serveur de gestion de fichiers est effectué de sorte que le fichier de maintenance soit stocké dans la zone de mémoire attribuée à l'appareil auquel le fichier de maintenance est destiné et qui télécharge le fichier de maintenance.

9. Procédé selon la revendication 7 ou 8, dans lequel l'appareil comprend un programme de téléchargement (256), le programme de téléchargement étant configuré pour:
• accéder à la zone de mémoire côté serveur attribuée à l'appareil dans le registre d'appareils du serveur de gestion de fichiers afin de vérifier si un fichier de maintenance (260, 708, 710, 712, 714) est stocké dans ladite zone de mémoire, le fichier de maintenance comprenant un ou plusieurs des éléments suivants : des commandes du programme d'appareil destinées à commander au moins une fonction matérielle ; une mise à jour logicielle du programme d'appareil ; une mise à jour du micrologiciel de l'appareil ; des clés cryptographiques ; des valeurs de paramètres de configuration pour l'appareil ; des valeurs de paramètres de configuration pour le programme de commande ;
• si la vérification indique qu'un fichier de maintenance qui n'a pas encore été téléchargé est stocké dans ladite zone de mémoire côté serveur, télécharger automatiquement le fichier de maintenance ; et
• stocker, traiter et/ou exécuter le fichier de maintenance téléchargé ;
et/ou dans lequel le procédé comprend :
• l'authentification de l'utilisateur de maintenance à distance auprès du serveur de gestion de fichiers en ce qui concerne la zone de mémoire côté serveur attribuée à l'identifiant d'appareil de l'appareil dans le registre d'appareils ; et
• uniquement en cas d'authentification réussie de l'utilisateur de maintenance à distance, le stockage d'un ou plusieurs fichiers de maintenance dans ladite zone de mémoire côté serveur.

10. Procédé selon la revendication 9, dans lequel :
• le programme de téléchargement est configuré pour accéder à la zone de mémoire côté serveur automatiquement et régulièrement et/ou en réponse à une interaction d'un utilisateur avec l'appareil afin de télécharger un fichier de maintenance (260, 708, 710, 712, 714) ; et/ou
• le programme de téléchargement est configuré pour accéder automatiquement et régulièrement à la zone de mémoire côté serveur à une fréquence d'au moins une fois toutes les 10 secondes, de préférence au moins une fois par seconde, afin de télécharger un ou plusieurs nouveaux fichiers de maintenance que l'appareil n'a pas encore téléchargés, le ou les nouveaux fichiers de maintenance comprenant en particulier des commandes du programme d'appareil.

11. Procédé selon l'une des revendications 7 à 10, comprenant en outre :
• la mise à disposition d'un programme de maintenance à distance (716) comportant une interface graphique utilisateur, par un système informatique utilisateur de l'utilisateur de maintenance à distance, l'interface graphique utilisateur permettant à l'utilisateur de maintenance à distance de spécifier un ou plusieurs fichiers de maintenance au moyen de ladite interface graphique utilisateur ;
• l'authentification de l'utilisateur de maintenance à distance auprès du serveur de gestion de fichiers afin d'obtenir au moins un accès en lecture aux fichiers d'état générés par le programme d'appareil et afin de pouvoir stocker un ou plusieurs fichiers de maintenance dans la zone de mémoire côté serveur attribuée audit appareil ;
• uniquement après authentification réussie de l'utilisateur de maintenance à distance auprès du serveur de gestion de fichiers, le stockage du ou des fichiers de maintenance dans la zone de mémoire côté serveur de l'appareil par le programme de maintenance à distance ;
• l'accès automatique et régulier à chaque nouveau fichier d'état généré par le programme d'appareil et l'analyse dudit fichier d'état par le programme de maintenance à distance ;
• la génération automatique ou semi-automatique d'un autre fichier de maintenance par le programme de maintenance à distance en fonction du résultat de l'analyse ; et
• le stockage automatique du fichier de maintenance supplémentaire dans la zone de mémoire côté serveur de l'appareil.

12. Serveur de gestion de fichiers (204) comprenant :
un processeur (602),
un registre d'appareils (650) contenant des identifiants d'appareils d'une pluralité d'appareils (210, 502, 504) enregistrés auprès du serveur de gestion de fichiers,
une interface réseau destinée à coupler de manière opérationnelle le serveur de gestion de fichiers à au moins un système informatique utilisateur (203) d'un utilisateur de maintenance à distance (202), à au moins l'un des appareils, et à une pluralité de services de stockage (240-252) via un réseau (208),
le serveur de gestion de fichiers comprenant une application de gestion de fichiers (604), l'application de gestion de fichiers étant configurée pour exécuter les opérations suivantes afin de stocker un fichier d'état (220) :
• recevoir une demande d'autorisation provenant dudit au moins un appareil afin de stocker, via le réseau, des fragments de fichier (226-238) d'un fichier d'état (224) créé par l'appareil dans plusieurs des services de stockage, le serveur de gestion de fichiers ne fournissant aucun service de stockage ; et
• en réponse à la réception de la demande d'autorisation, demander (112) un jeton d'autorisation auprès de chacun desdits services de stockage et transmettre (114) les jetons d'autorisation reçus en réponse à ladite demande audit au moins un appareil; et
• stocker des métadonnées permettant la reconstruction du fichier d'état à partir des fragments de fichier stockés et, en réponse à une demande de l'utilisateur de maintenance à distance, fournir les métadonnées audit utilisateur de maintenance à distance afin de permettre à celui-ci d'accéder aux données du fichier d'état.
